Europäisches Patentamt

(19) European Patent Office

Office européen des brevets

(11) EP 0 903 476 A1

(12) EUROPEAN PATENT APPLICATION
published in accordance with Art. 158(3) EPC

(43) Date of publication:
24.03.1999 Bulletin 1999/12

(21) Application number: 98911006.9

(22) Date of filing: 25.03.1998

(51) Int. Cl.⁶: **F01N 3/02**, F23G 7/06,
F23J 15/00, B01D 39/14,
B01D 53/94, B01J 23/847,
B01J 23/88, B01J 35/02,
B01J 35/06, B01J 37/02

(86) International application number:
PCT/JP98/01334

(87) International publication number:
WO 98/42963 (01.10.1998 Gazette 1998/39)

(84) Designated Contracting States:
BE DE GB

(30) Priority: 25.03.1997 JP 72376/97
31.03.1997 JP 81608/97
31.03.1997 JP 81664/97
31.03.1997 JP 81665/97
31.03.1997 JP 81666/97
31.03.1997 JP 81750/97
31.03.1997 JP 98372/97

(71) Applicants:
• Nippon Oil Co., Ltd.
Tokyo 105 (JP)
• Shinto Kogyo Co., Ltd.
Nagoya-shi, Aichi-ken 450-0002 (JP)

(72) Inventors:
• IMAMURA, Masato
Shinjuku-ku, Tokyo 169-0051 (JP)
• NAKAJIMA, Kiichi
Kokubunji-shi, Tokyo 185-0031 (JP)
• ZINDO, Katsuyoshi
Toyokawa-shi, Aichi-ken 442-0854 (JP)

• IIJIMA, Shinsuke
Gamagouri-shi,Aichi-ken 443-0102 (JP)
• ASAMI, Toshio
Toyokawa-shi,Aichi-ken 442-0068 (JP)
• KATO, Tatsuhiko
Shinshiro-shi,Aichi-ken 441-1316 (JP)
• USHIROEBISU, Koichi
Okazaki-shi,Aichi-ken 444-0823 (JP)
• AIZAWA, Yukio
Kawasaki-shi,Kanagawa-ken 211-0031 (JP)
• SEKIDO, Yasuo
Yokohama-shi,Kanagawa-ken 235-0045 (JP)
• KOMAKI, Haruo
Yokohama-shi,Kanagawa-ken 241-0825 (JP)
• GOTO, Akira
Yokohama-shi,Kanagawa-ken 230-0038 (JP)
• KOMIYAMA, Tomonari
Yokohama-shi,Kanagawa-ken 230-0038 (JP)

(74) Representative:
Sturt, Clifford Mark et al
Miller Sturt Kenyon
9 John Street
London WC1N 2ES (GB)

(54) **EXHAUST EMISSION CONTROL CATALYST, EXHAUST EMISSION CONTROL CATALYST MANUFACTURING METHOD, EXHAUST EMISSION CONTROL FILTER, EXHAUST EMISSION CONTROL FILTER MANUFACTURING METHOD, AND EXHAUST EMISSION CONTROL APPARATUS**

(57) An exhaust emission control catalyst which is capable of starting regeneration without being influenced by the quantity of collected particulates and capable of being completely regenerated, so as to burn and remove the particulates by heating a catalyst directly and uniformly without utilizing the propagation combustion based on the combustion of particulates. An exhaust emission control filter capable of preventing excess catalyst from being supported by the pores thereof, and capable of effecting the reduction of a pressure loss thereof and preventing the wasteful use of a catalyst; and a method of manufacturing the same. An exhaust emission control filter manufacturing method capable of improving the durability and processability of the filter and reducing the volume of an apparatus, and an exhaust emission control catalyst manufacturing method. An exhaust emission control apparatus which has a high capability of controlling exhaust emission from a diesel engine, a high durability, a high economic efficiency, and high maintainability. An exhaust emission

control apparatus of small dimensions provided with a high exhaust gas particle treatment capability.

# FIG.4

**Description**

Technical Field

The present invention relates to an exhaust gas purifying catalyst element for a treatment of carbon-based particles in exhaust gas discharged from combustion equipment, for example, a diesel engine, a heating furnace or a boiler, and to a method of manufacturing the exhaust gas purifying catalyst element. Further, the present invention relates to an exhaust gas purifying filter to be used for treatment of carbon-based particles and unburned hydrocarbon in exhaust gas and for removing odor components from exhaust gas discharged by combustion devices such as a fan heater and a stove, and also relates to a method of manufacturing the exhaust gas purifying filter. Moreover, the present invention relates to an exhaust gas purifying apparatus that uses the exhaust gas purifying catalyst or the exhaust gas purifying filter.

Background Art

Carbon-based particles and hydrocarbon gas included in exhaust gases of engines, oil utilizing apparatuses and gas utilizing apparatuses are serious environmental problems.

Especially, in diesel engines, there are grave environmental problems because exhaust gases of diesel engines contain particulates composed mainly of soots, SOFs and sulfates, though diesel engines have high energy efficiency and excellent durability, so that diesel engines are generally used for transport apparatuses, such as an automobile, for general power machines and for generators.

As countermeasures against particulates, engines and fuel injection systems have been improved in the case of transport apparatuses such as an automobile. Consequently, particulates contained in exhaust gas discharged from diesel engines can be reduced to some extent.

These countermeasures, however, can insufficiently decrease particulates. Thus, a method of utilizing an oxidation catalyst (namely, a combustion catalyst) and a method of collecting particulates with a ceramic filter and subsequently igniting the particulates with an electric heater or a burner and then removing the particulates by the propagating combustion thereof with combustion heat thereof have been studied as methods for further reducing particulates.

On the other hand, in combustion devices such as a stationary diesel engine, an industrial diesel engine, a heating furnace, a cogeneration system, a heat pump and a boiler, a method of using a dust collection device such as a cyclone or a bag filter is employed as a countermeasure against exhaust gas.

However, in the case of employing the aforementioned method of collecting particulate with a ceramic filter and indirectly treating the particulate with an electric heater or a burner, when the regenerative removal of the collected particulate is performed, the propagating combustion of the particulate is performed after the particulates are ignited. This method thus has problems in that a temperature distribution is caused in the filter and consequently, the erosion of the filter is performed.

This method also employs a process of dividing the ceramic filter into a plurality of pieces and regenerating the filter after the flow rate of exhaust gas is reduced by using a valve or the like when the amount of the collected particulate becomes equal to or greater than a predetermined value.

However, the following problems are caused by the method of dividing a ceramic filter into a plurality of pieces and regenerating this filter after the flow rate of exhaust gas is reduced by using a valve or the like when the amount of the collected particulate becomes equal to or greater than a predetermined value, as above described. Namely, because this method requires a valve driving device and a control device therefor, the constitution of an exhaust gas treatment apparatus is complex. Moreover, the erosion of the filter is caused because the temperature is high when accumulated particulate is burned.

Furthermore, ash contained in exhaust gas is accumulated in the filter, so that the filter cannot be used for a long time.

On the other hand, high power is needed for energizing and regenerating a filter or a catalyst element of the self-heating type without reduction of the flow rate of exhaust gas by use of a valve or the like.

Further, the following problems are caused by a dust collection device, such as a cyclone or a bag filter, which is used in combustion devices such as a stationary diesel engine, an industrial diesel engine, a heating furnace, and a boiler. Namely, the treating performance of the dust collection device is low. Moreover, such a collection devices is expensive and should be installed at low-temperature places. Furthermore, the disposal treatment of the collected carbon-based particles should be performed.

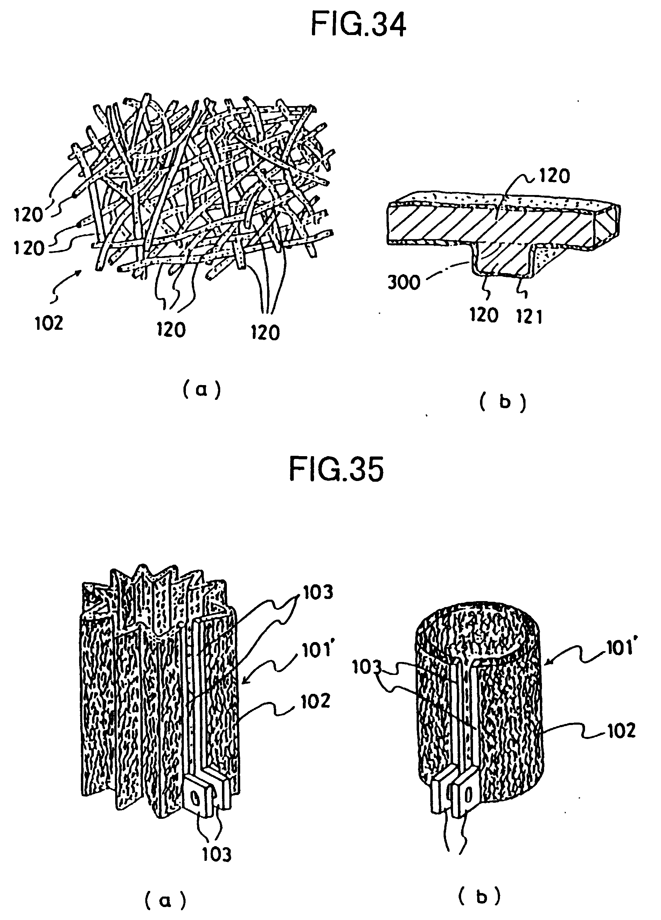

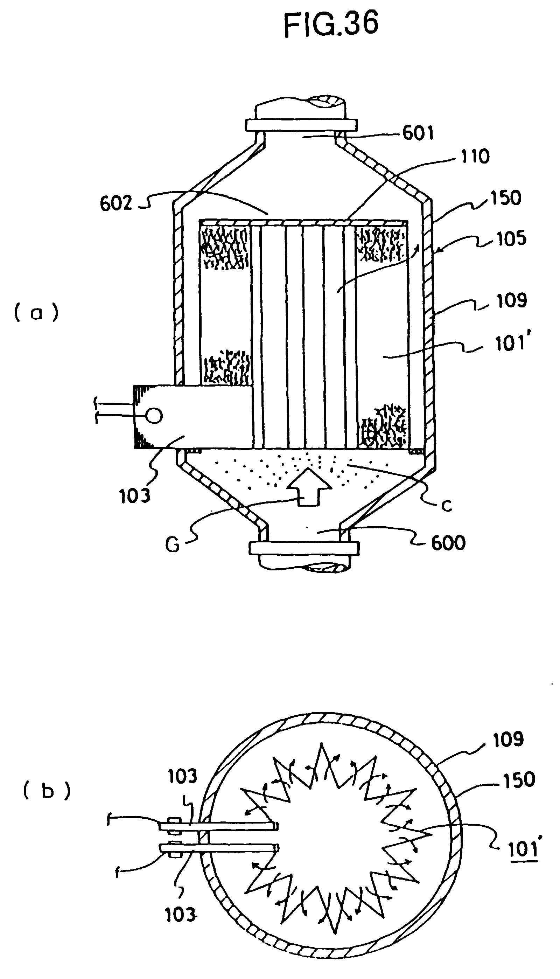

Inventors of the present invention have already established and proposed the material technology (see Japanese Patent Application No. 7-270483/1995) for solving the aforementioned problems. According to this technology, an exhaust gas purifying apparatus is constituted (see Figs. 36(a) and 36(b)) by a fine particle treating apparatus (what is called a filter unit) adapted to gather together very thin high-temperature heat-resistant stainless steel fibers having resistance heating properties, thereby forming a web, and as a result of sintering and heat-treating thereof, to employ a sintered body of the high-temperature heat-resistant stainless steel fibers (see Figs. 34 and 35), which is covered with an aluminum coating as a filter material. Further, electric current is supplied directly to this filter unit, thereby generating heat.

In these figures, reference numeral 102 designates the sintered body of the high-temperature heat-resistant stainless steel fibers. Reference numeral 120 denotes the high-temperature heat-resistant stainless steel fibers. Reference numeral 121 designates the aluminum coating. Further, reference numeral 300 denotes a crossed contact part. In Fig. 35, reference numeral 101' designates a filter for treating carbon-based fine particles. Reference numeral 103' denotes energizing electrodes. Incidentally, advantageous effects of a catalyst are enhanced by causing the sintered body of the high-temperature heat-resistant stainless steel fibers to support the catalyst.

The aforementioned steel fiber filter is a heat-generating metallic porous element, which is in suitable opening conditions and has heat-generating properties, and is suited for constituting an exhaust gas purifying filter of the self-heating type.

The herein-above mentioned "suitable opening conditions" are the dimensions of cross sections of fine opening portions, which are sufficient for capturing fine carbon particles to be collected, and the distribution ratio of the fine opening portions to the entire filter, which ratio is enough to provide required capacity of gaseous mixture to be treated.

Further, the expression "the filter has heat generating properties" means that the filter has a specific resistivity value which is sufficient to start a regeneration operation (of burning carbon components) as the treating apparatus by using an easily available ordinary power supply means.

Therefore, members and parts (namely, heat-generating metallic porous elements) whose fine carbon particle capturing capability and a heat generating property equivalent to those of the aforementioned steel fiber filter may be used for similar use instead of the filter, even if produced with compositions or by manufacturing methods, or manufactured in forms, which are different from those of the filter.

Meanwhile, for instance, the aforementioned carbon-based fine particle treating apparatus established and proposed by the inventors of the present invention requires high treating performance (or processing capacity). Needless to say, if a treatment area is increased by sufficiently enlarging the apparatus, the treating performance thereof is enhanced with the increase in the treatment area. Actually, of course, there are limits to the upsizing of the apparatus in respects of the space and cost thereof. Thus, a small-size high-treating performance apparatus is demanded. Incidentally, generally, the use of a filter of the self-heating type eliminates the need for a heating device. This enables the designing of a compact treating apparatus.

Further, hitherto, a washcoat method and a sol-gel method have been known as methods of supporting a catalyst on a metallic fiber filter (hereunder referred to simply as a filter) when an exhaust gas purifying apparatus is produced.

The aforementioned washcoat method is to form a support layer on a filter by immersing the filter in a catalyst slurry and then drying and burning thereof.

Further, in the case of the aforesaid sol-gel method, metallic organic salt (for example, alkoxide) forming a ceramic support layer is first hydrolyzed. Then, a filter is coated with an obtained sol. Subsequently, a colloidal particle membrane is formed by bringing the filter into contact with water vapor, thereafter, by drying and burning thereof, a catalyst supporting layer is formed on the filter.

Additionally, an impregnation method of impregnating a filter with a catalyst has been known as the methods of supporting a catalyst on a filter.

However, in the case of the aforementioned washcoat, sol-gel and impregnation methods, a fine adjustment in catalyst loading on the filter cannot be achieved. Moreover, it is difficult to permit only the surface of the filter to support the catalyst.

Moreover, each of such methods includes an immersing step, so that unnecessary catalysts are supported in pores of the filter.

Consequently, the pressure loss of the filter is increased. Furthermore, catalysts are wasted.

Further, the conventional catalyst supporting methods have the problems that it takes long time to produce the catalyst supporting filter and that the productivity thereof is low. For example, the washcoat method has the problem that the immersing step should be performed several times until the amount of the supported catalyst reaches a predetermined value. The sol-gel method has the problem that it takes at least a few hours to complete the hydrolysis reaction of the metallic organic salt.

Moreover, the aforementioned exhaust gas purifying filter of the self-heating type and the aforesaid exhaust gas purifying catalyst element of the self-heating type formed by supporting the catalyst on the metallic porous element are constructed so that the electrodes are provided at free ends of the metallic porous element, as described above. Hitherto, contact failures have occurred in the contact portion between the metallic porous element and each of the electrodes. When the filter or the catalyst element is energized, such a portion generates heat. Thus, there is a fear that the erosion or breakage of the metallic porous element occurs. Consequently, the aforementioned filter and catalyst element have poor durability.

Furthermore, such exhaust gas purifying filter and catalyst element of the self-heating type are shaped like, for instance, a flat plate. Thus, when installed in, for instance, a housing, such filter and catalyst element are liable to have insufficient mechanical strength and to deform and fuse owing to expansion and contraction caused by a change in temperature.

Moreover, such flat-plate-like filter and catalyst element have the problems that the surface area per unit volume thereof is small, whereas the volume thereof is large and that, furthermore, it is difficult to form such filter and catalyst element into desired shapes.

The present invention is accomplished to solve the aforementioned problems of the conventional exhaust gas purifying catalyst element, filter and apparatus.

Namely, first, an object of the present invention is to provide an exhaust gas purifying catalyst element which has a high performance of purifying exhaust gas discharged from an engine or combustion equipment and has excellent durability and good economy and maintainability, thereby enhancing the performance of purifying exhaust gas.

Second, another object of the present invention is to provide an exhaust gas purifying filter in which no excessive catalysts are supported in pores thereof, thereby reducing the pressure loss of the filter and eliminating waste of catalysts.

Third, still another object of the present invention is to provide a method of manufacturing an exhaust gas purifying catalyst supporting filter which has advantages in easily controlling an amount of catalyst supported by a metallic fiber filter and in efficiently supporting the catalyst on the surface of the filter in a short time.

Fourth, yet another object of the present invention is to provide a method of manufacturing an exhaust gas purifying filter of the self-heating type and a method of manufacturing an exhaust gas purifying catalyst element of the self-heating type, by which the filter and catalyst element obtain excellent durability and the productivity thereof is enhanced and the volume of the apparatus is reduced.

Fifth, a further object of the present invention is to provide a method of manufacturing an exhaust gas purifying filter of the self-heating type and a method of manufacturing an exhaust gas purifying catalyst element of the self-heating type, by which the filter and catalyst element obtain excellent durability.

Sixth, still another object of the present invention is to provide an exhaust gas purifying apparatus which has a high performance of purifying exhaust gas discharged from such as a diesel engine and excellent durability, enables the designing of a compact apparatus, and has good economy and maintainability.

Disclosure of Invention

Accordingly, according to a first aspect of the present invention, there is provided an exhaust gas purifying catalyst element provided in an exhaust gas passage in such a way as to shut off the aforesaid passage so that exhaust gas flows on all surfaces of the catalyst element, comprising a catalyst supporting metallic porous element in which a catalyst is supported by a metallic porous element that has resistance heating properties and an average pore diameter of 10 to 100 $\mu$m, wherein electrodes are mounted at free ends of the aforesaid metallic porous element, and the aforesaid metallic porous element generates heat by being supplied with electricity though the aforesaid electrodes.

With such a constitution, the exhaust gas purifying catalyst element has electrodes provided at free ends thereof and is caused to uniformly generate heat by supplying electricity thereto from a power supply through these electrodes.

Such an exhaust gas purifying catalyst element is installed, for instance, midway in an exhaust gas pipe of a diesel engine and collects particulates. When the collected particulates are burned and removed, no cinders from the burning of the particulates are obtained. Further, the durability of the catalyst element is enhanced.

The exhaust gas purifying catalyst element manufactured in this manner burns and eliminates particulates by being directly and uniformly heated without utilizing the propagating combustion of the particulates. Consequently, the regeneration of the catalyst can be started without being affected by an amount of the collected particulates. Moreover, the catalyst can be completely regenerated.

In this case, preferably, the metallic porous element is constituted by a metallic fiber filter obtained by forming metallic fibers, the average diameter of which is 5 to 500 $\mu$m, at a porosity of 30 to 95 %.

Furthermore, preferably, catalytic active metallic components of the aforesaid catalyst are a combination of metallic elements of the following groups:

(A) Cu;
(B) K; and
(C) Mo and/or V.

Further, according to a second aspect of the present invention, there is provided an exhaust gas purifying filter having a catalyst supported on a metallic fiber filter, wherein the catalyst is supported only on the surface of the metallic fiber filter by spraying a slurry containing the catalyst to the metallic fiber filter.

With such a constitution in which the catalyst is supplied only on the metallic fiber filter, the pressure loss of the filter is restrained and the waste of catalysts is prevented.

Further, according to a third aspect of the present invention, there is provided a method of manufacturing an exhaust gas purifying filter adapted to support a catalyst on the surface of a metallic fiber filter, which comprises the steps of:

spraying a slurry containing the catalyst to the metallic fiber filter; and
drying and burning the metallic fiber filter after the aforesaid slurry is sprayed.

With such a constitution, since the slurry containing the catalyst is sprayed to the metallic fiber filter and thereafter the metallic fiber filter is dried and burned, the control of the catalyst loading on the filter is facilitated, in comparison with the washcoat method, the sol-gel method and the impregnation method. Moreover, the catalyst can be supported only on the surface of the filter in a short time.

Furthermore, according to a fourth aspect of the present invention, there is provided a method of manufacturing an exhaust gas purifying filter, which is constituted by a metallic porous element having resistance heating properties and is adapted to generate heat by supplying electricity to the aforesaid metallic porous element, comprising the steps of attaching electrodes at free ends of the metallic porous element, and then coating the surface of the metallic porous element, to which the electrodes are attached, with one or more kinds of oxides selected from the group consisting of Cr oxide, Al oxide, Si oxide and Ti oxide.

Additionally, according to a fifth aspect of the present invention, there is provided a method of manufacturing an exhaust gas purifying catalyst element that is constituted by a catalyst supporting metallic porous element, which is obtained by supporting a catalyst on a metallic porous element having resistance heating properties, and that is adapted to generate heat by supplying electricity to the aforesaid catalyst supporting metallic porous element, comprising the steps of attaching electrodes at free ends of the metallic porous element, and then coating the surface of the metallic porous element, to which the electrodes are attached, with one or more kinds of oxides selected from the group consisting of Cr oxide, Al oxide, Si oxide and Ti oxide, and thereafter, causing the coated metallic porous element to support the catalyst.

According to such a method of manufacturing an exhaust gas purifying filter and a method of manufacturing an exhaust gas purifying catalyst element, the step of attaching the electrodes at free ends of the metallic porous element is performed prior to a heat treatment. Thus, no resistance is caused between the metallic porous element and each of the electrodes owing to $Cr_2O_3$ and $Al_2O_3$ coatings produced by the heat treatment. Further, the filter and catalyst element are prevented from generating heat when energized. Consequently, the erosion or disconnection of the filter is prevented.

Moreover, these methods are adapted so that the catalyst is supported by the metallic porous element after the electrodes are mounted at the metallic porous element and the heat treatment is performed. Thus, the catalyst does not get into between the metallic porous element and each of the electrodes. Therefore, no resistance is caused therebetween when the filter or the catalyst element is energized. Consequently, the filter or the catalyst element does not generate heat. The erosion or disconnection of the metallic porous element is prevented. Furthermore, the degradation of the catalyst due to heat does not occur.

Further, according to a sixth aspect of the present invention, there is provided a method of manufacturing an exhaust gas purifying filter, which is constituted by a metallic porous element having resistance heating properties and is adapted to generate heat by supplying electricity to the aforesaid metallic porous element, comprising the steps of corrugating the surface of the metallic porous element like a series of waves propagating in a predetermined direction and subsequently attaching electrodes at free ends of the metallic porous element, and then coating the surface of the metallic porous element, to which the electrodes are attached, with one or more kinds of oxides selected from the group consisting of Cr oxide, Al oxide, Si oxide and Ti oxide.

Additionally, according to a seventh aspect of the present invention, there is provided a method of manufacturing an exhaust gas purifying catalyst element that is constituted by a catalyst supporting metallic porous element, which is obtained by supporting a catalyst on a metallic porous element having resistance heating properties, and that is adapted to generate heat by supplying electricity to the aforesaid catalyst supporting metallic porous element, comprising the steps of corrugating the surface of the metallic porous element like a series of waves propagating in a predetermined direction and subsequently attaching electrodes at free ends of the metallic porous element, and then coating the surface of the metallic porous element, to which the electrodes are attached, with one or more kinds of oxides selected from the group consisting of Cr oxide, Al oxide, Si oxide and Ti oxide, and thereafter, causing the coated metallic porous element to support the catalyst.

According to the methods of such constitutions, the step of corrugating the surface of the metallic porous element like a series of waves propagating in a predetermined direction and the step of attaching electrodes at free ends of the metallic porous element are performed prior to a heat treatment. Thus, the corrugating of the porous element is easily achieved. Further, no resistance is caused between the metallic porous element and each of the electrodes owing to $Cr_2O_3$ and $Al_2O_3$ coatings produced by the heat treatment. Moreover, the filter and catalyst element are prevented from generating heat when energized. Consequently, the erosion or disconnection of the metallic porous element is prevented. Furthermore, these methods are adapted so that the catalyst is supported by the metallic porous element after the electrodes are mounted at the metallic porous element and the heat treatment is performed. Thus, the catalyst does not get into between the metallic porous element and each of the electrodes. Therefore, no resistance is caused therebetween when the filter or the catalyst element is energized. Consequently, the filter or the catalyst element does not generate heat. The erosion or disconnection of the metallic porous element is prevented. Further, the degradation of the catalyst due to heat does not occur.

Moreover, according to an eighth aspect of the present invention, there is provided an exhaust gas purifying apparatus comprising a particulate collecting device, which is constituted by one or more parallel treating units each having at least one high-temperature heat-resistant metallic porous filter of the self-heating type provided with electrodes at free ends thereof and adapted to generate heat when being supplied with electricity, provided midway in an exhaust gas passage having an exhaust gas inlet portion and an exhaust gas outlet portion, an energizing device for supplying electricity to the aforesaid filters so as to regenerate the aforesaid filters, at least one of differential pressure detecting means for detecting a differential pressure between the pressures of exhaust gas respectively obtained at the aforesaid exhaust gas inlet and outlet portions, temperature detecting means for detecting the surface temperature of the aforesaid filter, collection time measuring means for measuring a time elapsed since collection is started by the aforesaid collecting device, and regeneration time measuring means for measuring a time elapsed since regeneration is started, which serves as means for detecting an energization-regeneration time of the aforesaid filter, and energization control means for controlling the aforesaid energizing device based on signals output from at least one of the aforesaid differential pressure detecting means, temperature detecting means, collection time measuring means, and regeneration time measuring means, and for controlling the aforesaid energizing device so that the aforesaid filters are sequentially energized.

In the case that particulates contained in exhaust gas of, for example, a diesel engine are treated by using the exhaust gas purifying apparatus of such a constitution according to the eighth aspect of the present invention, the particulates are captured by the high-temperature heat-resistant metallic porous filter of the self-heating type or the high-temperature heat-resistant catalyst supporting metallic porous filter of the self-heating type. Further, the differential pressure produced across the apparatus increases. At that time, the particulates collected by supplying electricity to the filter itself directly from the electrode, which is mounted at a free end of one of a plurality of parallel high-temperature heat-resistant metallic porous filters of the self-heating type or high-temperature heat-resistant catalyst supporting metallic porous filters of the self-heating type, are burned and eliminated. Then, two or more of the high-temperature heat-resistant metallic porous filters of the self-heating type or the high-temperature heat-resistant catalyst supporting metallic porous filters of the self-heating type can be simultaneously energized.

Thus, the collected particulates can treated without supplying high power which is sufficient for energizing the entire filter. Further, because the filter or the catalyst element itself is energized, the filter or the catalyst element can be caused to uniformly generate heat. Thus, no cinders from the burning of the particulates are obtained. Moreover, the durability of the filter is enhanced. Furthermore, if the catalyst is supported, the temperature at which the catalyst is burned and eliminated, can be lowered. Consequently, the power to be used for energizing the filter can be reduced.

Further, the filter can be designed by arbitrarily changing the pore diameter and the porosity thereof so that the clogging of the filter due to ash does not occur.

According to the eighth aspect of the present invention, the energization-regeneration time of the filter is detected, to thereby control the energization of the filter.

In this case, the apparatus is provided with at least one of the differential pressure detecting means for detecting the differential pressure between the pressures of the exhaust gas respectively obtained at the aforesaid exhaust gas inlet and outlet portions, the temperature detecting means for detecting the surface temperature of the aforesaid filter, the collection time measuring means for measuring the time elapsed since collection is started by the aforesaid collecting device, and the regeneration time measuring means for measuring the time elapsed since regeneration is started, which serves as means for detecting an energization-regeneration time of the aforesaid filter, and the energization control means for controlling the aforesaid energizing device based on signals output from at least one of the aforesaid differential pressure detecting means, temperature detecting means, collection time measuring means, and regeneration time measuring means, and for controlling the aforesaid energizing device so that the aforesaid filters are sequentially energized.

Concretely, the start time of the energization-regeneration of the filter is detected at one of the following moments: a moment at which the aforesaid differential pressure detecting means detects that the differential pressure between the pressures of the exhaust gas respectively obtained at the aforementioned exhaust gas inlet and outlet portions becomes equal to or greater than a predetermined value; a moment at which the aforesaid time measuring means detects that a time elapsed since the start of the collection reaches a predetermined value; and a moment at which the aforementioned differential pressure detecting means detects that the differential pressure between the pressures of the exhaust gas respectively obtained at the aforementioned exhaust gas inlet and outlet portions becomes equal to or greater than a predetermined value or the aforesaid time measuring means detects that a time elapsed since the start of the collection reaches a predetermined value.

Further, the termination time of the energization-regeneration of the filter is detected at one of the following moments: a moment at which the aforesaid temperature detecting means detects that the surface temperature of the filter becomes equal to or greater than a predetermined value; a moment at which the aforesaid regeneration time measuring means detects that a time elapsed since the start of the regeneration reaches a predetermined value; and a moment at which the aforesaid temperature detecting means detects that the surface temperature of the filter becomes equal to or greater than a predetermined value or the aforesaid regeneration time measuring means detects that a time elapsed since the start of the regeneration reaches a predetermined value.

Further, a plurality of pieces, into which the high-temperature heat-resistant metallic porous filter of the self-heating type or the high-temperature heat-resistant catalyst supporting metallic porous filter of the self-heating type is divided, may be sequentially energized since the start of the regeneration. Alternatively, the following step may be repeatedly performed. Namely, upon completion of the regeneration of one of the plurality of the high-temperature heat-resistant metallic porous filters of the self-heating type or the high-temperature heat-resistant catalyst supporting metallic porous filters of the self-heating type, another of the plurality of the high-temperature heat-resistant metallic porous filters or the high-temperature heat-resistant catalyst supporting metallic porous filters may be regenerated at a moment at which it is detected again that the differential pressure produced across the apparatus becomes equal to or greater than a predetermined value or that a predetermined time has been elapsed.

The energizing device may be a device adapted to supply a fixed amount of electric power. Alternatively, the energizing device may be a device to variably control an amount of electric power to be supplied, according to PI or PID control by using the surface temperature of the filter or the temperature of exhaust gas at the exhaust gas inlet or outlet portion.

At that time, the apparatus may adopt a method of setting the maximum amount of electric power to be supplied and limiting electric power to be supplied when the filter is energized.

Such an exhaust gas purifying apparatus according to the eighth aspect of the present invention uses the high-temperature heat-resistant metallic porous filters of the self-heating type or the high-temperature heat-resistant catalyst supporting metallic porous filters of the self-heating type, without utilizing the propagating combustion caused owing to the combustion of particulates. Thus, the particulates are burned and eliminated by heating the filter directly and uniformly. Consequently, the regeneration can be started without being affected by an amount of the collected particulates.

Further, according to a ninth aspect of the present invention, there is provided an exhaust gas purifying apparatus comprising a plurality of parallel passage portions provided midway in an exhaust gas passage having an exhaust gas inlet portion and an exhaust gas outlet portion, and particulate collecting devices respectively provided in the plurality of passage portions, each of the particulate collecting devices being constituted by parallel treating units each having at least one metallic porous filter of the self-heating type, which has resistance heating properties and high-temperature heat-resistance and is provided with electrodes at free ends thereof and adapted to generate heat when being supplied with electricity, the apparatus further comprising an energizing device for supplying electricity to the aforesaid filters so as to regenerate the aforesaid filters, energization control means for controlling the aforesaid energizing device so that during the regeneration of the aforesaid filters, the aforesaid filters of each of the aforesaid treating units are sequentially energized, flow control valves, which are respectively provided midway in the passage portions, for controlling the flow rates of exhaust gases flowing through the aforesaid passage portions, respectively, and flow rate control means for controlling the aforesaid flow control valves in such a manner as to limit the flow rates when the regeneration of the filters is performed.

Namely, this exhaust gas purifying apparatus is obtained by providing the following particulate collecting devices midway in an exhaust gas passage having an exhaust gas inlet portion and an exhaust gas outlet portion. Namely, the particulate collecting devices are respectively constituted by two or more parallel treating units each having at least one high-temperature heat-resistant metallic porous filter of the self-heating type or one high-temperature heat-resistant catalyst supporting metallic porous filter of the self-heating type, which has resistance heating properties and high-temperature heat-resistance and is provided with electrodes at free ends thereof and adapted to generate heat when being supplied with electricity.

When high-temperature heat-resistant metallic porous filters of the self-heating type or high-temperature heat-resistant catalyst supporting metallic porous filters of the self-heating type are provided in the casings of the treating units, one high-temperature heat-resistant metallic porous filter of the self-heating type or one high-temperature heat-resistant catalyst supporting metallic porous filter of the self-heating type may be provided in a casing. Alternatively, a plurality of high-temperature heat-resistant metallic porous filters of the self-heating type or high-temperature heat-resistant catalyst supporting metallic porous filters of the self-heating type may be provided in a casing.

Further, when high-temperature heat-resistant metallic porous filters of the self-heating type or high-temperature heat-resistant catalyst supporting metallic porous filters of the self-heating type are provided in the casings of the treating units, there is no limit to the shapes of these filters.

Incidentally, in the case that particulates contained in exhaust gas of, for example, a diesel engine are treated by using this exhaust gas purifying apparatus of such a constitution according to the ninth aspect of the present invention, the particulates are captured by the high-temperature heat-resistant metallic porous filter of the self-heating type or the high-temperature heat-resistant catalyst supporting metallic porous filter of the self-heating type when a certain time has elapsed. Further, the differential pressure produced across the apparatus increases. At that time, in one of the plurality of treating units, the particulates collected by supplying electricity to the filter itself directly from the electrode, which is mounted at one of the free ends of the high-temperature heat-resistant metallic porous filter of the self-heating type or the high-temperature heat-resistant catalyst supporting metallic porous filter of the self-heating type, are burned and eliminated. Then, when a plurality of the high-temperature heat-resistant metallic porous filters of the self-heating type or the high-temperature heat-resistant catalyst supporting metallic porous filters of the self-heating type are provided in the treating unit, two or more of these filters can be simultaneously energized.

Upon completion of the regeneration of the filter in one of the treating units, the filter of another treating unit is energized. This process is performed on the filters provided in the treating units in sequence. Thus, the filters of the plurality of treating units are regenerated.

Further, when the filter of each of the treating units is regenerated, the flow control valve disposed in the passage portion provided with the treating unit having the filter to be generated is controlled in such a way as to limit the flow rate of exhaust gas.

In this case, if a flow rate limiting width is too small, the temperature of the filter becomes equal to or greater a preset temperature owing to the combustion heat of the particulates. Conversely, if the flow rate limiting width is too large, although the temperature of the filter is less than the preset temperature, heat is dissipated toward the exhaust gas. Thus, energy loss is increased.

Therefore, the flow rate limiting width to be used for controlling the flow control valve in such a manner as to limit the flow rate of exhaust gas is set at an optimum value.

Consequently, the flow rate of exhaust gas passing through the treating unit, in which the filter to be regenerated is provided, is restricted. Therefore, amount of electric power supplied thereto from the energizing device for the regeneration of the filter can be reduced. Further, because the filter or the catalyst element itself is energized, the filter or the catalyst element is caused to uniformly generate heat. Thus, no cinders from the burning of the particulates are obtained. Moreover, the durability of the filter is enhanced. Furthermore, if the catalyst is supported, the temperature, at which the catalyst is burned and eliminated, can be lowered. Consequently, the amount of electric power supplied to the filter can be reduced still more.

Further, the filter can be designed by arbitrarily changing the pore diameter and the porosity thereof so that the clogging of the filter due to ash does not occur.

According to the ninth aspect of the present invention, the energization-regeneration time of the filter is detected, to thereby control the energization of the filter.

In this case, the apparatus is provided with at least one of differential pressure detecting means for detecting a differential pressure between the pressures of the exhaust gas obtained respectively at the aforesaid exhaust gas inlet and outlet portions, temperature detecting means for detecting a surface temperature of the aforesaid filter, collection time measuring means for measuring a time elapsed since collection is started by the aforesaid collecting device, and regeneration time measuring means for measuring a time elapsed since regeneration is started, which serves as means for detecting an energization-regeneration time of the aforesaid filter, and the energization control means for controlling the aforesaid energizing device based on signals output from at least one of the aforesaid differential pressure detecting means, temperature detecting means, collection time measuring means, and regeneration time measuring means, in such a manner that the plurality of filters are sequentially energized when the filters are regenerated..

Concretely, the start time of the energization-regeneration of the filter is detected at one of the following moments: a moment at which the aforesaid differential pressure detecting means detects that the differential pressure between the pressures of the exhaust gas respectively obtained at the aforementioned exhaust gas inlet and outlet portions becomes equal to or greater than a predetermined value; a moment at which the aforesaid time measuring means detects that a time elapsed since the start of the collection reaches a predetermined value; and a moment at which the aforementioned differential pressure detecting means detects that the differential pressure between the pressures of the exhaust gas respectively obtained at the aforementioned exhaust gas inlet and outlet portions becomes equal to or greater than a predetermined value or the aforesaid time measuring means detects that a time elapsed since the start of the collection reaches a predetermined value.

Further, the termination time of the energization-regeneration of the filter is detected at one of the following moments: a moment at which the aforesaid temperature detecting means detects that the surface temperature of the filter becomes equal to or greater than a predetermined value; a moment at which the aforesaid regeneration time measuring means detects that a time elapsed since the start of the regeneration reaches a predetermined value; and a moment at which the aforesaid temperature detecting means detects that the surface temperature of the filter becomes equal to or greater than a predetermined value or the aforesaid regeneration time measuring means detects that a time elapsed since the start of the regeneration reaches a predetermined value.

Further, a plurality of pieces, into which the high-temperature heat-resistant metallic porous filter of the self-heating type or the high-temperature heat-resistant catalyst supporting metallic porous filter of the self-heating type is divided, may be sequentially energized since the start of the regeneration. Alternatively, the following step may be repeatedly performed. Namely, upon completion of the regeneration of one of the plurality of the high-temperature heat-resistant metallic porous filters of the self-heating type or the high-temperature heat-resistant catalyst supporting metallic porous filters of the self-eating type, another of the plurality of the high-temperature heat-resistant metallic porous filters or the high-temperature heat-resistant catalyst supporting metallic porous filters may be regenerated at a moment at which it is detected again that the differential pressure produced across the apparatus becomes equal to or greater than a predetermined value or that a predetermined time has been elapsed.

The energizing device may be a device adapted to supply a fixed amount of electric power. Alternatively, the energizing device may be a device to variably control an amount of electric power to be supplied, according to PI or PID control by using the surface temperature of the filter or the temperature of exhaust gas at the exhaust gas inlet or outlet portion.

At that time, the apparatus may adopt a method of setting the maximum amount of electric power to be supplied and limiting electric power to be supplied when the filter is energized.

Such an exhaust gas purifying apparatus according to the ninth aspect of the present invention uses the high-temperature heat-resistant metallic porous filters of the self-heating type or the high-temperature heat-resistant catalyst supporting metallic porous filters of the self-heating type, without utilizing the propagating combustion caused owing to the combustion of particulates. Thus, the particulates are burned and eliminated by heating the filter directly and uniformly. Consequently, the regeneration can be started without being affected by an amount of the collected particulates. Further, even if the regeneration is perfomred under a condition that the exhaust gas amount is limited by a valve and the like, the regeneration can be completed without the filter being overheated to be eroded.

According to a tenth aspect of the present invention, there is provided an exhaust gas purifying apparatus comprising an envelope having a gas inlet port, which communicates with the outside thereof, at one end thereof and having a gas outlet port, which communicates with the outside thereof, at the other end thereof, and a filter element contained and fixed in an inner space of the aforesaid envelope,

wherein the aforesaid filter element has high-temperature heat-resistant metallic porous materials with resistance heating properties densely arranged, , and has electrodes provided at two or more appropriate parts, an end portion of each electrode is drawn out therefrom to the outside of the aforesaid envelope so as to be used for energization, and gas entraining particles, which has flown into the aforesaid envelope from the gas inlet port, is discharged from the gas outlet port through the aforesaid filter element.

In this case, especially, it is preferable that the aforesaid filter element is constituted by densely distributing high-temperature heat-resistant metallic fiber filter materials each of which gathers together high-temperature heat-resistant metallic fibers manufactured by machining high-temperature heat-resistant metal and has an insulating layer formed on a surface thereof.

Further, it is preferable that the aforesaid filter element is constituted by a coaxial multi-cylinder or has a structure in which a plurality of tubular gas passages are formed by bringing bent wall surfaces, which extend in a fixed direction, close to one another and arranging the bent wall surfaces in such a way as to be parallel to one another.

Additionally, according to an eleventh aspect of the present invention, there is provided an exhaust gas purifying apparatus comprising a hollow cylindrical envelope having a gas inlet port, which communicates with the outside thereof, at one end thereof and having a gas outlet port, which communicates with the outside thereof, at the other end thereof and a filter element contained and fixed in an inner space of the aforesaid envelope,

wherein the aforesaid filter element is constituted by establishing a conductive connection between an elongated corrugated filter, which has a predetermined width and a predetermined length and is obtained by bending and machining high-temperature heat-resistant plate-like metallic fiber filter materials having resistance heating properties each gathering together high-temperature heat-resistant metallic fibers manufactured by machining high-temperature heat-resistant metal, and a conductive plate material, whose width and length are nearly equal to those of the aforesaid corrugated filter, at a connecting side portion provided at one end in a longitudinal direction and by providing an electrode at the other end of each of the corrugated filter and the conductive plate material to form a coaxial multiple winding around the aforesaid connecting side portion with an insulating layer formed on a surface thereof, and an end portion of each electrode is drawn out therefrom to the outside of the aforesaid envelope so as to be used for energization, and gas entraining particles, which has been fed under pressure from the outside and flown into the aforesaid envelope from the gas inlet port, is discharged from the gas outlet port through the aforesaid filter element.

Further, according to a twelfth aspect of the present invention, there is provided an exhaust gas purifying apparatus comprising a hollow cylindrical envelope having a gas inlet port, which communicates with the outside thereof, at one end thereof and having a gas outlet port, which communicates with the outside thereof, at the other end thereof and a filter element contained and fixed in an inner space of the aforesaid envelope

wherein the aforesaid filter element is constituted by establishing a conductive connection between an elongated corrugated filter portion, which has a predetermined width and a predetermined length and is obtained by bending and machining high-temperature heat-resistant plate-like metallic fiber filter materials having resistance heating properties each gathering together high-temperature heat-resistant metallic fibers manufactured by machining high-temperature heat-resistant metal, and a flat-plate-like filter portion manufactured by using the high-temperature heat-resistant metal fiber filter materials, whose width and length are nearly equal to those of the aforesaid corrugated filter, at a connecting side portion provided at one end of the corrugated filter portion and the flat-plate-like filter portion in a longitudinal direction and by providing an insulating layer formed on a surface of the filter element and an electrode at the other end of each of the corrugated filter portion and the flat-plate-like filter portion, to form a coaxial multiple winding around the aforesaid connecting side portion, and an end portion of each electrode is drawn out therefrom to the outside of the aforesaid envelope so as to be used for energization, and gas entraining particles, which has been fed under pressure from the outside and flown into the aforesaid envelope from the gas inlet port, is discharged from the gas outlet port through the aforesaid filter element.

In each of the aforementioned exhaust gas purifying apparatuses, the high-temperature heat-resistant metallic porous materials capture carbon-based fine particles in the gas entraining particles, which has been supplied into the casing, without fail. Thus, the aforementioned exhaust gas purifying apparatuses have high treatment performance. If the filter is energized at a suitable time, the high-temperature heat-resistant metallic material self-heats. Accumulated fine particles are eliminated by igniting and burning carbon-based fine particles owing to this Joule heat (regeneration operation).

Further, a collecting member also serves as a heating portion, so that a compact apparatus is realized.

Moreover, the high-temperature heat-resistant metallic materials are densely arranged, so that the apparatus has high heat efficiency. Thus, the suitable treatment of fine particles can be achieved.

Furthermore, the use of the high-temperature heat-resistant metallic fiber filter materials ensures that an apparatus having sufficient performance is realized.

Intended sufficient treatment performance can be obtained by constituting the apparatus so that the filter element is a coaxial multi-cylinder or that a plurality of tubular gas passages are formed in the filter element.

Additionally, a filter element having a preferable resistance value is easily designed by employing corrugated-plate-like high-temperature heat-resistant metallic fiber filter materials.

Brief Description of Drawings

Fig. 1 is a schematic diagram illustrating experimental equipment in which an exhaust gas purifying catalyst element according to the first aspect of the present invention is provided midway in an exhaust gas pipe of a diesel engine;

Fig. 2 is a timing chart showing experimental data in the case of Example 1, which is obtained by the aforementioned experimental equipment;

Fig. 3 is a timing chart showing experimental data in the case of Comparative Example 1, which is obtained by the aforementioned experimental equipment;

Fig. 4 is an enlarged view of an exhaust gas purifying filter according to the second aspect of the present invention;

Fig. 5 is a schematic diagram illustrating a manufacturing apparatus for implementing a method of manufacturing an exhaust gas purifying filter according to the third aspect of the present invention;

Fig. 6 is a sectional view of an exhaust gas purifying filter according to the second aspect of the present invention;

Fig. 7 is a graph showing the distribution of the catalyst loading in the direction of depth of an exhaust gas purifying filter;

Fig. 8 is a perspective diagram illustrating an example of a method of machining a high-temperature heat-resistant metallic porous element in such a way as to have a corrugated or uneven surface;

Fig. 9 is a diagram explaining an electrode attaching portion of each of exhaust gas purifying filters according to the fourth and sixth aspects of the present invention and exhaust gas purifying catalyst elements according to the fifth and seventh aspects of the present invention;

Fig. 10 is a diagram showing another embodiment of each of the exhaust gas purifying filters and the exhaust gas purifying catalyst elements according to the above aspects of the present invention;

Fig. 11 is a diagram showing still another embodiment of each of the exhaust gas purifying filters and the exhaust gas purifying catalyst elements according to the above aspects of the present invention;

Fig. 12 is a diagram showing yet another embodiment of each of the exhaust gas purifying filters and the exhaust gas purifying catalyst elements according to the above aspects of the present invention;

Fig. 13 is a diagram illustrating experimental equipment for the aforementioned exhaust gas purifying filter and the aforementioned exhaust gas purifying catalyst element according to the present invention;

Fig. 14 is a diagram explaining an electrode attaching portion of each of the aforementioned exhaust gas purifying filters and the aforementioned exhaust gas purifying catalyst elements according to the present invention;

Fig. 15 is a plan view of an embodiment of an exhaust gas purifying apparatus according to the eighth aspect of the present invention;

Fig. 16 is a diagram showing the constitution of a treating unit according to the same aspect as herein-above-mentioned of the present invention; (A) is a sectional plan view thereof; and (B) is a sectional view thereof taken in the direction of an arrow along the line A-A of (A);

Fig. 17 is a timing chart illustrating experimental data in the case of Example 1 according to the above aspect of the present invention;

Fig. 18 is a timing chart illustrating experimental data in the case of Example 2 according to the above aspect of the present invention;

Fig. 19 is a timing chart illustrating experimental data in the case of Example 3 according to the above aspect of the present invention;

Fig. 20 is a timing chart illustrating experimental data in the case of Example 4 according to the above aspect of the present invention;

Fig. 21 is a timing chart illustrating experimental data in the case of Example 5 according to the above aspect of the present invention;

Fig. 22 is a timing chart illustrating experimental data in the case of Example 6 according to the above aspect of the present invention;

Fig. 23 is a plan view of an embodiment of an exhaust gas purifying apparatus according to the ninth aspect of the present invention;

Fig. 24 is a diagram showing the constitution of a treating unit according to the above aspect of the present invention; (A) is a front view thereof; and (B) is a sectional front view thereof;

Fig. 25 is a timing chart illustrating experimental data in the case of Example 1 according to the above aspect of the present invention;

Fig. 26 is a timing chart illustrating experimental data in the case of Example 2 according to the above aspect of the present invention;

Fig. 27 is a timing chart illustrating experimental data in the case of Example 3 according to the above aspect of the present invention;

Fig. 28 is a timing chart illustrating experimental data in the case of Example 4 according to the above aspect of the present invention;

Fig. 29 is a diagram showing an embodiment of an exhaust gas purifying apparatus according to the tenth to twelfth aspects of the present invention; (a) is a sectional side view thereof; and (b) is a transverse cross sectional side view thereof;

Fig. 30 is a schematic diagram showing the constitution of a filter element of the apparatus according to the above aspects of the present invention;

Fig. 31 is a graph showing an example of the characteristic of the filter element of the apparatus according to the above aspects of the present invention;

Fig. 32 is a transverse cross sectional view of another embodiment of the apparatus according to the same aspects as herein-above-mentioned aspects of the present invention;

Fig. 33 is a sectional side view of the apparatus corresponding to Fig. 32;

Fig. 34 is an enlarged diagram illustrating the filter element according to the above aspects of the present invention;

Fig. 35 is a perspective diagram showing the shape of the conventional exhaust gas purifying filter; and

Fig. 36 is a diagram illustrating an example of the conventional exhaust gas purifying apparatus; (a) is a sectional side view thereof; and (b) is a transverse cross sectional view thereof.


Best Mode for Carrying Out the Invention

Hereinafter, embodiments of the present invention will be described.

An exhaust gas purifying catalyst element according to the first aspect of the present invention will be described hereinbelow.

The lower limit of the average pore diameter of a metallic porous element in the exhaust gas purifying catalyst element according to this aspect of the present invention is 10 $\mu$m, preferably, 20 $\mu$m. On the other hand, the upper limit of the average pore diameter thereof is 100 $\mu$m, preferably, 90 $\mu$m.

In the case that the average pore diameter of the metallic porous element according to this aspect of the present invention is less than 10 $\mu$m, there are the fears that the differential pressure increases and that the clogging of the filter due to ash contained in exhaust gas occurs. On the other hand, in the case that the average pore diameter thereof exceeds 100 $\mu$m, the efficiency in collecting particulates contained in exhaust gas decreases. Thus, these cases are not preferable.

Incidentally, the porosity and thickness of the metallic porous element according to this aspect of the present invention have arbitrary values. The metallic porous element can be designed by arbitrarily changing these values so that the clogging of the filter due to ash contained in exhaust gas does not occur.

Further, as long as materials have resistance heating properties and generate heat when being energized, any of such materials may be employed as a material of the metallic porous element according to this aspect of the present invention. Metallic porous elements employing one or more kinds of metal selected from the group consisting of Fe, Cr, Ni, Co and W as main materials thereof are preferable and are usually used. Further, more preferably, metallic porous elements contain metals such as Al, Si and Ti.

For instance, kanthal materials, such as Fe-Cr-Al-based ones, and nickelchrome-based materials may be employed. More preferably, Fe-Cr-Al-REM-based materials may be used. Practically, Fe-Cr-Al-REM-based material may contain 15 to 23 % of Cr by weight, 2.5 to 6.0 % of Al by weight and 0.02 to 1 % of REM which is one or more kinds of substances selected from the group consisting of La, Y and Ce. Such materials may contain obligatory components as other composition components.

Arbitrary method of manufacturing the aforementioned metallic porous element may be employed. Practically, one or more kinds of the following methods (a) to (g) may be used: namely, (a) a method of sintering one or more kinds of materials selected from metallic powder manufactured by using one kind of substance selected from the group consisting of Fe, Cr, Ni, Co and W as a main material, short fibers, long fibers and whiskers, after the pressure-forming thereof, or after such materials are mixed with resin binder and then the forming, for instance, the injection molding, extrusion molding or flow forming of the mixture, is performed; (b) a method of mixing metal, whose main material is a substance selected from the group consisting of Fe, Cr, Ni, Co and W, with a substance, which is vaporized at a high temperature or by a chemical reaction, and then sintering such a mixture; (c) a method of precipitating a porous element by using plating liquid which contains metallic ions whose main material is a substance selected from the group consisting of Fe, Cr, Ni, Co and W; (d) a method of performing the forming and the heat treatment of porous particles made of metal whose main material is a substance selected from the group consisting of Fe, Cr, Ni, Co and W; (e) a method of making an alloy by mixing or depositing a metal, whose main material is a substance selected from the group consisting of Fe, Cr, Ni, Co and W, and another metal which is soluble in or easily diffuses in the former metal, and then removing the latter metal therefrom; (f) a method of coating a porous element made of a combustible or soluble material with one or more layers made of one or more kinds of metals, whose main materials are substances selected from the group consisting of Fe, Cr, Ni, Co and W, by plating or depositing, and thereafter increasing the porosity of the element, when the element is sintered, by removing the material by burning or dissolving, or further coating the porous element with one or more kinds of the aforesaid metals by plating or depositing; (g) a method of injecting plaster or a flow-forming casting-material, which is used for precision-casting, into a porous element made of a combustible or soluble material, and then burning the porous element and subsequently, manufacturing a porous casting mold, and then injecting melts or fluidized powder of a metal, whose main materials are substances selected from the group consisting of Fe, Cr, Ni, Co and W, into the porous casting mold and thereafter, solidifying and combining the melts or fluidized powder of the metal.

The exhaust gas catalyst element according to this aspect of the present invention is of the self-heating type and is provided with electrodes at free ends thereof so as to supply electric power to the metallic porous element.

Arbitrary material is used as that of the electrodes. For example, Cu and stainless steel maybe used. It is, however, preferable that the same material as that of the metallic porous element is used as the material of the electrodes.

It is preferable for imparting heat-resistance and corrosion-resistance to the metallic porous element that the surface of this element is coated with one or more kinds of oxides selected from the group consisting of Cr oxide, Al oxide, Si oxide and Ti oxide.

Arbitrary method of coating the surface of the metallic porous element with such oxides is employed. Specifically, for example, in the case that the aforementioned metallic porous element contains one or more kinds of metals selected from the group consisting of Cr, Al, Si and Ti, a coating made of oxides of such metals is easily formed on the surface of the metallic porous element by performing thermo-oxidation on the metallic porous element in an oxidizing atmosphere, such as the air, at temperatures of 500 to 1200 °C, preferably, at temperatures of 600 to 1100 °C.

Incidentally, it is preferable that when a coating operation of coating the surface of the metallic porous element with such oxides is performed, the aforementioned step of attaching the electrodes to the free ends of the metallic porous element is performed prior to the step of performing the aforesaid coating operation.

For instance, a method of manufacturing metallic fibers having heat-generating properties from metal, by a machining method, such as a drawing method, a melt spinning method, a wire cutting method, a coil cutting method, a chatter vibration cutting method, a coating method or a whisker method, to form the metallic fibers into a filter shape can be used as a suitable method of manufacturing the metallic porous element of the present invention.

At that time, the lower limit of the average diameter of the aforesaid metallic fibers is 5 μm, preferably, 10 μm. On the other hand, the upper limit of the average diameter thereof is 500 μm, preferably, 100 μm. In the case that the average diameter of the metallic fibers is less than 5 μm, there are the fears that the differential pressure increases and that the clogging of the pores due to ash contained in exhaust gas occurs. On the other hand, in the case that the average diameter thereof exceeds 500 μm, there is the fear that the efficiency in collecting particulates contained in exhaust gas decreases.

Further, at that time, the lower limit of the porosity of the aforesaid filter is 30 %, preferably, 70 %. On the other hand, the upper limit of the porosity thereof is 95 %, preferably, 93 %. In the case that the porosity of the filter is less than 30 %, there are the fears that the differential pressure increases and that the clogging of the pores due to ash contained in exhaust gas occurs. On the other hand, in the case that the porosity thereof exceeds 95 %, there is the fear that the efficiency in collecting particulates contained in exhaust gas decreases.

Further, it is preferable that a sintering operation is further performed on the aforesaid metallic fiber filter. This operation is performed under arbitrary sintering conditions. Practically, such an operation is performed by heating the filter, for example, in a vacuum or a non-oxidizing atmosphere at temperatures of 800 to 1500 °C, preferably, at temperatures within a range between 900 to 1300 °C, for a time between 10 minutes and 10 hours, preferably, between 1 hour and 6 hours. It is also suitable that loads are imposed on the filter during the sintering.

Furthermore, it is suitable to impart high-temperature heat-resistance and corrosion-resistance to the aforesaid metallic fiber filter by forming a coating of the metallic oxide on the surface of the metallic fiber filter by performing heat treatment thereon after the sintering thereof. This heat treatment is performed under arbitrary heat-treatment conditions. Actually, such heat treatment is performed by heating the filter in, an oxidizing atmosphere, for instance, the air at temperatures of 600 to 1200 °C, preferably, at temperatures within a range between 800 to 1100 °C, for a time between 1 hour and 20 hours, preferably, between 2 hours and 10 hours.

The exhaust gas purifying catalyst element of the self-heating type according to the present invention is obtained by causing the aforementioned metallic porous element to support the catalyst.

Preferably, this catalyst is supported after the electrodes are connected to the free ends of the aforementioned metallic porous element and the surface of the metallic porous element is coated with one or more kinds of oxides selected from the group consisting of Cr oxide, Al oxide, Si oxide and Ti oxide. The reasons are as follows. Namely, if the catalyst is supported before the connection of electrodes, the catalyst gets into between the metallic porous element and each of the electrodes. Thus, resistance is caused therebetween when the catalyst element is energized. Consequently, the catalyst element generates heat. This results in the erosion or disconnection of the metallic porous element.

The material of a catalyst carrier is not limited to a specific one. However, for the material of the catalyst carrier, at least one of alumina, silica, zirconia, titania, zeolites such as ZSM-5, USY, SAPO and zeolite Y, and silica-alumina, alumina-zirconia, alumina-titania, silica-titania, silica-zirconia and titania-zirconia is desirable.

Catalyst supporting particles have an arbitrary average particle diameter. Usually, the lower limit of the average particle diameter thereof is 0.01 μm, preferably, 0.1 μm. On the other hand, the upper limit of the average particle diameter thereof is 20 μm, preferably, 10 μm. In the case that the average particle diameter thereof is less than 0.01 μm, considerable difficulty is associated with the manufacturing of the catalyst carriers. On the other hand, in the case that the average particle diameter thereof exceeds 20 μm, there are fears that the pores of the metallic porous element are clogged and that the catalyst carrier is liable to peel off the metallic porous element.

Arbitrary catalytic active metallic components may be supported on the catalyst carrier. However, usually, preferable catalytic active metallic components are one or more metals selected from the group consisting of Pt, Pd, Cu, K, Rb, Cs, Mo, Cr, Mn, Rh, Ag, Ba, Ca, Zr, Co, Fe, La and Ce. More preferable catalytic active metallic components are one or more metals selected from the group consisting of Pt, Pd, Rh, Cu, K, Mo, Mn, Fe and Ce.

Further, in the present invention, the preferable catalytic active metallic components supported on the catalyst carrier are a combination of metallic elements of the following groups:

(A) Cu;
(B) K; and
(C) Mo and/or V,

in view of the facts that such components provide a low degree of poisoning of sulfur oxides contained in exhaust gas and excellent combustibility of particulates.

Incidentally, these catalytic active metallic components are used in the form of metals or of oxides, carbonates, nitrates, halides such as bromides, carbonates, sulfates, sulfites, phosphates and complex salts.

Amounts of these metals or metal compounds supported by the catalyst carrier have arbitrary values. However, usually, the lower limit of the metal loading or of the loading of metallic components contained in the metal compound is 0.01 g per gram of the catalyst carrier, preferably, 0.05 g. On the other hand, the upper limit of the metal loading or the metallic component loading thereof is 2.0 g, preferably, 1.0 g. In the case that the metallic component loading is less than 0.01 g per gram of the catalyst carrier, there is the fear that the catalyst does not become active. On the other hand, in the case that the metallic component loading exceeds 2.0 g per gram of the catalyst carrier, there is the fear that the clogging of the pores of the metallic porous element occurs.

Methods of supporting the catalyst carrier and the catalyst on the metallic porous element are not limited to a specific method. For example, the washcoat method, the impregnation method and a spraying method using a nozzle may be used.

After the catalyst is supported in such conditions, the catalyst is dried at temperatures 80 to 200 °C, preferably, 100 to 130 °C. Additionally, the catalyst is then sintered at temperatures of, for instance, 300 to 1000 °C, preferably, at temperatures of 500 to 800 °C. Thus, the exhaust gas purifying catalyst element of the self-heating type according to the present invention can be obtained.

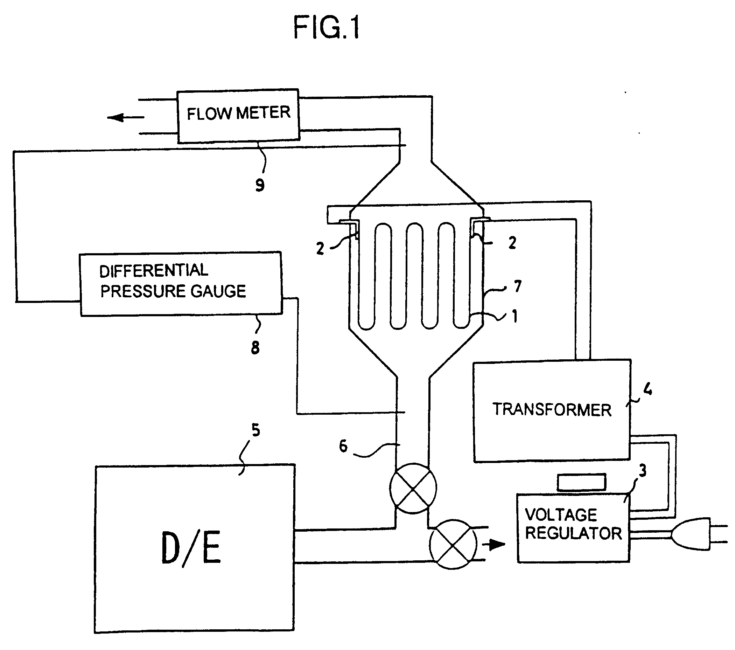

As shown in Fig. 1, an exhaust gas purifying catalyst element 1 of the present invention is disposed in an exhaust gas passage in such a way as to shut off the aforesaid passage and is used so that exhaust gas flows on all surfaces thereof. Moreover, electrodes 2 are provided at free ends of the element 1. The exhaust gas purifying catalyst element 1 itself is caused to uniformly generate heat by feeding electricity via the electrodes 2 from a power supply directly thereto.

Such an exhaust gas purifying catalyst element is installed midway in an exhaust gas pipe 6 of a diesel engine 5, as illustrated in, for example, Fig. 1, to collect particulates. When the collected particulates are burned and eliminated, no cinders from the burning of the particulates are generated. Moreover, the durability of the catalyst element is enhanced.

The exhaust gas purifying catalyst element manufactured in this manner is adapted to burn and eliminate particulates by directly and uniformly heating a filter, without utilizing the propagating combustion caused owing to the combustion of the particulates. Thus, the regeneration of the filter can be started without being affected by an amount of the collected particulates. Moreover, the filter can be completely regenerated.

Next, more concrete constitution of the exhaust gas purifying catalyst element will be described below.

Example 1

High-temperature heat-resistant metallic fibers, which were 70 mm in length and 50 μm in diameter, were manufactured by the chatter cutting method from high-temperature heat-resistant metal consisting of 0.04 % of C, 0.14 % of Si, 0.13 % of Mn, 20.02 % of Cr, 4.9 % of Al, 0.08 % of La, and the remainder of Fe and obligatory impurities. Further, a high-temperature heat-resistant metallic porous element was produced by gathering together the metallic fibers like a filter so that the porosity thereof was 85 %.

After this metallic porous element was sintered in an inactive atmosphere at a temperature of 1100 °C for 6 hours, the electrodes were mounted at this element. Then, such an element was heat-treated in an air atmosphere at a temperature of 1000 °C for 6 hours, so that alumina was precipitated on the surface of the element. Thus, an exhaust gas purifying filter of the self-heating type was obtained.

Then, 7 g of titania particles each having a particle diameter of 0.1 μm were mixed into 200 ml of an aqueous solution prepared from 3.8 g of copper nitrate trihydrate, 2.6 g of potassium nitrate and 1.8 g of ammonium molybdate tetrahydrate. Moisture was vaporized by stirring this mixed solution. Catalyst was prepared by drying this mixed solution at a temperature of 110 °C and burning this mixture at a temperature of 500 °C. Subsequently, 10 g of this catalyst was mixed into 90 ml of an ethanol solution having a purity of 99 %. Then, a catalyst slurry was prepared by grinding and mixing this mixture by a ball mill for 24 hours. This slurry was washcoated on the exhaust gas purifying filter of the self-heating type. Subsequently, this slurry was dried at a temperature of 110 °C for 1 hour. Thereafter, the washcoated slurry was burned at a temperature of 500 °C for 2 hours. This process was repeatedly performed until 50 mg of the catalyst per gram of the filter was supported on. Thus, the exhaust gas catalyst element of the selfheating type was obtained.

This exhaust gas purifying catalyst element 1 of the self-heating type was installed in the container (or housing) 7, as illustrated in Fig. 1. This housing 7 was installed midway in the exhaust gas pipe 6 of the diesel engine 5.

Incidentally, in Fig. 1, reference numeral 3 designates a voltage regulator; 4 a transformer; 8 a differential pressure gauge; and 9 a flow meter.

The engine was operated at 70 percent constant load. Exhaust gas (flow rate: 10 Nm$^3$/h) entraining soot particles, whose concentration measured by Bosch-type smoke meter was 8 percent, was made to pass through the housing 7. Soot particles were collected until the differential pressure produced across the housing 7 reaches 200 mmH$_2$O.

Thereafter, while the exhaust gas was flown, electricity was supplied between the electrodes 2 of the exhaust gas purifying catalyst element 1 of the self-heating type. The collected soot particles were burned and eliminated. Further, a reduction in the differential pressure between the pressures of the gas respectively obtained at the front and rear portions of the housing 7 was observed.

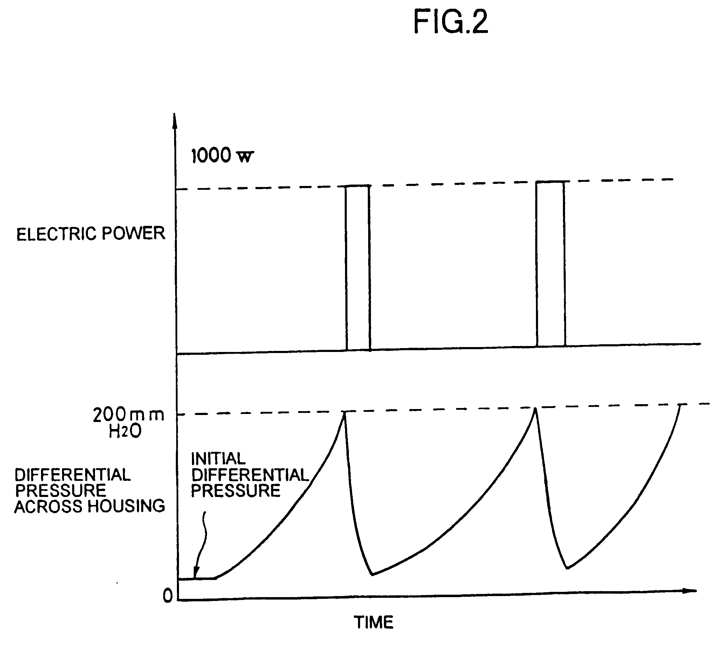

Fig. 2 shows the relations between the differential pressure produced across the housing 7 and an amount of electric power in accordance with the time lapse, which were observed during the aforementioned experiment.

Comparative Example 1

For comparison with Example 1, an exhaust gas purifying filter of the self-heating type, in which a catalyst was not supported, was manufactured by a method similar to that of Example 1 except that the catalyst was not supported. The performance of this filter was evaluated according to a method similar to that used in Example 1.

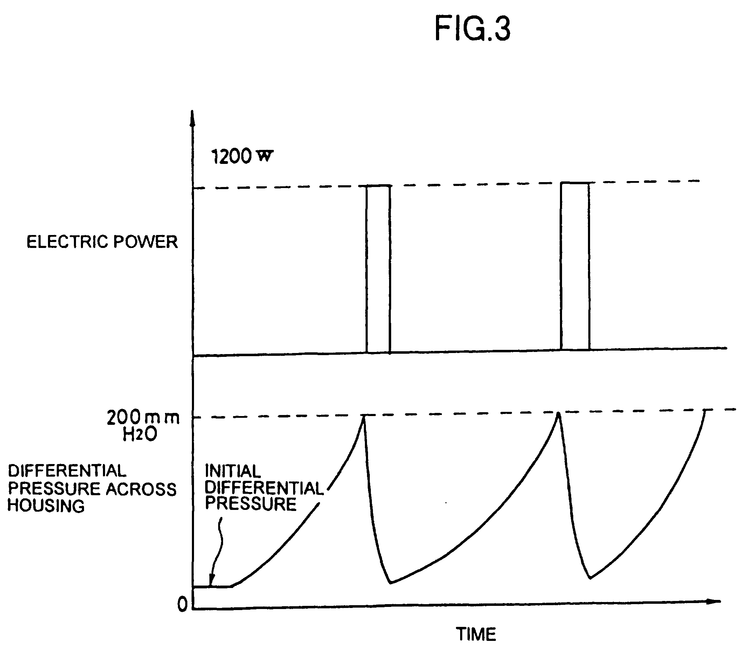

Fig. 3 shows the relations between the differential pressure produced across the housing 7 of this filter and an amount of electric power in accordance with the time lapse, which were observed during the aforementioned experiment.

Further, results of the experiments conducted on Example 1 and Comparative Example 1 are shown in TABLE 1 listed below.

TABLE 1

|  | Comparative Example 1 | Example 1 |
|---|---|---|
| Collecting Time | 20 minutes | 30 minutes |
| Regenerating Power | 1200 W | 1000 W |
| Average Ratio of Eliminating Soot Particles | 3 minutes | 2.5 minutes |
| Regenerating Ratio | 60 % | 75 % |
| Flow Rate of Exhaust Gas | 10 Nm$^3$/h | 10 Nm$^3$/h |

As is apparent from this TABLE 1, the exhaust gas purifying catalyst element of Example 1 is higher in the average ratio of eliminating soot particles and in the regenerating ratio than the exhaust gas purifying filter of the self-heating type of Comparative Example 1.

As described above, the exhaust gas purifying catalyst element according to the present invention has advantages in that this catalyst element has excellent durability and good economy and maintainability.

Next, an exhaust gas purifying filter according to the second aspect of the present invention and a method of manufacturing an exhaust gas purifying filter according to the third aspect of the present invention will be described hereinbelow.

Inventors of the present invention assiduously studied the techniques of supporting the catalyst on the metallic fiber filter so as to solve the problems of the conventional exhaust gas purifying catalyst element, filter and apparatus. As a result, the inventors found that, if the catalyst is supported through the steps of drying and burning the filter after the step of spraying a catalyst slurry, which is obtained by uniformly mixing the catalyst into a solvent, to the filter by using a nozzle, the catalyst can be supported only on the surface of the metallic fiber filter and thus the pressure loss of the metallic fiber filter can be prevented from increasing. Thus, the inventors proposed the present invention, based on this knowledge.

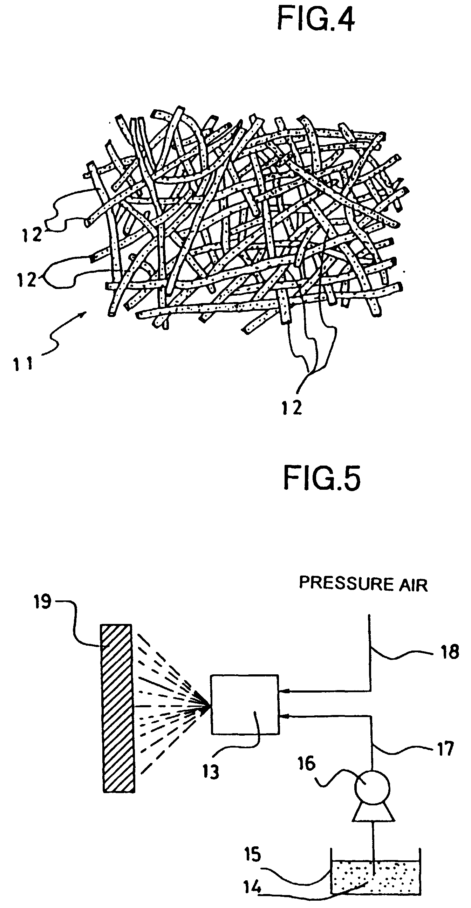

Namely, an exhaust gas purifying filter 11 of this invention is constituted, as illustrated in, for instance, Fig. 4, such that the catalyst is supported only on the surface of the metallic fiber filter by spraying, for instance, a catalyst containing slurry constituted to support the catalyst, to the surface of the metallic fiber filter constituted by, for example, metallic fibers 12 (to be described later).

Further, the method of manufacturing the exhaust gas purifying filter according to this invention comprises the steps of spraying a slurry (in which the solvent and the catalyst are mixed) containing the catalyst to a metallic fiber filter 19 by a spraying device employing a spray nozzle 13 as shown in Fig. 5, and of drying and burning the metallic fiber filter 19 after the slurry is sprayed, and is characterized in that the catalyst is supported only on the surface of the metallic fiber filter 19.

Incidentally, as illustrated in Fig. 4, the aforementioned spraying device is constituted so that a catalyst slurry 14 is supplied from a vessel 15 in which the catalyst slurry 14 is stored, through a catalyst slurry supply passage 17 in which a pump 16 is provided, to the spray nozzle 13 which is disposed in such a way as to face the metallic fiber filter 19, and that the catalyst slurry is sprayed to the metallic fiber filter 19 from the spray nozzle 13 to which pressure air is supplied through a pressure air supply passage 18 from a pressure air source such as a compressor (not shown).

Next, the constitution of the above mentioned invention will be concretely described below.

First, metallic fibers composing the metallic fiber filter serving as a base material of the exhaust gas purifying material will be described hereinbelow. Raw material of the metallic fibers is high-temperature heat-resistant metal. Preferably, a material having resistance heating properties, which produces heat by being energized, for instance, Fe-Cr-Al-REM-based stainless steel is used as this high-temperature heat-resistant metal. Specifically, Fe-Cr-Al-REM-based material contains 15 to 23 % of Cr by weight, 2.5 to 6.0 % of Al by weight and 0.02 to 1 % of REM, which is one or more kinds of substances selected from the group consisting of La, Y and Ce. Moreover, 15 to 21 % of Cr by weight, 57 to 77 % of Ni by weight and the remainder of Fe may be used. Such metal may contain obligatory components as other composition components.

Such high-temperature heat-resistant metallic fibers, which have heat-generating properties, are manufactured by a machining method, such as a drawing method, a melt spinning method, a wire cutting method, a coil cutting method, a chatter vibration cutting method, a coating method or a whisker method. However, the method of manufacturing such metallic fibers is not limited thereto. Any method may be used for manufacturing such metallic fibers. The average diameter of the high-temperature heat-resistant metallic fibers is 5 to 50 $\mu$m, more preferably, 10 to 100 $\mu$m.

The high-temperature heat-resistant metallic fibers are formed like a filter. To maintain the shape, the formed filter is sintered. Alternatively, the formed filter is put into a metallic compact. Alternatively, the fibers of the formed filter are mechanically intertwined by being, for instance, needle-punched. The sintering of the filter is performed in a vacuum or in a non-oxidizing atmosphere at temperatures within a range between 800 to 1200 °C for 10 minutes to 10 hours. It is suitable that loads are imposed on the filter during the sintering.

Thereafter, a metallic fiber filter having fibers, on the surface of which alumina coating is formed, is obtained by performing heat treatment on the filter in, for instance, the air or an oxidizing atmosphere at temperatures of 600 to 1100 °C for 1 hour to 20 hours.

The expression "filter surface" designates a portion of the filter, in which the depth in a direction perpendicular to and from the outer surface of the filter ranges from 0 to 300 $\mu$m, preferably, 0 to 150 $\mu$m, and more preferably, 0 to 50 $\mu$m.

Solvent needed for preparing the slurry includes water and all organic solvents such as methanol, ethanol, toluene and hexane. However, the solvent for preparing the slurry is not limited thereto. Any liquid may be used as the solvent.

Material of the catalyst carrier is not limited to a specific one. However, for the material of the catalyst carrier, at least one of alumina, silica, zirconia, titania, zeolites such as ZSM-5, USY, SAPO, zeolite Y and MOR, and silica-alumina, alumina-zirconia, alumina-titania, silica-titania, silica-zirconia and titania-zirconia is desirable. Among these, titania and zirconia and the like are preferably used.

The particle diameter of such carrier particles is, preferably, 0.01 to 20 m, and more preferably, 0.1 to 10 $\mu$m.

The reasons are as follows. First, in the case that the particle diameter of the catalyst carrier particles is less than 0.01 $\mu$m, it is extremely difficult to manufacture such catalyst carrier particles. Moreover, in the case that the particle diameter of the catalyst carrier particles exceeds 20 $\mu$m, the pores of the metallic porous element are clogged, and the catalyst carrier is liable to peel off the filter.

Catalytic active metallic components to be supported on the catalyst carrier are at least one kind of substance selected from the group consisting of Pt, Pd, Cu, K, Rb, Cs, Mo, Cr, Mn, Rh, Ag, Ba, Ca, Zr, Co, Fe, La and Ce. Among these substances, Pt, Pd, Rh, Cu, K, Mo, Mn, Fe and Ce are used as more preferable catalytic active metallic components. More preferably, Cu, K and Mo are used.

The loading of these metals or metallic components contained in these metal oxides is, preferably, within a range between 0.01 to 2 g per gram of the catalyst carrier, and more preferably, between 0.05 and 1.0 g.

The reasons are as follows. First, in the case that the metallic component loading is less than 0.01 g per gram of the catalyst carrier, there is the fear that most of catalysts do not become active. Conversely, in the case that the metallic component loading exceeds 2.0 g per gram of the catalyst carrier, the catalyst particles flocculate when the catalyst is supported. Then, when the size of the mass of the catalyst particles is increased, there is the fear that the clogging of the tip end portion of the spray nozzle occurs.

Preferably, the loading of the catalyst particles on the metallic fiber filter is not more than 150 mg per gram of the metallic fiber filter, and more preferably, equal to or less than 80 mg.

This is because the clogging of the pores of the filter occurs if the loading exceeds 150 mg.

Preferably, the concentration of the catalyst in the entire catalyst slurry is 0.1 to 50 wt%, and more preferably, 1 to 30 wt%. In the case that the concentration of the catalyst is less than 0.1 wt%, an amount of the slurry to be sprayed to the filter is too much, so that the surface of the filter is covered with the solvent. Thus, the catalyst is difficult to adhere to the surface of the filter. Conversely, in the case that the concentration of the catalyst exceeds 50 wt%, the viscosity of the slurry increases. Thus, the tip end portion of the nozzle is clogged.

The catalyst slurry is prepared by setting the concentration of the catalyst in the solvent in such a manner as to be within the aforementioned range, and then putting such a mixture into a pot of a ball mill, and subsequently, stirring and grinding the mixture for a time between 24 to 48 hours.

Either of spray nozzles of the single fluid nozzle hole type and the two fluid nozzle hole type may be used as the spray nozzle for spraying the catalyst to the metallic fiber filter and for coating the filter. Preferably, a spray nozzle of the two fluid nozzle hole type is used. Further, preferably, the diameter of the nozzle hole thereof is equal to or less than 2 mm. More preferably, the diameter thereof is equal to or less than 0.5 mm.

If the diameter of the nozzle hole exceeds 2 mm, the diameter of the sprayed particles becomes too large. Thus, the pores of the filter are clogged.

Moreover, it is preferable that the injection pressure is within a range between 1 kg/cm$^2$ and 30 kg/cm$^2$. The reasons are as follows. Namely, if the injection pressure is less than 1 kg/cm$^2$, the diameter of the sprayed particles becomes too large. Conversely, if the injection pressure exceeds 30 kg/cm$^2$, the kinetic energy of the sprayed particles becomes too high. Thus, even when the sprayed particles impinges upon the filter, the particles are hard to support thereon.

After the catalyst are supported on the metallic fiber filter under the aforementioned conditions, the filter and the catalyst are dried at temperatures between 100 °C and 200 °C. Thereafter, the filter and the catalyst are burned at temperatures between 300 °C and 1000 °C. Thus, the catalyst supporting filter is produced.

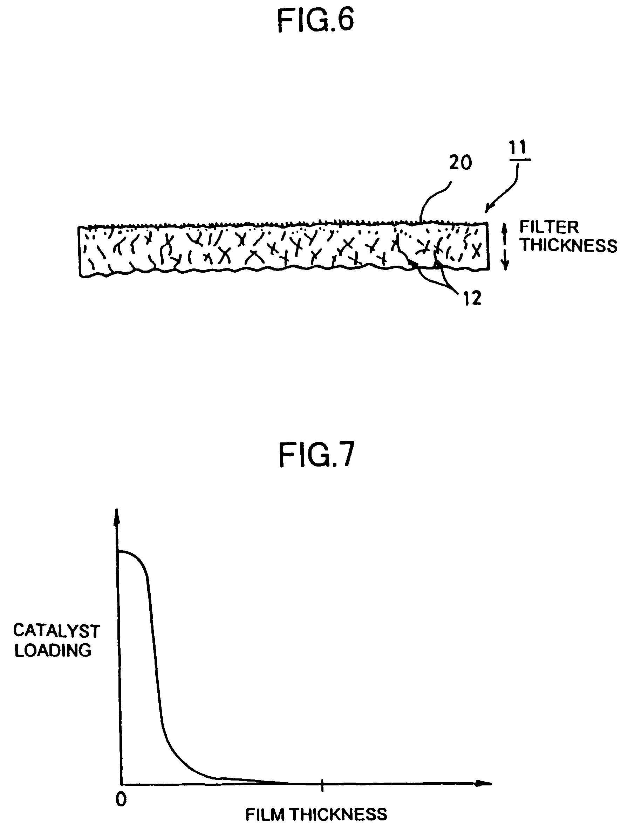

Incidentally, Fig. 6 is a schematic sectional view of the catalyst supporting filter 11 constituted so that a catalyst 20 is supported on the metallic fiber filter consisting of the metallic fibers 12. This figure shows a state of the filter in which the catalyst 20 is supported only on the filter surface (the thickness in a direction perpendicular to and from the outer surface of the filter ranges from 0 to 300 μm, preferably, 0 to 150 μm, and more preferably, 0 to 50 μm).

Further, Fig. 7 is a graph showing the relation between the distance in the direction of depth of the catalyst supporting filter and the catalyst loading, namely, showing the distribution of the catalyst loading in the direction of depth of the catalyst supporting filter, that is, showing that a large amount of the catalyst is supported on the filter surface and that the deeper a place is in the filter, the smaller the catalyst loading corresponding to the place is.

The exhaust gas purifying catalyst supporting filter described above has a constitution in which the catalyst is supported only on the filter surface. Thus, the pressure loss of the filter is restrained and the waste of catalysts is prevented. Consequently, this catalyst supporting filter is economical.

Further, according to the method of manufacturing the aforementioned exhaust gas purifying catalyst supporting filter, the slurry containing the catalyst is sprayed to the metallic fiber filter. Thereafter, the metallic fiber filter is dried and burned. Thus, the control of the catalyst loading on the filter is facilitated, in comparison with the washcoat method, the sol-gel method and the impregnation method. Moreover, the catalyst can be supported only on the surface of the filter in a short time.

As a result, excessive catalyst is prevented from being supported in the pores of the filter. The pressure loss of the filter is reduced. Moreover, the waste of the catalyst is prevented.

Furthermore, a time required to manufacture the catalyst supporting filter is reduced. The productivity thereof is improved.

Incidentally, the metal fiber filter obtained by forming, sintering and heat-treating the metallic fibers has a large surface area. The shape of the metallic fiber filter is variously changed. Furthermore, an alumina coating is formed on the metallic fiber surface. Thus, there is advantages that the catalyst is easily supported on the filter surface and is hard to peel off the filter.

Incidentally, an example of the comparison between an actual example (namely, an invention) of the catalyst supporting filter of the present invention and an actual example (namely, a comparative article) of the conventional catalyst supporting filter will be described below.

Invention 1

A metallic fiber filter was manufactured by gathering together metallic fibers, each of which was produced by the coil cutting method from stainless steel consisting of 20.02 % of Cr, 4.9 % of Al, 0.08 % of La and the remainder of Fe and obligatory impurities and had a section area of 50 x10 μm and was cut to 70 mm, like a filter, so that the weight thereof in METSUKE, namely, in grams per square meters was 1200 g/m$^2$.

Aqueous solution containing 3.8 g of copper nitrate trihydrate, another solution containing 2.6 g of potassium nitrate and still another solution containing 1.8 g of ammonium molybdate tetrahydrate were serially impregnated into and supported by 7 g of commercially available titania particles. Then, such titania particles were dried at a temperature of 110 C for 1 hour. Subsequently, 10 g of a catalyst was obtained by burning and then drying and again burning the titania particles at a temperature of 500 °C for 2 hours. This catalyst was mixed into 90 ml of an ethanol solution having a purity of 99 %. Then, a catalyst slurry was prepared by grinding and mixing this mixture solution by the ball mill for 24 hours. This slurry was sprayed to a 3 cm square filter, which was obtained by cutting the previously mademetallic fiber filter, for 20 seconds from a place positioned at a distance of 15 cm away from the filter by using a spray nozzle of the two fluid nozzle hole type, which had a nozzle hole of 0.4 mm in diameter, at an air pressure of 3 kg/cm$^2$. Subsequently, this filter was dried at a temperature of 110 °C for 1 hour. Thereafter, the dried filter was burned at a temperature of 500 °C for 2 hours. Thus, an exhaust gas purifying catalyst supporting filter (Sample A) was manufactured.

Comparative Article 1

Aqueous solution containing 3.8 g of copper nitrate trihydrate, another solution containing 2.6 g of potassium nitrate and still another solution containing 1.8 g of ammonium molybdate tetrahydrate were serially impregnated into and supported by 7 g of commercially available titania particles. Then, such titania particles were dried at a temperature of 110 C for 1 hour. Subsequently, 10 g of a catalyst was obtained by burning and then drying and again burning the titania particles at a temperature of 500 C for 2 hours. This catalyst was mixed into 90 ml of an ethanol solution having a purity of 99 %. Then, a catalyst slurry was prepared by grinding and mixing this mixture solution by the ball mill for 24 hours. This slurry was washcoated to a 5 cm square filter, which was similar to the filter used in Invention 1, from a place positioned at a distance of 15 cm away from the filter by using a spray nozzle of the two fluid nozzle hole type, which had a nozzle hole of 0.4 mm in diameter, at an air pressure of 3 kg/cm$^2$. Subsequently, this filter was dried at a temperature of 110 °C for 1 hour. Thereafter, the dried filter was burned at a temperature of 500 °C for 2 hours. This process was repeatedly performed until 70 mg of the catalyst particles of 70 mg per gram of the metallic fiber filter was supported. Thus, an exhaust gas purifying catalyst supporting filter (Sample B) was produced.

Further, the evaluation test of the catalyst supporting filter in a diesel engine having 265 cc displacement was conducted by using Sample A of the catalyst supporting filter of the present invention, Sample B of the conventional catalyst supporting filter and Sample C of a metallic fiber filter in which no catalysts were supported.

Initial pressure loss of the filter was measured under the conditions that an engine speed was 1500 rpm and a load was 75 %. Further, the collection efficiency in collecting carbon fine particles contained in exhaust gas was measured by Bosch-type smoke meter.

The collection efficiency in collecting carbon-based fine particles was obtained by converting Bosch reflectance obtained at the front and rear sides of the filter into the soot concentration and using the following equation (1):

$$\text{Carbon-based Fine Particle Concentration Efficiency (\%)} =$$

$$[\text{Inlet Carbon Fine Particle Concentration (mg/Nm}^3) - \text{Outlet Carbon Fine Particle Concentration (mg/Nm}^3) \quad (1)$$

$$/\text{Inlet Carbon Fine Particle Concentration (mg/Nm}^3)] \times 100$$

Results of the herein-above-mentioned evaluation experiment are shown in TABLE 2 listed below.

TABLE 2

| (Evaluation by Actual Engine Exhaust Gas) | | | | | |
|---|---|---|---|---|---|
| | Catalyst Loading (mg/g Filter) | Pressure Loss (mmH2O) | NO. of Times of Catalyst Support Step | Time Taken to Perform Catalyst Support (hr) | Carbon-based Fine Particles Collection Efficiency % |
| A | 69 | 20 | 1 | 8.5 | 55 |
| B | 70 | 25 | 5 | 17.5 | 56 |
| C | 0 | 18 | 0 | 0 | 48 |

As is conjectured from the results shown in such TABLE 2, the pressure loss of the filter can be reduced and the time taken to manufacture the filter can be considerably decreased by causing the filter to support the catalyst according to the spray support method of the present invention, in comparison with the catalyst supporting filter manufactured by the conventional method. Further, the carbon-based fine particle collection efficiency of the catalyst supporting filter of the present invention is nearly equal to that of the conventional catalyst supporting filter.

Furthermore, the inventors of the present invention tested the catalyst's peel property of peeling off the filter.

Catalyst was supported on a commercially available wire gauge under the same conditions as in the case of the aforementioned Invention 1. Then, while this filter (Sample M) using the wire gauge and the filter of Invention 1 (Sample A) were held in an electric furnace, a thermal cycle test was conducted by change the temperature in the furnace between 300 C and 600 C every ten minutes. The peeling rate of the catalyst peeled from the filter was calculated on the basis of the initial catalyst loading on the filter.

When this test was conducted, a process of this test comprised a step of quickly cooling the filter heated at 600 °C to 300 °C. This step was performed by directly blowing pressure air against the filter surface by means of a pressure air injecting device installed in the furnace. Such a thermal cycle test as described above is repeatedly performed ten times.

Results of this test are shown in TABLE 3 listed below.

TABLE 3

| Filter | Catalyst Loading (mg/g Filter) | Peeling Amount (mg/g Filter) | Peeling Rate (%) |
|---|---|---|---|
| A Metallic Fiber Filter | 69 | 1.8 | 2.6 |
| M Wire Gauge | 70 | 21 | 30 |

As is apparent from such results, the metallic fiber filter has a larger surface area and a more complex surface shape, in comparison with the commercial available wire gauge. Additionally, in this metallic fiber filter, an alumina coating is formed on the fiber surface by heat-treating. Thus, in the case of the metallic fiber filter, the catalyst is difficult to peel off the filter.

Next, a method of manufacturing an exhaust gas purifying filter of the self-heating type according to the fourth aspect of the present invention and a method of manufacturing an exhaust gas purifying catalyst element of the self-heating type according to the fifth aspect of the present invention will be described hereinbelow.

These aspects are the same as the case for the aforementioned exhaust gas purifying catalyst element in the respects of the average pore diameter, material and manufacturing method of the metallic porous element, the provision of the electrodes at the free ends of the metallic porous element for supplying electric power thereto, the material of the electrodes, the coating of the surfaces of the metallic porous element with one or more kinds of oxides, and the method of coating the surface of the metallic porous element with these oxides.

Incidentally, in the case of performing the coating of the metallic porous element with the aforementioned oxides, the aforementioned step of providing the electrodes at the free ends of the metallic porous element is performed prior to the step of coating the metallic element.

Further, the method suited to the manufacturing of the metallic porous element of the present invention is the same as the manufacturing method of the aforementioned exhaust gas purifying catalyst element.

Moreover, in these aspects of the present invention, the aforementioned metallic porous element is corrugated simultaneously with the sintering thereof or after the sintering thereof.

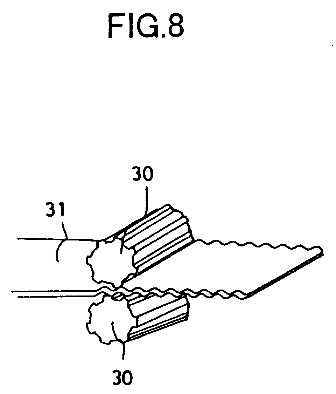

In this case, the method of corrugating a high-temperature heat-resistant metallic porous element 31 or forming an uneven surface thereof by making this element pass through between a pair of gears 30 as shown in Fig. 8, and the method of fitting this element into a mold and sintering this element under a load can be used. When the gears 30 are used, gears, whose module is 1.5, are employed as the gears 30.

Thus, the mechanical strength in the vertical direction of the metallic porous element is increased by corrugating the surface of this element or forming an uneven surface thereof simultaneously with or after the sintering thereof. When the temperature is increased, the corrugated or uneven portion of the surface thereof absorbs the "elongation". Consequently, the strength of the element is enhanced. Moreover, the surface area per unit volume of the apparatus increases.

The exhaust gas purifying catalyst element of the present invention can be obtained by making the aforementioned metallic porous element support the catalyst.

This supporting of the catalyst is similar to that in the aforementioned exhaust gas purifying catalyst element.

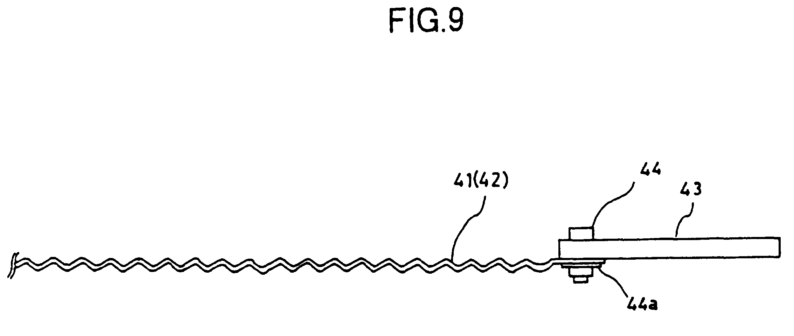

An exhaust gas purifying filter 41 and an exhaust gas purifying catalyst element 42 according to these aspects of the present invention are adapted to uniformly generate heat themselves by mounting an electrode 43 at a free end of the metallic porous element with a combination 44 of a bolt and a nut, and with a washer 44A as illustrated in Fig. 9, and then supplying electricity from a power supply through this electrode 43 directly to the filter 41 and the catalyst element 42.

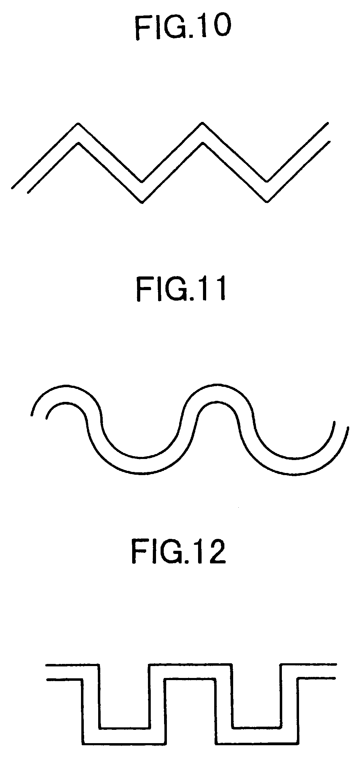

Incidentally, Fig. 9 shows an example of the corrugated surface of the metallic porous element, which is formed by corrugating the surface of this element like a series of waves propagating in a predetermined direction. However, the corrugated surface of the element according to the present invention includes the shapes of the surface of the element as illustrated in Figs. 10 to 12.

Examples of practical constitutions of the exhaust gas purifying filter and the exhaust gas purifying catalyst element according to the present invention, and examples of practical constitutions of conventional ones (Comparative Examples) will be described hereinbelow.

Example 1

A high-temperature heat-resistant metallic fiber filter was manufactured by gathering together high-temperature heat-resistant metallic fibers, each of which was manufactured by the coil cutting method from high-temperature heat-resistant metal consisting of 20.02 % of Cr, 4.9 % of Al, 0.08 % of La and the remainder of Fe and obligatory impurities and had a section area of 50 x10 $\mu$m and was cut to 70 mm, like a filter, so that the porosity thereof was 85 %.

After this high-temperature heat-resistant metallic porous element was formed into a shape, whose width and length were 25 mm and 800 mm, respectively, and was then sintered in an inactive atmosphere at a temperature of 1100 °C for 2 hours, the surface of this element was corrugated by using gears whose module was 1.5. Subsequently, the electrodes made of stainless steel were mounted at both ends of this element. Then, such an element was heat-treated in an air atmosphere at a temperature of 1000 °C for 6 hours, so that alumina was precipitated on the surface of the element. Thus, an exhaust gas purifying filter of the self-heating type was obtained.

Example 2

Aqueous solution containing 3.8 g of copper nitrate trihydrate, another solution containing 2.6 g of potassium nitrate and still another solution containing 1.8 g of ammonium molybdate tetrahydrate were serially impregnated into and supported by titania particles each having a particle diameter of 0.1 $\mu$m. Then, catalyst was prepared by drying this mixed solution at a temperature of 110 °C and burning this mixture at a temperature of 500 °C. Subsequently, 10 g of this catalyst was mixed into 90 ml of an ethanol solution having a purity of 99 %. Thereafter, a catalyst slurry was prepared by grinding and mixing this mixture by a ball mill for 24 hours. This slurry was washcoated on the exhaust gas purifying filter of the self-heating type manufactured similarly as in the case of this Example 1. Subsequently, this slurry was dried at a temperature of 110 °C for 1 hour. Thereafter, the washcoated slurry was burned at a temperature of 500 °C for 2 hours. This process was repeatedly performed until 50 mg of the catalyst per gram of the filter was supported. Thus, an exhaust gas purifying catalyst element of the self-heating type was obtained.

Comparative Example 1 according to Prior Art

High-temperature heat-resistant metallic porous element manufactured by the techniques used in the above Examples 1 and 2 was first formed into a shape, whose width and length were 25 mm and 800 mm, respectively. Thereafter, this metallic porous element was sintered in an inactive atmosphere at a temperature of 1100 °C for 2 hours, and then heat-treated in an air atmosphere at a temperature of 1000 °C for 6 hours. Subsequently, the electrodes made of stainless steel were mounted at both ends of this element. Thus, a flat plate like exhaust gas purifying filter was obtained.

Comparative Example 2 according to Prior Art

High-temperature heat-resistant metallic porous element manufactured by the techniques used in the above Examples 1 and 2 was first formed into a shape, whose width and length were 250 mm and 800 mm, respectively. Thereafter, this metallic porous element was sintered in an inactive atmosphere at a temperature of 1100 °C for 2 hours, and then heat-treated in an air atmosphere at a temperature of 1000 °C for 6 hours. Subsequently, the electrodes made of stainless steel were mounted at both ends of this element. Thus, a flat plate like exhaust gas purifying filter was obtained.

Then, 7 g of titania particles were mixed into 200 ml of an aqueous solution prepared from 3.8 g of copper nitrate trihydrate, 2.6 g of potassium nitrate and 1.8 g of ammonium molybdate tetrahydrate. Subsequently, moisture was vaporized by stirring this mixed solution. Catalyst was prepared by drying this mixed solution at a temperature of 110 °C and burning this mixture at a temperature of 500 °C. Thereafter, 10 g of this catalyst was mixed into 90 ml of an ethanol solution having a purity of 99 %. Then, a catalyst slurry was prepared by grinding and mixing this mixture by a ball mill for 24 hours. This slurry was washcoated on the filter. Subsequently, this slurry was dried at a temperature of 110 °C for 1 hour. Thereafter, the washcoated slurry was burned at a temperature of 500 °C for 2 hours. This process was repeatedly performed until 50 mg of the catalyst per gram of the filter was supported. Thus, a flat plate like catalyst element was obtained.

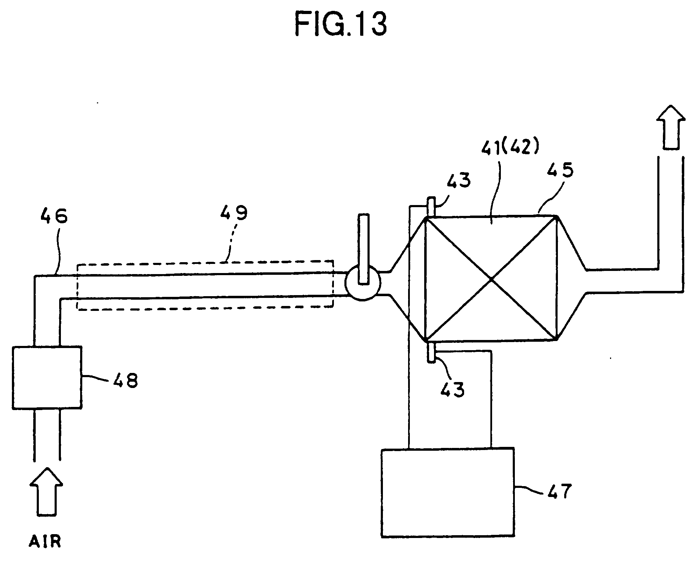

Then, the inventors of the present invention place the exhaust gas purifying filter 41 of Example 1, the exhaust gas purifying catalyst element 42 of Example 2, the exhaust gas purifying filter 41 of Comparative Example 1, and the exhaust gas purifying catalyst element 42 of Comparative Example 2 in different containers (or housings) 45 provided midway in an air pipe 46 through which air flows, respectively, as illustrated in Fig. 13. While passing the air heated to 300 °C through the housings 45 at a rate of 10 Nm³/h, 1200 W of electric power was applied between the electrodes from a power supply 47 for 2 minutes and subsequently, the supply of the electric power was stopped for 2 minutes. Such an operation is repeatedly performed. Incidentally, in Fig. 13, reference numeral 48 denotes a flow meter; and 49 a heater for heating air to a predetermined temperature.

In the exhaust gas purifying filter 41 of Example 1 and the exhaust gas purifying catalyst element 42 of Example 2, no deformation of the metallic porous element was caused even if such an operation was repeatedly performed 1000 times. Conversely, in both of the filter 41 of Comparative Example 1 and the catalyst element 42 of Comparative Example 2, deformation occurred. Further, a gas leakage from between the housing 45 and the filter or catalyst element happened.

Incidentally, in the aforementioned embodiments of the present invention, the metallic porous elements were corrugated simultaneously with or after the sintering thereof. However, the metallic porous elements may have a simple flat plate like shape (as in the case of the filter and the catalyst element according to the sixth and seventh aspects of the present invention).

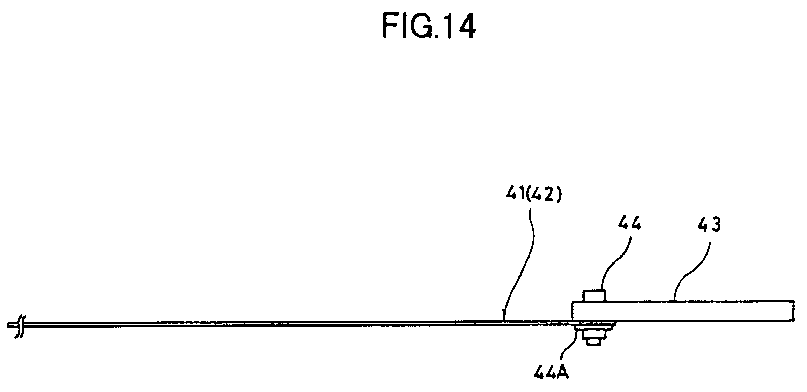

In this case, the exhaust gas purifying filter 41 and the exhaust gas purifying catalyst element 42 are adapted to uniformly generate heat themselves by mounting an electrode 43 at a free end of the metallic porous element with a combination 44 of a bolt and a nut, and with a washer 44A as illustrated in Fig. 14, and then supplying thereto electricity from a power supply through this electrode 43 directly to the filter 41 and the catalyst element 42.

Such an exhaust gas purifying filter and an exhaust gas purifying catalyst element can be uniformly energized and completely oxidize or burn the collected objects in the case that the filter and catalyst element are used as filters for collecting objects to be oxidized or burned.

Further, the inventors of the present invention place the exhaust gas purifying filter of Example 1, the exhaust gas purifying catalyst element of Example 2, the exhaust gas purifying filter of Comparative Example 1, and the exhaust gas purifying catalyst element of Comparative Example 2 in different containers (or housings) 45 provided midway in an air pipe 46 through which air flows, respectively, as illustrated in Fig. 13. While passing the air heated to 300 °C through the housings 45 at a rate of 10 Nm³/h, 1000 W of electric power was applied between the electrodes from the power supply 47 for 2 minutes and subsequently, the supply of the electric power was stopped for 2 minutes. Such an operation is repeatedly performed.

In the exhaust gas purifying filter of Example 1 and the exhaust gas purifying catalyst element of Example 2, the disconnection of the filter and the like did not occur even if such an operation was repeatedly performed 1000 times. Conversely, in the conventional filter and the conventional catalyst element, the disconnection of the filter and the breakage of the catalyst element were caused by repeating the aforementioned operation fifteen times and twenty times, respectively.

Next, the constitution of the exhaust gas purifying apparatus according to the eighth aspect of the present invention will be described hereunder.

A high-temperature heat-resistant metallic porous filter of the self-heating type to be used in the exhaust gas purifying apparatus according to this aspect of the present invention is manufactured by performing a method similar to the method of manufacturing the aforementioned exhaust gas purifying filter in such a manner as to have a similar structure, and by mounting electrodes at the free ends of a metallic porous element having resistance heat-generating properties. Further, by causing this high-temperature heat-resistant metallic porous filter of the self-heating type to support a catalyst, a high-temperature heat-resistant catalyst supporting metallic porous filter of the self-heating type having a similar structure is manufactured with a method similar to the method of manufacturing the aforementioned exhaust gas purifying filter.

Thus, an exhaust gas purifying apparatus is obtained by disposing a particulate collecting device midway in an exhaust gas passage having an exhaust gas inlet portion and an exhaust gas outlet portion. This particulate collecting device is constituted by one or more parallel treating units each having at least one high-temperature heat-resistant metallic porous filter of the self-heating type or one high-temperature heat-resistant catalyst supporting metallic porous filter of the self-heating type supporting a catalyst, which is provided with electrodes at free ends thereof and adapted to generate heat when being supplied with electricity.

When the high-temperature heat-resistant metallic porous filter of the self-heating type or one high-temperature heat-resistant catalyst supporting metallic porous element of the self-heating type is installed in one housing, one high-temperature heat-resistant metallic porous filter of the self-heating type or one high-temperature heat-resistant catalyst supporting metallic porous filter of the self-heating type may be provided in a housing. Alternatively, a plurality of high-temperature heat-resistant metallic porous filters of the self-heating type or high-temperature heat-resistant catalyst supporting metallic porous filters of the self-heating type may be provided in a housing.

Further, when high-temperature heat-resistant metallic porous filters of the self-heating type or high-temperature heat-resistant catalyst supporting metallic porous filters of the self-heating type are provided in the housings of the treating units, there is no limit to the shapes of these filters.

The exhaust gas purifying apparatus according to this aspect of the present invention consists of the particulate collecting device constituted by the aforementioned treating units, and a power supply, various kinds of sensors serving as diverse kinds of detecting means, and energization control means.

When particulates contained in exhaust gas of a diesel engine are treated by using this exhaust gas purifying apparatus according to the present invention, the particulates are captured by the high-temperature heat-resistant metallic porous filter of the self-heating type or the high-temperature heat-resistant catalyst supporting metallic porous filter of the self-heating type. Further, the differential pressure produced between the pressures respectively obtained at the exhaust gas inlet portion and the exhaust gas outlet portion of the collecting device increases. At that time, the particulates collected by supplying electricity to the filter itself directly from the electrode, which is mounted at one of the free ends of the high-temperature heat-resistant metallic porous filter of the self-heating type or the high-temperature heat-resistant catalyst supporting metallic porous filter of the self-heating type, are burned and eliminated. At that time, two or more of the high-temperature heat-resistant metallic porous filters of the self-heating type or two or more of the high-temperature heat-resistant catalyst supporting metallic porous filters of the self-heating type can be simultaneously energized.

Consequently, the collected particulates are treated without supplying a large amount of electric power, which would be fed to the entire filter. Further, because the filter or the catalyst element itself is energized, the filter or the catalyst element is caused to uniformly generate heat. Thus, no cinders from the burning of the particulates are obtained. Moreover, the durability of the filter is enhanced. Furthermore, if the catalyst is supported, the temperature at which the catalyst is burned and eliminated, can be lowered. Consequently, the amount of electric power supplied to the filter can be reduced still more.

Further, the high-temperature heat-resistant metallic porous filter of the self-heating type can be designed by arbitrarily changing the pore diameter and the porosity thereof so that the clogging of the filter due to ash does not occur.

According to the apparatus of the present invention, the energization-regeneration time of the filter is detected, to thereby control the energization of the filter.

In this case, the apparatus is provided with at least one of differential pressure detecting means for detecting a differential pressure between the pressures of the exhaust gas obtained respectively at the aforesaid exhaust gas inlet and outlet portions, temperature detecting means for detecting a surface temperature of the aforesaid filter, collection time measuring means for measuring a time elapsed since collection is started by the aforesaid collecting device, and regeneration time measuring means for measuring a time elapsed since regeneration is started, which serve as means for detecting an energization-regeneration time of the aforesaid filter, and the energization control means for controlling the aforesaid energizing device based on signals output from at least one of the aforesaid differential pressure detecting means, temperature detecting means, collection time measuring means, and regeneration time measuring means, in such a manner that the filters are sequentially energized when the filters are regenerated.

The energizing device may be a device adapted to supply a fixed amount of electric power. Alternatively, the energizing device may be a device to variably control an amount of electric power to be supplied, according to PI or PID control by using the surface temperature of the filter or the temperature of exhaust gas at the exhaust gas inlet or outlet portion.

At that time, the apparatus may adopt a method of setting the maximum amount of electric power to be supplied and limiting the amount of electric power to be supplied when the filter is energized.

Incidentally, the concrete constitution for detecting the energization-regeneration time of the aforesaid filter, is as follows.

Namely, the start time of the energization-regeneration of the filter is detected at one of the following moments: a moment at which the aforesaid differential pressure detecting means detects that the differential pressure between the pressures of the exhaust gas respectively obtained at the aforementioned exhaust gas inlet and outlet portions becomes equal to or greater than a predetermined value; a moment at which the aforesaid time measuring means detects that a time elapsed since the start of the collection reaches a predetermined value; and a moment at which the aforementioned differential pressure detecting means detects that the differential pressure between the pressures of the exhaust gas respectively obtained at the aforementioned exhaust gas inlet and outlet portions becomes equal to or greater than a predetermined value or the aforesaid time measuring means detects that a time elapsed since the start of the collection reaches a predetermined value.

Further, the termination time of the energization-regeneration of the filter is detected at one of the following moments: a moment at which the aforesaid temperature detecting means detects that the surface temperature of the filter becomes equal to or greater than a predetermined value; a moment at which the aforesaid regeneration time measuring means detects that a time elapsed since the start of the regeneration reaches a predetermined value; and a moment at which the aforesaid temperature detecting means detects that the surface temperature of the filter becomes equal to or greater than a predetermined value or the aforesaid regeneration time measuring means detects that a time elapsed since the start of the regeneration reaches a predetermined value.

Furthermore, a plurality of pieces, into which the high-temperature heat-resistant metallic porous filter of the self-heating type or the high-temperature heat-resistant catalyst supporting metallic porous filter of the self-heating type is divided, may be sequentially energized since the start of the regeneration. Alternatively, the following step may be repeatedly performed. Namely, upon completion of the regeneration of one of the plurality of the high-temperature heat-resistant metallic porous filters of the self-heating type or the high-temperature heat-resistant catalyst supporting metallic porous filters of the self-heating type, another of the plurality of the high-temperature heat-resistant metallic porous filters or the high-temperature heat-resistant catalyst supporting metallic porous filters may be regenerated at a moment at which it is detected again that the differential pressure produced across the apparatus becomes equal to or greater than a predetermined value or that a predetermined time has been elapsed.

The exhaust gas purifying apparatus according to the present invention directly energizes the high-temperature heat-resistant metallic porous filters of the self-heating type or the high-temperature heat-resistant catalyst supporting metallic porous filters of the self-heating type, without utilizing the propagating combustion caused owing to the combustion of particulates. Thus, the particulates are burned and eliminated by heating the filter directly and uniformly. Consequently, the regeneration can be started without being affected by an amount of the collected particulates.

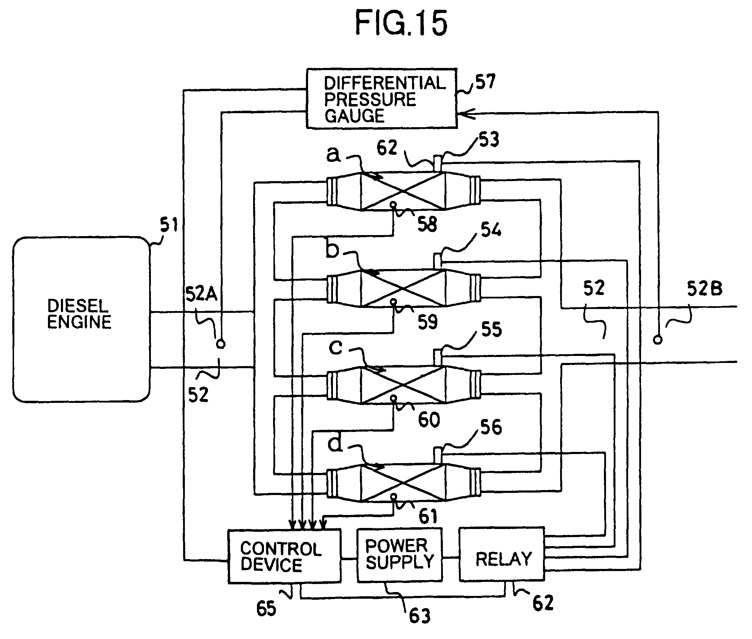

Referring now to Fig. 15, there is shown an embodiment of the exhaust gas purifying apparatus according to the sixth aspect of the present invention.

Incidentally, an exhaust gas purifying apparatus according to the present invention is not limited to this embodiment.

In this figure, reference numeral 51 designates a diesel engine; 52 an exhaust gas pipe; 53 to 56 treating units each provided in parallel with the exhaust gas pipe 52; 57 a differential pressure gauge for detecting a differential pressure between the pressures of the exhaust gas obtained at an exhaust gas inlet portion 52A and an exhaust gas outlet portion 52B of the exhaust gas pipe 52; 58 to 61 temperature sensors for detecting the surface temperatures of filters a to d respectively provided in the treating units 53 to 56; 62 electrodes mounted at free ends of each of the filters a to a; 63 a power supply; 64 a relay provided between the power supply 63 and each of the electrodes 62; and 65 a control device.

Further, the energizing device according to this aspect of the present invention is constituted by the aforementioned power supply 63. The energization control means according to this aspect of the present invention is constituted by the relay 64 and the control device 65.

Furthermore, the aforesaid control device 65 has a timer function corresponding to the collection time measuring means and the regeneration time measuring means according to this aspect of the present invention.

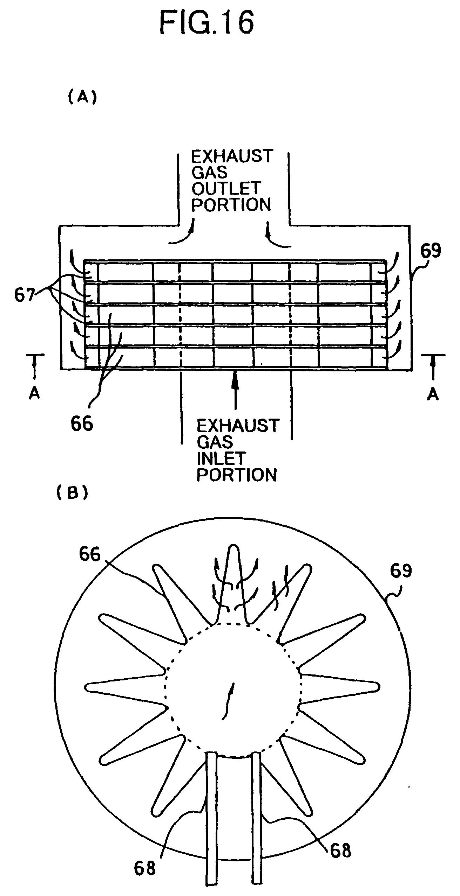

On the other hand, Fig. 16 shows the constitution of the treating units 53 to 56. In this embodiment, a plurality of parallel filters 66 are provided in a housing 69. A packing 67 serving as both of an electric insulating material and a heat insulating material is provided between each of the filters 66. Reference numeral 68 denotes electrodes provided at the free ends of the filters 66.

In the case where the plurality of filters 66 are provided in the treating units 53 to 56 in such a way as to be in parallel with one another, a relay for switching the energization to each of the filters 66 is provided in each of the treating units 53 to 56, in addition to the relay 64 illustrated in Fig. 15.

In Fig. 16, arrows indicate the flows of exhaust gas. As indicated by these arrows, the exhaust gas introduced from the exhaust gas inlet portion flows into the central portion of each of the filters 66 and then passes through the side wall portion of each of the filters 66 and finally reaches the exhaust gas outlet portion.

Next, practical examples of the constitution of each of the high-temperature heat-resistant metallic porous filter of the self-heating type and the high-temperature heat-resistant catalyst supporting metallic porous filter of the self-heating type will be described below.

Example 1

A high-temperature heat-resistant metallic porous element was manufactured by gathering together high-temperature hat-resistant metallic fibers, each of which was manufactured by the coil cutting method from high-temperature heat-resistant metal consisting of 20.02 % of Cr, 4.9 % of Al, 0.08 % of La and the remainder of Fe and obligatory impurities and had a section area of 50 x15 $\mu$m and was cut to 70 mm, like a filter, so that the porosity thereof was 85 %.

After this high-temperature heat-resistant metallic porous element was formed into a shape, whose width and length were 25 mm and 800 mm, respectively, and was then sintered in an inactive atmosphere at a temperature of 1100 °C for 2 hours, the electrodes made of stainless steel were mounted at both ends of this element. Then, such an element was heat-treated in an air atmosphere at a temperature of 1000 °C for 6 hours, so that alumina was precipitated on the surface of the element. Thus, a high-temperature heat-resistant metallic porous filter of the self-heating type was obtained.

A particulate collecting device was formed by placing the four treating units (namely, the treating units 53 to 56 shown in Fig. 15), in each of which one piece of this high-temperature heat-resistant metallic porous filter of the self-heating type was provided, in such a way that the treating units were placed in parallel to the exhaust gas flows.

Further, this particulate collecting device was provided midway in the exhaust gas pipe that constitutes the exhaust gas passage of the diesel engine.

The diesel engine was operated at 70 % constant load. The exhaust gas entraining soot particles, whose concentration measured by Bosch-type smoke meter was 8%, was made to pass through the particulate collecting device.

When 10 minutes passed since the collection of particulates was started, the energization of the high-temperature heat-resistant metallic porous filter a of the self-heating type was commenced by using the energizing device.

At that time, the surface temperature of the high-temperature heat-resistant metallic porous filter a of the self-heating type was measured by the temperature sensor 58 acting as the temperature detecting means. Then, the energization-regeneration of the filter were performed by setting the highest temperature at 650 °C and adjusting the amount of electric power by PI control. When the surface temperature of the filter a reached 600 °C, the energization of this filter was finished. After a lapse of 10 minutes since the start of the energization of the filter a, the energization-regeneration of the filter b of the next treating unit was started, similarly as in the aforementioned case of the filter a. This operation was repeatedly performed on all of the filters a to d in this order.

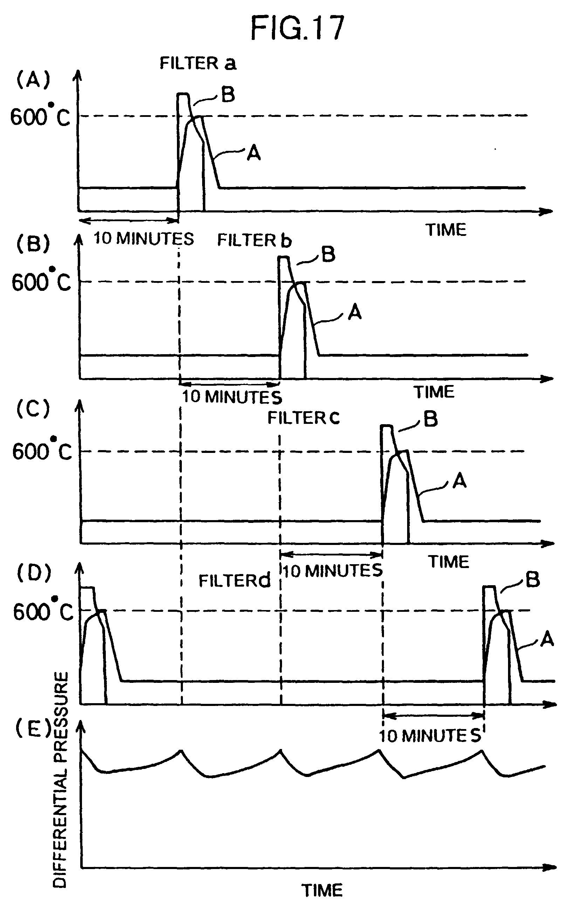

The differential pressure between the pressures of the exhaust gas respectively obtained at the exhaust gas inlet and outlet portions of the particulate collecting device at that time, and the variation of the surface temperature of each of the filters a to d with time were measured (see (A) to (E) of Fig. 17). The soot concentrations in the exhaust gas inlet and outlet portions of the particulate collecting device were measured. Then, an average soot removal rate was calculated therefrom. As a result, the obtained average soot removal rate was 62%.

Incidentally, in each of Fig. 17 and Figs. 18 to 22 (to be described later), the diagram (A) shows the surface temperature of the filter, and the diagram (B) shows the amount of electric power.

Example 2

A high-temperature heat-resistant metallic porous element was manufactured by gathering together high-temperature heat-resistant metallic fibers, each of which was manufactured by the coil cutting method from high-temperature heat-resistant metal consisting of 20.02 % of Cr, 4.9 % of Al, 0.08 % of La and the remainder of Fe and obligatory impurities and had a section area of 50 x15 μm and was cut to 70 mm, like a filter, so that the porosity thereof was 85%.

After this high-temperature heat-resistant metallic porous element was formed into a shape, whose width and length were 25 mm and 800 mm, respectively, and was then sintered in an inactive atmosphere at a temperature of 1100 °C for 2 hours, the electrodes made of stainless steel were mounted at both ends of this element. Then, such an element was heat-treated in an air atmosphere at a temperature of 1000 °C for 6 hours, so that alumina was precipitated on the surface of the element. Thus, a high-temperature heat-resistant metallic porous filter of the self-heating type was obtained.

Then, 7 g of titania particles were mixed into 200 ml of an aqueous solution prepared from 3.8 g of copper nitrate trihydrate, 2.6 g of potassium nitrate and 1.8 g of ammonium molybdate tetrahydrate. Subsequently, moisture was vaporized by stifling this mixed solution. Catalyst was prepared by drying this mixed solution at a temperature of 110 °C and burning this mixture at a temperature of 500 °C.

Then, 10 g of this catalyst was mixed into 90 ml of an ethanol solution having a purity of 99 %. Then, a catalyst slurry was prepared by grinding and mixing this mixture by the ball mill for 24 hours. This slurry was washcoated on the filter. Subsequently, this slurry was dried at a temperature of 110 °C for 1 hour. Thereafter, the washcoated slurry was burned at a temperature of 500 °C for 2 hours. This process was repeatedly performed until 50 mg of the catalyst per gram of the filter was supported. Thus, a high-temperature heat-resistant catalyst supporting metallic porous filter was obtained.

A particulate collecting device was formed by disposing the four treating units (namely, the treating units 53 to 56 shown in Fig. 15), in each of which one piece of this high-temperature heat-resistant catalyst supporting metallic porous filter of the self-heating type was provided, in such a way that the treating units were placed in parallel to the exhaust gas flows.

Further, this particulate collecting device was provided midway in the exhaust gas pipe that constitutes the exhaust gas passage of the diesel engine.

The diesel engine was operated at 70 % constant load. The exhaust gas entraining soot particles, whose concentration measured by Bosch-type smoke meter was 8 %, was made to pass through particulate collecting device.

When 15 minutes passed since the collection of particulates was started, the energization of the high-temperature heat-resistant metallic porous filter a of the self-heating type was commenced by using the energizing device.

At that time, the surface temperature of the high-temperature heat-resistant metallic porous filter a of the self-heating type was measured by the temperature sensor 58 acting as the temperature detecting means. Then, the energization-regeneration of the filter were performed by setting the highest temperature at 650 °C and adjusting the amount of electric power by PI control. When the surface temperature of the filter a reached 600 °C, the energization of this filter was finished. After a lapse of 15 minutes since the start of the energization of the filter a, the energization-regeneration of the filter b was started and conducted, similarly as in the aforementioned case of the filter a. This operation was repeatedly performed on all of the filters a to d in this order.

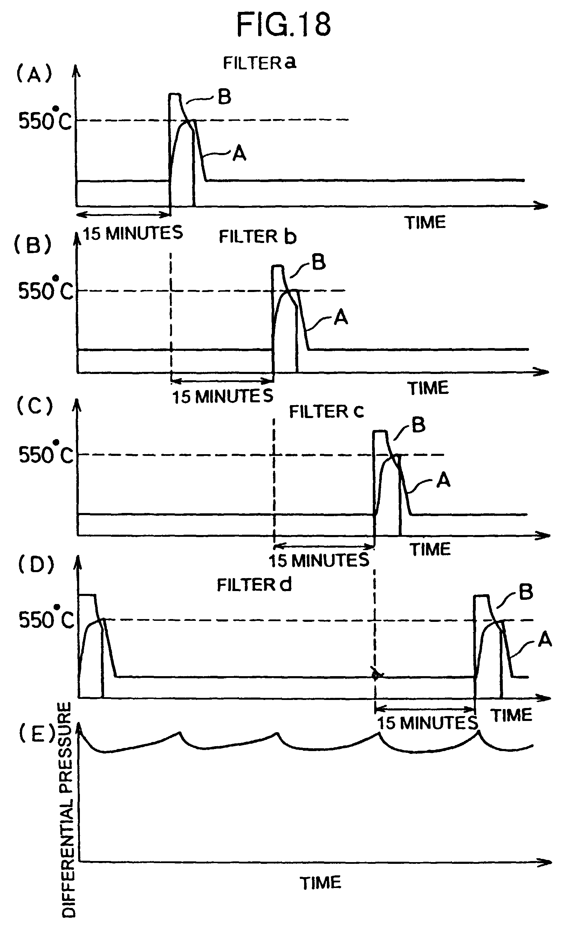

The differential pressure between the pressures of the exhaust gas respectively obtained at the exhaust gas inlet and outlet portions of the particulate collecting device at that time, and the variation of the surface temperature of each of the filters a to d with time were measured (see (A) to (E) of Fig. 18). The soot concentrations in the exhaust gas inlet and outlet portions of the particulate collecting device were measured. Then, an average soot removal rate was calculated therefrom. Consequently, 73 % was obtained as the average soot removal rate.

Example 3

A high-temperature heat-resistant metallic porous element was manufactured by gathering together high-temperature heat-resistant metallic fibers, each of which was manufactured by the coil cutting method from high-temperature heat-resistant metal consisting of 20.02 % of Cr, 4.9 % of Al, 0.08 % of La and the remainder of Fe and obligatory impurities and had a section area of 50 x15 μm and was cut to 70 mm, like a filter, so that the porosity thereof was 85 %.

After this high-temperature heat-resistant metallic porous element was formed into a shape, whose width and length were 25 mm and 800 mm, respectively, and was then sintered in an inactive atmosphere at a temperature of 1100 °C for 2 hours, the electrodes made of stainless steel were mounted at both ends of this element. Then, such an element was heat-treated in an air atmosphere at a temperature of 1000 °C for 6 hours, so that alumina was precipitated on the surface of the element. Thus, a high-temperature heat-resistant metallic porous filter of the self-heating type was obtained.

A particulate collecting device was formed by disposing the four treating units (namely, the treating units 53 to 56 shown in Fig. 15), in each of which one piece of this high-temperature heat-resistant metallic porous filter of the self-heating type was provided, in such a way that the treating units were placed in parallel to the exhaust gas flows.

Further, this particulate collecting device was provided midway in the exhaust gas pipe that constitutes the exhaust gas passage of the diesel engine.

The diesel engine was operated at 70 % constant load. The exhaust gas entraining soot particles, whose concentration measured by Bosch-type smoke meter was 8 %, was made to pass through the particulate collecting device.

When 10 minutes passed since the collection of particulates was started, 1000 W of electric power was supplied to the high-temperature heat-resistant metallic porous filter a of the self-heating type of the treating unit 53 by using the energizing device. At that time, the surface temperature of the high-temperature heat-resistant metallic porous filter a of the self-heating type was measured by the temperature sensor 58 acting as the temperature detecting means. When the surface temperature of the filter a reached 600 °C, the energization of this filter was finished.

After a lapse of 10 minutes since the start of the energization of the filter a the energization-regeneration of the filter b was started and conducted, similarly as in the aforementioned case of the filter a. This operation was repeatedly performed on all of the filters a to d in this order.

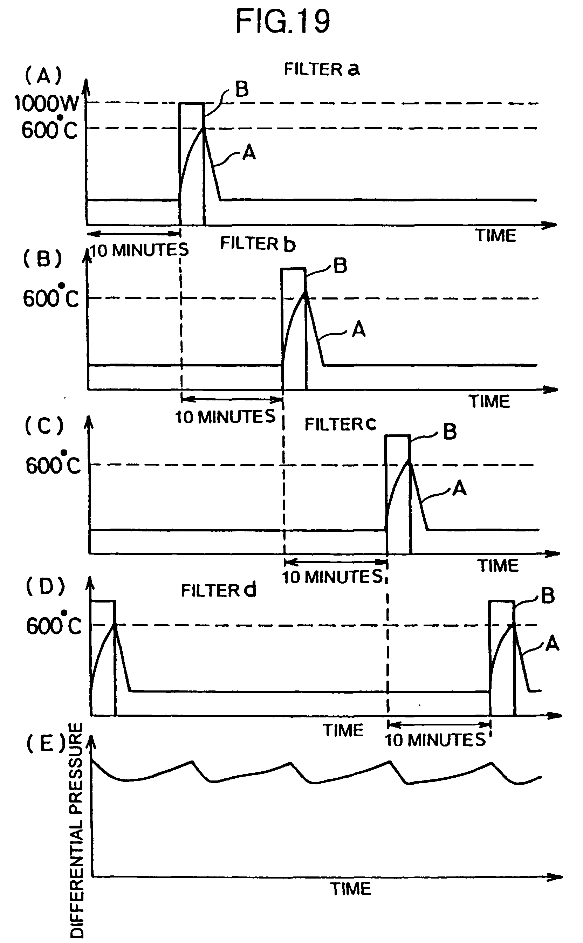

The differential pressure between the pressures of the exhaust gas respectively obtained at the exhaust gas inlet and outlet portions of the particulate collecting device at that time, and the variation of the surface temperature of each of the filters a to d with time were measured (see (A) to (E) of Fig. 19). The soot concentrations in the exhaust gas inlet and outlet portions of the particulate collecting device were measured. Then, an average soot removal rate was calculated therefrom. As a result, the obtained average soot removal rate was 66 %.

Example 4

A high-temperature heat-resistant metallic porous element was manufactured by gathering together high-temperature heat-resistant metallic fibers, each of which was manufactured by the coil cutting method from high-temperature heat-resistant metal consisting of 20.02 % of Cr, 4.9 % of Al, 0.08 % of La and the remainder of Fe and obligatory impurities and had a section area of 50 x15 μm and was cut to 70 mm, like a filter, so that the porosity thereof was 85 %.

After this high-temperature heat-resistant metallic porous element was formed into a shape, whose width and length were 25 mm and 800 mm, respectively, and was then sintered in an inactive atmosphere at a temperature of 1100 °C for 2 hours, the electrodes made of stainless steel were mounted at both ends of this element. Then, such an element was heat-treated in an air atmosphere at a temperature of 1000 °C for 6 hours, so that alumina was precipitated on the surface of the element. Thus, a high-temperature heat-resistant metallic porous filter of the self-heating type was obtained.

A particulate collecting device was formed by placing the four treating units (namely, the treating units 53 to 56 shown in Fig. 15), in each of which one piece of this high-temperature heat-resistant metallic porous filter of the self-heating type was provided, in such a way that the treating units were placed in parallel to the exhaust gas flows.

Further, this particulate collecting device was provided midway in the exhaust gas pipe that constitutes the exhaust gas passage of the diesel engine.

The diesel engine was operated at 70 % constant load. The exhaust gas entraining soot particles, whose concentration measured by Bosch-type smoke meter was 8 %, was made to pass through the particulate collecting device.

When the differential pressure between the pressures of the exhaust gas respectively obtained at the exhaust gas inlet and outlet portions of the particulate collecting device reached 200 mmH$_2$O, the energization of the filter was started.

At that time, the surface temperature of the high-temperature heat-resistant metallic porous filter a of the self-heating type was measured by the temperature sensor 58 acting as the temperature detecting means. Then, the energization-regeneration of the filter were performed by setting the highest temperature at 650 °C and adjusting the amount of electric power by PI control. When the surface temperature of the filter a reached 600 °C, the energization of this filter was finished. Thereafter, when the differential pressure between the pressures of the exhaust gas respectively obtained at the exhaust gas inlet and outlet portions of the particulate collecting device reached 200 mmH$_2$O, the energization-regeneration of the next filter b were started. Then, the regeneration of this filter was conducted, similarly as in the aforementioned case of the filter a. This operation was repeatedly performed on all of the filters a to d in this order.

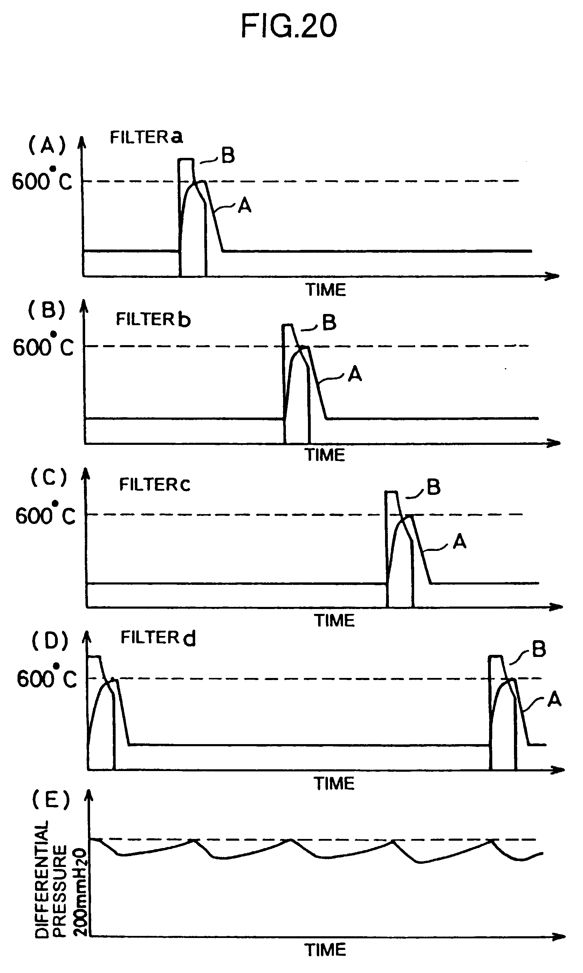

The differential pressure between the pressures of the exhaust gas respectively obtained at the exhaust gas inlet and outlet portions of the particulate collecting device at that time, and the variation of the surface temperature of each of the filters a to d with time were measured (see (A) to (E) of Fig. 20). The soot concentrations in the exhaust gas inlet and outlet portions of the particulate collecting device were measured. Then, an average soot removal rate was calculated therefrom. As a result, the obtained average soot removal rate was 63 %.

Example 5

A high-temperature heat-resistant metallic porous element was manufactured by gathering together high-temperature heat-resistant metallic fibers, each of which was manufactured by the coil cutting method from high-temperature heat-resistant metal consisting of 20.02 % of Cr, 4.9 % of Al, 0.08 % of La and the remainder of Fe and obligatory impurities and had a section area of 50 x15 µm and was cut to 70 mm, like a filter, so that the porosity thereof was 85 %.

After this high-temperature heat-resistant metallic porous element was formed into a shape, whose width and length were 25 mm and 800 mm, respectively, and was then sintered in an inactive atmosphere at a temperature of 1100 °C for 2 hours, the electrodes made of stainless steel were mounted at both ends of this element. Then, such an element was heat-treated in an air atmosphere at a temperature of 1000 °C for 6 hours, so that alumina was precipitated on the surface of the element. Thus, a high-temperature heat-resistant metallic porous filter of the self-heating type was obtained.

A particulate collecting device was formed by placing the four treating units (namely, the treating units 53 to 56 shown in Fig. 15), in each of which one piece of this high-temperature heat-resistant metallic porous filter of the self-heating type was provided, in such a way that the treating units were placed in parallel to the exhaust gas flows.

Further, this particulate collecting device was provided midway in the exhaust gas pipe that constitutes the exhaust gas passage of the diesel engine.

The diesel engine was operated at 70 % constant load. The exhaust gas entraining soot particles, whose concentration measured by Bosch-type smoke meter was 8 %, was made to pass through the particulate collecting device.

When the differential pressure between the pressures of the exhaust gas respectively obtained at the exhaust gas inlet and outlet portions of the particulate collecting device reached 200 mmH$_2$O, 1000 W of electric power was supplied to the high-temperature heat-resistant metallic porous filter a of the self-heating type of the treating unit 53 by using the energizing device. At that time, the surface temperature of the high-temperature heat-resistant metallic porous filter a of the self-heating type was measured by the temperature sensor 58 acting as the temperature detecting means. When the surface temperature of the filter a reached 600 °C, the energization of this filter was finished. Thereafter, when the differential pressure between the pressures of the exhaust gas respectively obtained at the exhaust gas inlet and outlet portions of the particulate collecting device reached 200 mmH$_2$O, the energization-regeneration of the next filter b were started. Then, the regeneration of this filter was conducted, similarly as in the aforementioned case of the filter a. This operation was repeatedly performed on all of the filters a to d in this order.

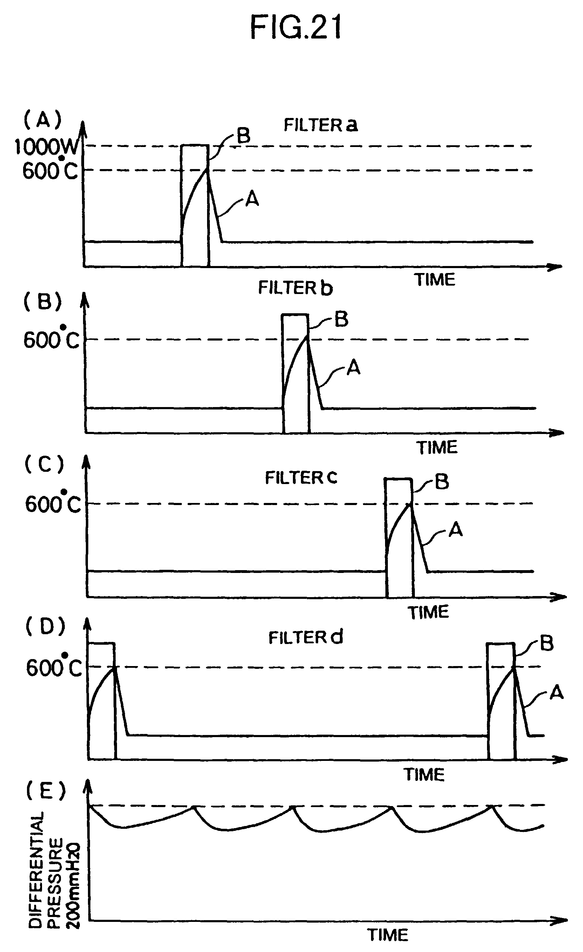

The differential pressure between the pressures of the exhaust gas respectively obtained at the exhaust gas inlet and outlet portions of the particulate collecting device at that time, and the variation of the surface temperature of each of the filters a to d with time were measured (see (A) to (E) of Fig. 21). The soot concentrations in the exhaust gas inlet and outlet portions of the particulate collecting device were measured. Then, an average soot removal rate was calculated therefrom. As a result, the obtained average soot removal rate was 62 %.

Example 6

A high-temperature heat-resistant metallic porous element was manufactured by gathering together high-temperature heat-resistant metallic fibers, each of which was manufactured by the coil cutting method from high-temperature heat-resistant metal consisting of 20.02 % of Cr, 4.9 % of Al, 0.08 % of La and the remainder of Fe and obligatory impurities and had a section area of 50 x15 $\mu$m and was cut to 70 mm, like a filter, so that the porosity thereof was 85 %.

After this high-temperature heat-resistant metallic porous element was formed into a shape, whose width and length were 25 mm and 800 mm, respectively, and was then sintered in an inactive atmosphere at a temperature of 1100 °C for 2 hours, the electrodes made of stainless steel were mounted at both ends of this element. Then, such an element was heat-treated in an air atmosphere at a temperature of 1000 °C for 6 hours, so that alumina was precipitated on the surface of the element. Thus, a high-temperature heat-resistant metallic porous filter of the self-heating type was obtained.

A particulate collecting device was formed by placing the four treating units (namely, the treating units 53 to 56 shown in Fig. 15), in each of which one piece of this high-temperature heat-resistant metallic porous filter of the self-heating type was provided, in such a way that the treating units were placed in parallel to the exhaust gas flows.

Further, this particulate collecting device was provided midway in the exhaust gas pipe that constitutes the exhaust gas passage of the diesel engine.

The diesel engine was operated at 70 % constant load. The exhaust gas entraining soot particles, whose concentration measured by Bosch-type smoke meter was 8 %, was made to pass through the particulate collecting device.

When the differential pressure between the pressures of the exhaust gas respectively obtained at the exhaust gas inlet and outlet portions of the particulate collecting device reached 200 mmH$_2$O, 1000 W of electric power was supplied to the high-temperature heat-resistant metallic porous filter $\underline{a}$ of the self-heating type of the treating unit 53 by using the energizing device for 2 minutes. After the energization was finished, when the differential pressure between the pressures of the exhaust gas respectively obtained at the exhaust gas inlet and outlet portions of the particulate collecting device reached 200 mmH$_2$O, the energization-regeneration of the next filter $\underline{b}$ were started. Then, the regeneration of this filter was conducted, similarly as in the aforementioned case of the filter $\underline{a}$. This operation was repeatedly performed on all of the filters $\underline{a}$ to $\underline{d}$ in this order.

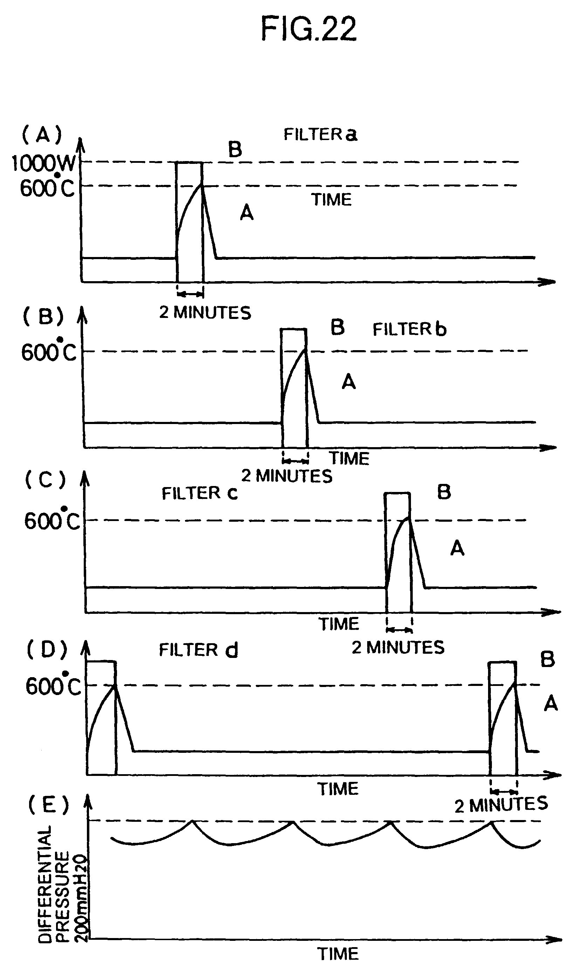

The differential pressure between the pressures of the exhaust gas respectively obtained at the exhaust gas inlet and outlet portions of the particulate collecting device at that time, and the variation of the surface temperature of each of the filters $\underline{a}$ to $\underline{d}$ with time were measured (the treating units 53 to 56 of Fig. 22). The soot concentrations in the exhaust gas inlet and outlet portions of the particulate collecting device were measured. Then, an average soot removal rate was calculated therefrom. As a result, the obtained average soot removal rate was 64 %.

Next, an exhaust gas purifying apparatus according to the ninth aspect of the present invention will be described hereinbelow.

Namely, the exhaust gas purifying apparatus is obtained by providing a plurality of passage portions parallel to one another midway in an exhaust gas passage having an exhaust gas inlet portion and an exhaust gas outlet portion, and by providing particulate collecting devices midway in the plurality of passage portions, respectively. Each of the particulate collecting devices is constituted by parallel treating units each having at least one high-temperature heat-resistant metallic porous filter of the self-heating type, which has resistance heating properties and high-temperature heat-resistance and is provided with electrodes at free ends thereof and adapted to generate heat when being supplied with electricity.

Moreover, this apparatus is constituted by further comprising an energizing device for supplying electricity to the aforesaid filters so as to regenerate the aforesaid filters, energization control means for controlling the aforesaid energizing device so that during the regeneration of the aforesaid filters, the aforesaid filters of each of the aforesaid treating units are sequentially energized, flow control valves which are respectively provided midway in the passage portions, for controlling the flow rates of exhaust gases flowing through the aforesaid passage portions, respectively, and flow rate control means for controlling the aforesaid flow control valves in such a manner as to limit the flow rates when the regeneration of the filters is performed.

When high-temperature heat-resistant metallic porous filters of the self-heating type or high-temperature heat-resistant catalyst supporting metallic porous filters of the self-heating type are provided in the housings of the treating units, one high-temperature heat-resistant metallic porous filter of the self-heating type or one high-temperature heat-resistant catalyst supporting metallic porous filter of the self-heating type may be provided in a housing. Alternatively, a plurality of high-temperature heat-resistant metallic porous filters of the self-heating type or high-temperature heat-resistant catalyst supporting metallic porous filters of the self-heating type may be provided in a housing.

Further, when high-temperature heat-resistant metallic porous filters of the self-heating type or high-temperature heat-resistant catalyst supporting metallic porous filters of the self-heating type are provided in the housings of the treating units, there is no limit to the shapes of these filters.

The exhaust gas purifying apparatus according to this aspect of the present invention consists of the particulate collecting device constituted by the aforementioned treating units, the energizing device, various kinds of sensors serving as diverse kinds of detecting means, flow control valves, energization control means and flow rate control means.

In the case that particulates contained in exhaust gas of a diesel engine are treated by using this exhaust gas purifying apparatus of such a constitution according to the ninth aspect of the present invention, the particulates are captured by the high-temperature heat-resistant metallic porous filter of the self-heating type or the high-temperature heat-resistant catalyst supporting metallic porous filter of the self-heating type when a fixed time has elapsed. Further, the differential pressure produced across the apparatus increases. At that time, ,the particulates collected by supplying electricity to the filter itself directly from the electrode, which is mounted at one of the free ends of the high-temperature heat-resistant metallic porous filter of the self-heating type or the high-temperature heat-resistant catalyst supporting metallic porous filter of the self-heating type in one of the plurality of treating units, are burned and eliminated. Then, when a plurality of filters are provided in each of the treating units, two or more of the high-temperature heat-resistant metallic porous filters of the self-heating type or the high-temperature heat-resistant catalyst supporting metallic porous filters of the self-heating type can be simultaneously energized.

Upon completion of the regeneration of the filter in one of the treating units, the filter of another treating unit is energized. This process is performed on the filters provided in the treating units in sequence. Thus, the filters of the plurality of treating units are regenerated.

Further, when the filter of each of the treating units is regenerated, the flow control valve corresponding to the passage portion provided with the treating unit having the filter to be generated is controlled in such a way as to limit the flow rate of exhaust gas.

Consequently, the flow rate of exhaust gas passing through the treating unit, in which the filter to be regenerated is provided, is restricted. Amount of electric power supplied thereto from the energizing device for the regeneration of the filter can be reduced. Further, the plurality of filters provided in each of the treating units are sequentially energized one by one. Consequently, the collected particulates are treated without supplying a large amount of electric power, which would be fed to the entire filter.

Furthermore, because the filter or the catalyst element itself is energized, the filter or the catalyst element is caused to uniformly generate heat. Thus, no cinders from the burning of the particulates are obtained. Moreover, the durability of the filter is enhanced. Furthermore, if the catalyst is supported, the temperature, at which the catalyst is burned and eliminated, can be lowered. Consequently, the amount of electric power supplied to the filter can be reduced still more.

Further, the high-temperature heat-resistant metallic porous filter of the self-heating type can be designed by arbitrarily changing the pore diameter and the porosity thereof so that the clogging of the filter due to ash does not occur.

In the apparatus according to the ninth aspect of the present invention, the energization-regeneration time of the filter is detected, to thereby control the energization of the filter.

In this case, the apparatus is provided with at least one of differential pressure detecting means for detecting a differential pressure between the pressures of the exhaust gas obtained respectively at the aforesaid exhaust gas inlet and outlet portions, temperature detecting means for detecting a surface temperature of the aforesaid filter, collection time measuring means for measuring a time elapsed since collection is started by the aforesaid particulate collecting device, and regeneration time measuring means for measuring a time elapsed since regeneration is started, which serve as means for detecting an energization-regeneration time of the aforesaid filter. The aforesaid energization control means is adapted to control the aforesaid energizing device based on signals output from at least one of the aforesaid differential pressure detecting means, temperature detecting means, collection time measuring means, and regeneration time measuring means, in such a manner that the plurality of filters are sequentially energized when the filters are regenerated.

The energizing device may be a device adapted to supply a fixed amount of electric power. Alternatively, the energizing device may be a device to variably control an amount of electric power to be supplied according to PI or PID control by using the surface temperature of the filter or the temperature of exhaust gas at the exhaust gas inlet or outlet portion.

At that time, the apparatus may adopt a method of setting the maximum amount of electric power to be supplied and limiting electric power to be supplied when the filter is energized.

Incidentally, the concrete constitution for detecting the energization-regeneration time of the aforesaid filter, is as follows.

Namely, the start time of the energization-regeneration of the filter is detected at one of the following moments: a moment at which the aforesaid differential pressure detecting means detects that the differential pressure between the pressures of the exhaust gas respectively obtained at the aforementioned exhaust gas inlet and outlet portions becomes equal to or greater than a predetermined value; a moment at which the aforesaid time measuring means detects that a time elapsed since the start of the collection reaches a predetermined value; and a moment at which the aforementioned differential pressure detecting means detects that the differential pressure between the pressures of the exhaust gas respectively obtained at the aforementioned exhaust gas inlet and outlet portions becomes equal to or greater than a predetermined value or the aforesaid time measuring means detects that a time elapsed since the start of the collection reaches a predetermined value.

Further, the termination time of the energization-regeneration of the filter is detected at one of the following moments: a moment at which the aforesaid temperature detecting means detects that the surface temperature of the filter becomes equal to or greater than a predetermined value; a moment at which the aforesaid regeneration time measuring means detects that a time elapsed since the start of the regeneration reaches a predetermined value; and a moment at which the aforesaid temperature detecting means detects that the surface temperature of the filter becomes equal to or greater than a predetermined value or the aforesaid regeneration time measuring means detects that a time elapsed since the start of the regeneration reaches a predetermined value.

Furthermore, a plurality of pieces, into which the high-temperature heat-resistant metallic porous filter of the self-heating type or the high-temperature heat-resistant catalyst supporting metallic porous filter of the self-heating type is divided, may be sequentially energized since the start of the regeneration. Alternatively, the following step may be repeatedly performed. Namely, upon completion of the regeneration of one of the plurality of the high-temperature heat-resistant metallic porous filters of the self-heating type or the high-temperature heat-resistant catalyst supporting metallic porous filters of the self-heating type is divided, another of the plurality of the high-temperature heat-resistant metallic porous filters or the high-temperature heat-resistant catalyst supporting metallic porous filters may be regenerated at a moment at which it is detected again that the differential pressure produced across the apparatus becomes equal to or greater than a predetermined value or that a predetermined time has been elapsed.

The exhaust gas purifying apparatus according to this aspect of the present invention uses the high-temperature heat-resistant metallic porous filters of the self-heating type or the high-temperature heat-resistant catalyst supporting metallic porous filters of the self-heating type, without utilizing the propagating combustion caused owing to the combustion of particulates. Thus, the particulates are burned and eliminated by heating the filter directly and uniformly. Consequently, the regeneration can be started without being affected by an amount of the collected particulates.

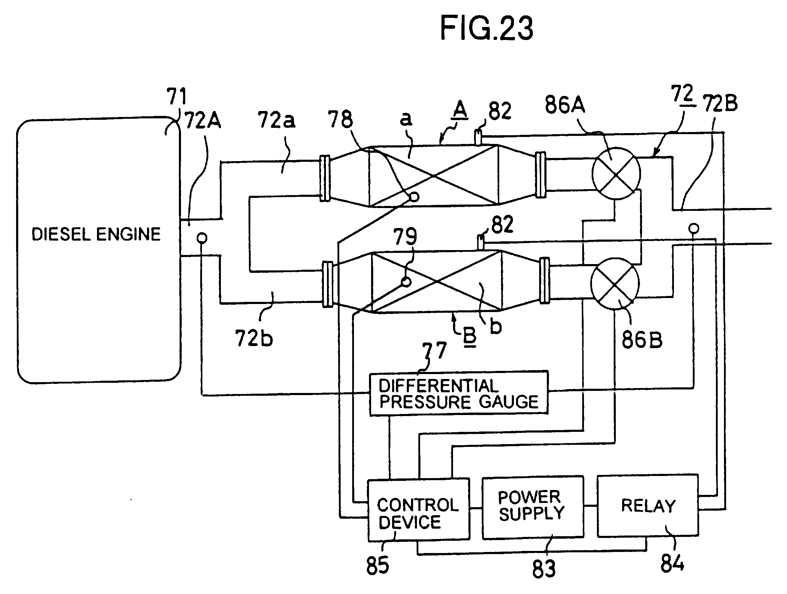

Referring now to Fig. 23, there is shown an embodiment of the exhaust gas purifying apparatus according to this aspect of the present invention. Incidentally, an exhaust gas purifying apparatus according to the present invention is not limited to this embodiment.

In this figure, reference numeral 71 designates a diesel engine; 72 an exhaust gas pipe; 72a and 72b passage portions paralleled to each other; A and B treating units provided midway in the passage portions 72a and 72b in such a manner as to be paralleled to each other; 86A and 86B flow control valves provided at the inlet-side or outlet-side of the treating units A and B midway in the passage portions 72a and 72b, respectively; 77 a differential pressure gauge for detecting a differential pressure between the pressures of the exhaust gas respectively obtained at the exhaust gas inlet portion 72A and the exhaust gas outlet portion 72B of the exhaust gas pipe 72; 78 and 79 temperature sensors for detecting the surface temperatures of filters a and b respectively provided in the treating units A and B; 82 electrodes mounted at free ends of each of the filters a and b; 83 a power supply; 84 a relay provided between the power supply 83 and each of the electrodes 82; and 85 a control device.

Further, the energizing device according to this aspect of the present invention is constituted by the aforementioned power supply 83. The energization control means according to this aspect of the present invention is constituted by the relay 84 and the control device 85. The flow rate control means according to this aspect of the present invention is constituted by the control device 85.

Furthermore, the aforesaid control device 85 has a timer function corresponding to the collection time measuring means and the regeneration time measuring means according to this aspect of the present invention.

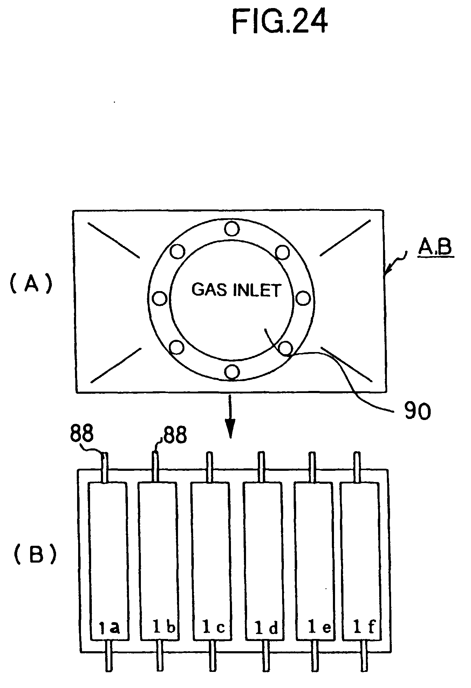

On the other hand, Fig. 24 shows an example of the constitution of the treating units A to B. In this embodiment, a plurality of filters 1a to 1f are provided in parallel to one another in a container 89. Reference numeral 88 denotes electrodes provided at the free ends of the filters 1a to 1f; and 90 an exhaust gas inlet portion.

In the case where the plurality of filters 1a to 1f are provided in the treating units A to B in such a way as to be in parallel with one another, a relay for switching the energization to each of the filters 1a to 1f is provided in each of the treating units A to B, in addition to the relay 84 illustrated in Fig. 23.

Next, practical examples of the constitution of each of the high-temperature heat-resistant metallic porous filter of the self-heating type and the high-temperature heat-resistant catalyst supporting metallic porous filter of the self-heating type will be described below.

Example 1

A high-temperature heat-resistant metallic porous element was manufactured by gathering together high-temperature heat-resistant metallic fibers, each of which was manufactured by the coil cutting method from high-temperature heat-resistant metal consisting of 20.02 % of Cr, 4.9 % of Al, 0.08 % of La and the remainder of Fe and obligatory impurities and had a section area of 50 x10 $\mu$m and was cut to 70 mm, like a filter, so that the porosity thereof was 85 %.

After this high-temperature heat-resistant metallic porous element was formed into a shape, whose width and length were 25 mm and 800 mm, respectively, and was then sintered in an inactive atmosphere at a temperature of 1100 °C for 2 hours, the electrodes made of stainless steel were mounted at both ends of this element. Then, such an element was heat-treated in an air atmosphere at a temperature of 1000 °C for 6 hours, so that alumina was precipitated on the surface of the element. Thus, a high-temperature heat-resistant metallic porous filter of the self-heating type was obtained.

A particulate collecting device was formed by placing the two treating units, in each of which one piece of this high-temperature heat-resistant metallic porous filter of the self-heating type was provided, in such a way that the treating units were placed in parallel to the exhaust gas flows.

Furthermore, each of the treating units composing the particulate collecting device was provided midway in a corresponding one of two parallel exhaust gas pipes formed by branching the exhaust passage of the diesel engine, and exhaust gas flow control valves for controlling the flow rate of exhaust gas flowing through the respective passage portions were disposed at the respective downstream sides the aforesaid treating units.

The diesel engine was operated at 70 % constant load. The exhaust gas entraining soot particles, whose concentration measured by Bosch-type smoke meter was 8 %, was made to pass through the particulate collecting device.

When 110 minutes passed since the collection of particulates was started, the differential pressure between the pressures of the exhaust gas respectively obtained at the exhaust gas inlet and outlet portions reached 1000 $mmH_2O$. Then, the energization of the high-temperature heat-resistant metallic porous filter $\underline{a}$ of the self-heating type provided in the treating unit A was started by using the energizing device while the flow rate of the exhaust gas flowing into the treating unit A was restricted to 1 $Nm^3$/hr by the flow control valve provided at the exhaust-gas-outlet-side portion of the unit A. At that time, the surface temperature of the high-temperature heat-resistant catalyst supporting metallic porous filter $\underline{a}$ of the self-heating type was measured by the temperature sensor 8 acting as the temperature detecting means. The highest temperature and the maximum amount of electric power were set at 610 °C and 1000 W, respectively. Then, the energization was performed by adjusting the amount of electric power by PI control. When the surface temperature of the filter $\underline{a}$ reached 600 °C, the energization of this filter $\underline{a}$ was finished. Then, when the differential pressure between the pressures of the exhaust gas respectively obtained at the exhaust gas inlet and outlet portions reached 1000 $mmH_2O$ again after a lapse of 105 minutes since the start of the energization of the filter $\underline{a}$ the energization of the filter $\underline{b}$ of the other treating unit B was started. Further, the regeneration of this filter was conducted, similarly as in the aforementioned case of the filter $\underline{a}$. This operation was repeatedly performed.

The surface temperature of each of the filters $\underline{a}$ and $\underline{b}$ the amount of electric power supplied to each of these filters at that time, and the variation of the flow rate of exhaust gas flowing through each of the treating units A and B with time were measured. Further, the soot concentrations in the exhaust gas inlet and outlet portions of the particulate collecting device were measured. Then, an average soot removal rate was calculated therefrom. As a result, the obtained average soot removal rate was 75 %.

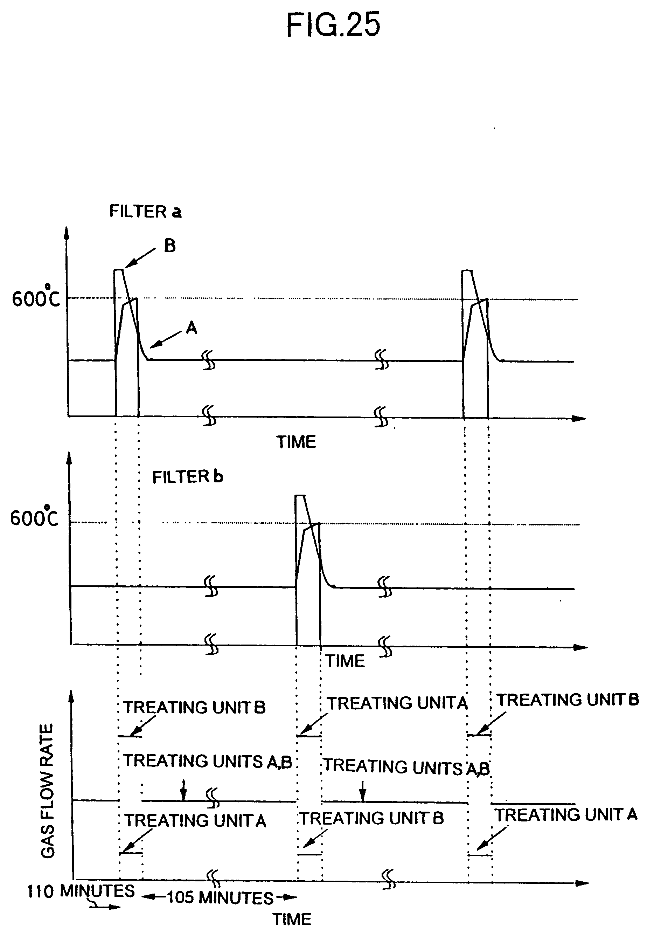

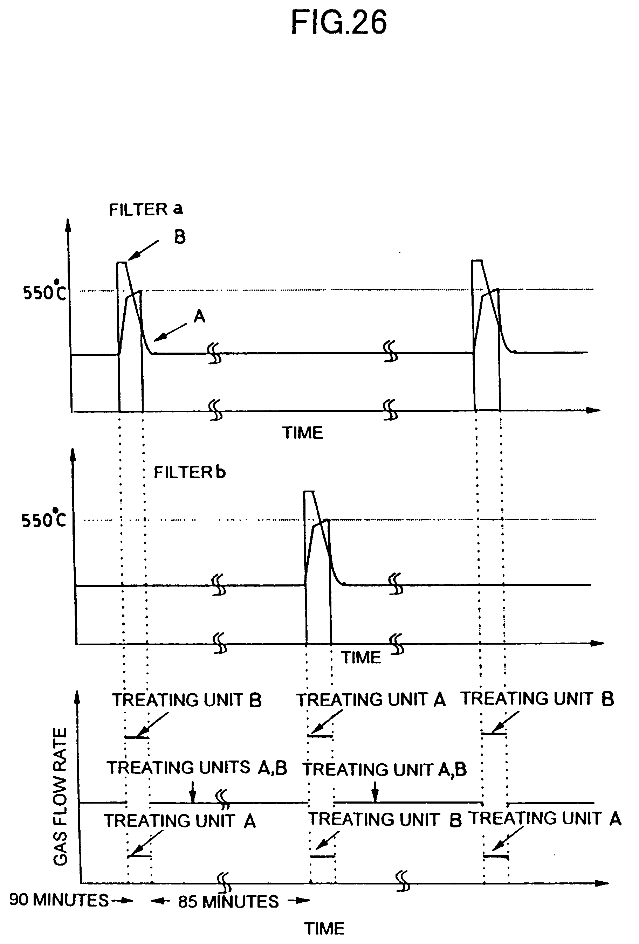

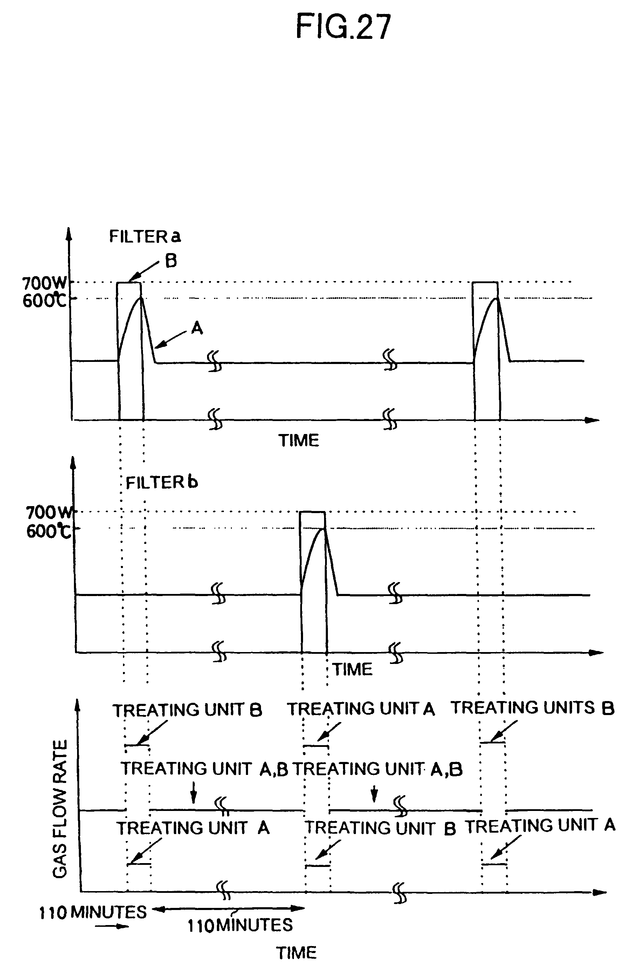

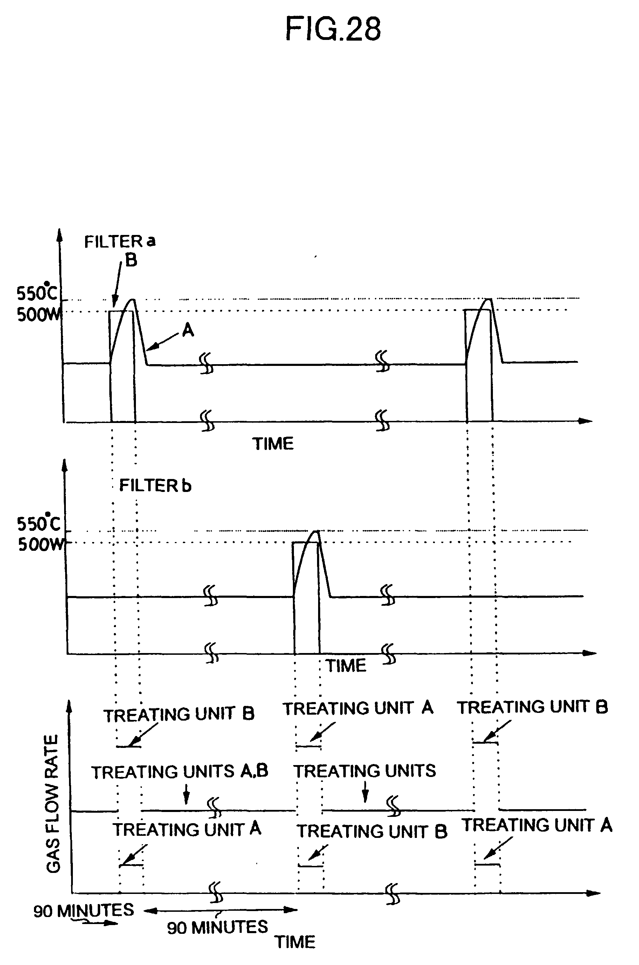

Incidentally, Fig. 25 is a timing chart illustrating experimental data in the case of the aforementioned Example 1, and Figs. 26 to 28 are timing charts respectively illustrating experimental data in the cases of Example 2, Example 3 and Example 4 (to be described later), respectively. In these figures, the diagram (A) shows the surface temperature of the filter, and the diagram (B) shows the amount of electric power supplied to the filter.

Example 2

A high-temperature heat-resistant metallic porous element was manufactured by gathering together high-temperature heat-resistant metallic fibers, each of which was manufactured by the coil cutting method from high-temperature heat-resistant metal consisting of 20.02 % of Cr, 4.9 % of Al, 0.08 % of La and the remainder of Fe and obligatory impurities and had a section area of 50 x10 $\mu$m and was cut to 70 mm, like a filter, so that the porosity thereof was 85 %.

After this high-temperature heat-resistant metallic porous element was formed into a shape, whose width and length were 25 mm and 800 mm, respectively, and was then sintered in an inactive atmosphere at a temperature of 1100 °C for 2 hours, the electrodes made of stainless steel were mounted at both ends of this element. Then, such an element was heat-treated in an air atmosphere at a temperature of 1000 °C for 6 hours, so that alumina was precipitated on the surface of the element. Thus, a high-temperature heat-resistant metallic porous filter of the self-heating type was obtained.

Then, 7 g of titania particles were mixed into 200 ml of an aqueous solution prepared from 3.8 g of copper nitrate trihydrate, 2.6 g of potassium nitrate and 1.8 g of ammonium molybdate tetrahydrate. Subsequently, moisture was vaporized by stirring this mixed solution. Catalyst was prepared by drying this mixed solution at a temperature of 130 °C for 1 hour and burning this mixture at a temperature of 500 °C for 2 hours.

Then, 10 g of this catalyst was mixed into 90 ml of an ethanol solution having a purity of 99 %. Then, a catalyst slurry was prepared by grinding and mixing this mixture by the ball mill for 24 hours. This slurry was sprayed to the exhaust gas purifying filter of the self-heating type from a place positioned at a distance of 15 cm away from the filter by using a spray nozzle of the two fluid nozzle hole type, which had a nozzle hole of 0.4 mm in diameter, at an air pressure of 3 $kg/cm^2$. Subsequently, this filter was dried at a temperature of 130 °C for 1 hour. Thereafter, the dried filter was burned at a temperature of 500 °C for 2 hours. Thus, a high-temperature heat-resistant catalyst supporting metallic porous filter of the self-heating type was obtained.

A particulate collecting device was formed by disposing the two treating units, in each of which one piece of this high-temperature heat-resistant catalyst supporting metallic porous filter of the self-heating type was provided, in such a way that the treating units were placed in parallel to the exhaust gas flows.

Furthermore, each of the treating units composing the particulate collecting device was provided midway in a corresponding one of two parallel exhaust gas pipes formed by branching the exhaust passage of the diesel engine, and exhaust gas flow control valves for controlling the flow rate of exhaust gas flowing through the respective passage portions were disposed at the respective downstream sides of the aforesaid treating units.

The diesel engine was operated at 70 % constant load. The exhaust gas entraining soot particles, whose concentration measured by Bosch-type smoke meter was 8 %, was made to pass through the particulate collecting device.

When 90 minutes passed since the collection of particulates was started, the differential pressure between the pressures of the exhaust gas respectively obtained at the exhaust gas inlet and outlet portions reached 1000 mmH$_2$O. Then, the energization of the high-temperature heat-resistant catalyst supporting metallic porous filter $a$ of the self-heating type provided in the treating unit A was started by using the energizing device while the flow rate of the exhaust gas flowing into the treating unit A was restricted to 1 Nm$^3$/hr by the flow control valve provided at the exhaust-gas-outlet-side portion of the unit A. At that time, the surface temperature of the high-temperature heat-resistant catalyst supporting metallic porous filter $a$ of the self-heating type was measured by the temperature sensor 8 acting as the temperature detecting means. The highest temperature and the maximum amount of electric power were set at 560 °C and 750 W, respectively. Then, the energization was performed by adjusting the amount of electric power by PI control. When the surface temperature of the filter $a$ reached 550 °C, the energization of this filter $a$ was finished. Then, when the differential pressure between the pressures of the exhaust gas respectively obtained at the exhaust gas inlet and outlet portions reached 1000 mmH$_2$O again after a lapse of 85 minutes since the start of the energization of the filter $a$, the energization of the filter $b$ of the other treating unit B was started. Further, the regeneration of this filter was conducted, similarly as in the aforementioned case of the filter $a$. This operation was repeatedly performed.

The surface temperature of each of the filters $a$ and $b$, the amount of electric power supplied to each of these filters at that time, and the variation of the flow rate of exhaust gas flowing through each of the treating units A and B with time were measured. Further, the soot concentrations in the exhaust gas inlet and outlet portions of the particulate collecting device were measured. Then, an average soot removal rate was calculated therefrom. As a result, the obtained average soot removal rate was 82 %.

Example 3

A high-temperature heat-resistant metallic porous element was manufactured by gathering together high-temperature heat-resistant metallic fibers, each of which was manufactured by the coil cutting method from high-temperature heat-resistant metal consisting of 20.02 % of Cr, 4.9 % of Al, 0.08 % of La and the remainder of Fe and obligatory impurities and had a section area of 50 x10 μm and was cut to 70 mm, like a filter, so that the porosity thereof was 85 %.

After this high-temperature heat-resistant metallic porous element was formed into a shape, whose width and length were 25 mm and 800 mm, respectively, and was then sintered in an inactive atmosphere at a temperature of 1100 °C for 2 hours, the electrodes made of stainless steel were mounted at both ends of this element. Then, such an element was heat-treated in an air atmosphere at a temperature of 1000 °C for 6 hours, so that alumina was precipitated on the surface of the element. Thus, a high-temperature heat-resistant metallic porous filter of the self-heating type was obtained.

A particulate collecting device was formed by placing the two treating units, in each of which one piece of this high-temperature heat-resistant metallic porous filter of the self-heating type was provided, in such a way that the treating units were placed in parallel to the exhaust gas flows.

Furthermore, each of the treating units composing the particulate collecting device was provided midway in a corresponding one of two parallel exhaust gas pipes formed by branching the exhaust passage of the diesel engine, and exhaust gas flow control valves for controlling the flow rate of exhaust gas flowing through the respective passage portions were disposed at the respective downstream sides of the aforesaid treating units.

The diesel engine was operated at 70 % constant load. The exhaust gas entraining soot particles, whose concentration measured by Bosch-type smoke meter was 8 %, was made to pass through the particulate collecting device.

When 110 minutes passed since the collection of particulates was started, 700 W of electric power was supplied to the high-temperature heat-resistant metallic porous filter a of the self-heating type by using the energizing device while restricting the flow rate of the exhaust gas flowing into the treating unit A, to 1 Nm$^3$/hr by means of the flow control valve provided at the exhaust-as-outlet-side portion of the unit A. At that time, the surface temperature of the high-temperature heat-resistant metallic porous filter $a$ of the self-heating type was measured by the temperature sensor 8 acting as the temperature detecting means. When the surface temperature of the filter $a$ reached 600 °C, the energization of this filter $a$ was finished. Then, after a lapse of 110 minutes since the start of the energization of the filter $a$,

the energization of the filter b of the other treating unit B was started. Further, the regeneration of this filter was conducted, similarly as in the aforementioned case of the filter a. Thereafter, this operation was repeatedly performed.

The surface temperature of each of the filters a and b, the amount of electric power supplied to each of these filters at that time, and the variation of the flow rate of exhaust gas flowing through each of the treating units A and B with time were measured. Further, the soot concentrations in the exhaust gas inlet and outlet portions of the particulate collecting device were measured. Then, an average soot removal rate was calculated therefrom. As a result, the obtained average soot removal rate was 70 %.

Example 4

A high-temperature heat-resistant metallic porous element was manufactured by gathering together high-temperature heat-resistant metallic fibers, each of which was manufactured by the coil cutting method from high-temperature heat-resistant metal consisting of 20.02 % of Cr, 4.9 % of Al, 0.08 % of La and the remainder of Fe and obligatory impurities and had a section area of 50 x10 $\mu$m and was cut to 70 mm, like a filter, so that the porosity thereof was 85 %.

After this high-temperature heat-resistant metallic porous element was formed into a shape, whose width and length were 25 mm and 800 mm, respectively, and was then sintered in an inactive atmosphere at a temperature of 1100 °C for 2 hours, the electrodes made of stainless steel were mounted at both ends of this element. Then, such an element was heat-treated in an air atmosphere at a temperature of 1000 °C for 6 hours, so that alumina was precipitated on the surface of the element. Thus, a high-temperature heat-resistant metallic porous filter of the self-eating type was obtained.

Then, 7 g of titania particles were mixed into 200 ml of an aqueous solution prepared from 3.8 g of copper nitrate trihydrate, 2.6 g of potassium nitrate and 1.8 g of ammonium molybdate tetrahydrate. Subsequently, moisture was vaporized by stirring this mixed solution. Catalyst was prepared by drying this mixed solution at a temperature of 130 °C for 1 hour, and burning this mixture at a temperature of 500 °C for 2 hours. Then, 10 g of this catalyst was mixed into 90 ml of an ethanol solution having a purity of 99 %. Then, a catalyst slurry was prepared by grinding and mixing this mixture by the ball mill for 24 hours. This slurry was sprayed to the exhaust gas purifying filter of the self-heating type from a place positioned at a distance of 15 cm away from the filter by using a spray nozzle of the two fluid nozzle hole type, which had a nozzle hole of 0.4 mm in diameter, at an air pressure of 3 kg/cm$^2$. Thereafter, this filter was dried at a temperature of 130 °C for 1 hour. Subsequently, the dried filter was burned at a temperature of 500 °C for 2 hours. Thus, a high-temperature heat-resistant catalyst supporting metallic porous filter of the self-heating type was obtained.

A particulate collecting device was formed by disposing the two treating units, in each of which one piece of this high-temperature heat-resistant catalyst supporting metallic porous filter of the self-heating type was provided, in such a way that the treating units were placed in parallel to the exhaust gas flows.

Furthermore, each of the treating units composing the particulate collecting device was provided midway in a corresponding one of two parallel exhaust gas pipes formed by branching the exhaust passage of the diesel engine, and exhaust gas flow control valves for controlling the flow rate of exhaust gas flowing through the respective passage portions were disposed at the respective downstream sides of the aforesaid treating units.

The diesel engine was operated at 70 % constant load. The exhaust gas entraining soot particles, whose concentration measured by Bosch-type smoke meter was 8 %, was made to pass through the particulate collecting device. When 90 minutes passed since the collection of particulates was started, 500 W of electric power was supplied to the high-temperature heat-resistant catalyst supporting metallic porous filter a of the self-heating type by using the energizing device while restricting the flow rate of the exhaust gas flowing into the treating unit A, to 1 Nm$^3$/hr by means of the flow control valve provided at the exhaust gas outlet side portion of the unit A. At that time, the surface temperature of the high-temperature heat-resistant catalyst supporting metallic porous filter a of the self-heating type was measured by the temperature sensor 8 acting as the temperature detecting means. When the surface temperature of the filter a reached 550 °C, the energization of this filter a was finished. Then, after a lapse of 90 minutes since the start of the energization of the filter a, the energization of the filter b of the other treating unit B was started. Further, the regeneration of this filter was conducted, similarly as in the aforementioned case of the filter a. This operation was repeatedly performed.

The surface temperature of each of the filters a and b, the amount of electric power supplied to each of these filters at that time, and the variation of the flow rate of exhaust gas flowing through each of the treating units A and B with time were measured. Further, the soot concentrations in the exhaust gas inlet and outlet portions of the particulate collecting device were measured. Then, an average soot removal rate was calculated therefrom. As a result, the obtained average soot removal rate was 81 %.

Next, the exhaust gas purifying apparatus according to the tenth aspect of the present invention will be described hereunder.

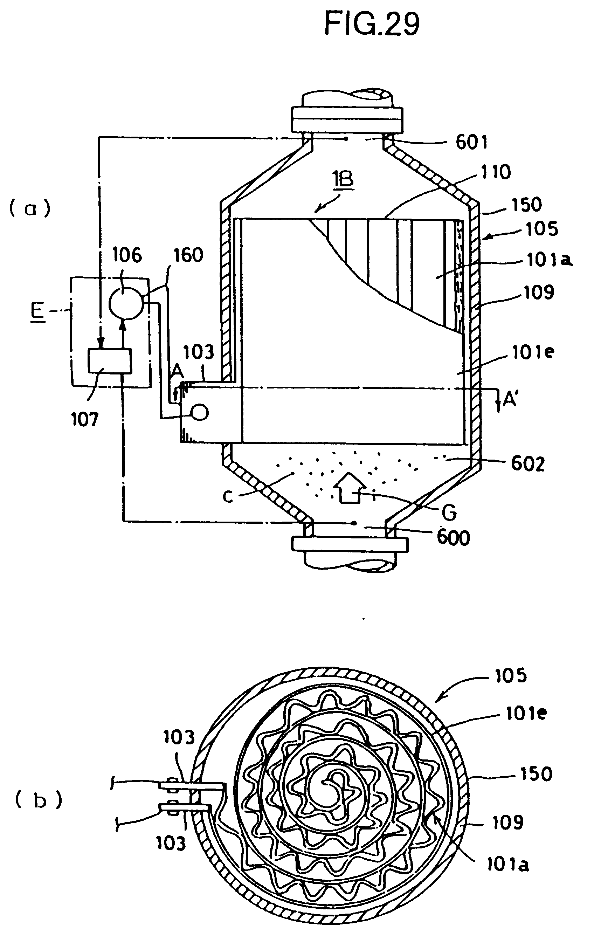

As shown in Fig. 29, an envelope (or case) 150 is formed nearly like a hollow cylinder, and has both end portions that are respectively tapered toward both ends in such a manner as to have conical side surfaces. At one of the ends (namely, the bottom end as viewed in this figure) thereof, a gas inlet port 600 is formed, and the inner space thereof communicates with the outside thereof. At the other end (namely, the top end as viewed in this figure) thereof, a gas outlet port 601 communicating with the outside thereof is formed. Thus, the envelope has a gastight structure except both ports.

The envelope 150 is made of a heat-resistant material such as stainless steel, and is constructed in such a manner as to be able to be divided into two parts, namely, upper and lower parts. A lining 109 having an electric insulating property and a heat insulating property is applied to the inner surface of the envelope. Filter elements 101B are accommodated and fixed in an exhaust gas passage 602 between the gas inlet port 600 and the gas outlet port 601 in such a way as to cover nearly the entire section of this passage.

High-temperature heat-resistant porous metallic materials having resistance heating properties are used as the materials of the filter element 101B. Moreover, it is intended that the filter materials are sufficiently densely distributed and arranged in the filter element.

Namely, in the embodiment illustrated in this figure, high-temperature heat-resistant metallic fiber filter materials 102 having resistance heating properties, each of which gathers together high-temperature heat-resistant metallic fibers manufactured by machining high-temperature heat-resistant metal and has an insulating layer formed on a surface thereof, are used as the materials of the filter element 101B.

Materials suitable for these high-temperature heat-resistant metallic fiber filter materials are proposed in, for example, the aforementioned prior art document (Japanese Patent Application No. 7-270483). The composition, properties and manufacturing method of such materials are disclosed detailedly in the specification thereof.

Namely, the aforementioned prior art document (Japanese Patent Application No. 7-270483) discloses the techniques of making a coil material by winding a thin plate made of high-temperature heat-resistant stainless steel (a material adapted to perform resistance heat-generating when energized (a suitable example thereof is Fe-Cr-Al-REM-based stainless steel)) having resistance heating properties, and then forming a web by gathering together fibers, which are obtained by cutting an end face of the coil material, and subsequently forming an alumina coating on the surfaces of the fibers by sintering and heat-treating the web, thereby obtaining a sintered body of the high-temperature heat-resistant stainless steel fibers.

The aforementioned alumina coating may be used as an insulating material, and is utilized when a catalyst is supported. Further, the prior art document describes in detail that the high-temperature heat-resistant metallic fiber filter materials exhibit good self-heating properties when such materials are energized. Thus, such materials are suited for the use of the present invention.

As shown in Fig. 34(a), the filter materials obtained according to such disclosed prior art have high-temperature heat-resistant stainless steel fibers randomly arranged therein and also have porous structure in which contact portions are fused. As is apparent from Fig. 34(b), each of the high-temperature heat-resistant stainless steel fibers 120 which were sintered has a nearly square section in a direction perpendicular to an axial direction thereof. A thin alumina coating 121 having uniform thickness is precipitated on the surface of each of the high-temperature heat-resistant stainless steel fibers.

As illustrated in Fig. 34(b), this alumina coating 121 is formed in such a way as to surround the crossed contact part 300 between the high-temperature heat-resistant stainless steel fibers 120. The crossed contact part 300 has a metallic touch. Thus, owing to the metallic touch of the crossed contact part, the sintered body of this high-temperature heat-resistant stainless steel fibers (filter materials) is formed in a state of a uniform resistance heat-generating circuit.

Preferably, a catalyst layer is provided on the surface of the aforesaid alumina coating 121.

This catalyst layer is composed of a catalyst carrier and an active metal. For the material of the catalyst carrier, at least one of alumina, silica-alumina, zirconia-alumina, titania, mordenite. and zeolites such as ZSM-5 is used. The particle diameter of a catalyst carrier is preferably 0.5 μm to 20 μm, and more preferably, 1 μm to 10 μm.

Although arbitrary catalytic active metallic components supported on a catalyst carrier may be employed, at least one kind of metal selected from the group consisting of Group 1, Group 2, Group 4b, Group 5b, Group 6b, Group 7b and Group 8b of the periodic table is preferably used. For example, Li, Na, K, Rb, Cs, Cu, Mg, Ca, Ba, Zn, La, Ce, Zr, V, Mo or Mn is desirable. As the metal of Group 8, Fe, Co, Ni, Pd or Pt is desirable.

Good results are obtained when the amount of such active metal supported on the catalyst carrier per 1 g of a sintered body of the high-temperature heat-resistant stainless steel fibers is preferably 0.1 to 15 mg, and more preferably, 1 to 10 mg.

Needless to say, the materials of the filter element are not limited to those described above. A metallic porous element of the heat-generating type, which is different from the aforementioned materials in the composition and manufacturing method thereof, may be employed as the filter element. For instance, in the case that an appropriate porous metallic material is selected and a filter is formed from fine particle materials by a casting method into a predetermined shape, an integral filter may be obtained by casting a preliminarily shaped insulating material. In brief, any heat-resistant metallic porous material providing a desired specific resistivity value may be employed as the material of the filter element of the present invention. An exhaust gas purifying apparatus of the self-heating type of the present invention can be constructed by using such a material.

According to the present invention, a filter element is constructed, especially, by employing the aforementioned metallic materials as the material thereof and adopting a suitable high-density structure. Further, the size of the apparatus is reduced by increasing the surface area per unit volume of the filter in comparison with such surface areas of porous filter portions of ordinary shapes and by enhancing the heat efficiency and the filtering performance (the capturing and regenerating functions) to thereby increase efficiency of the filter.

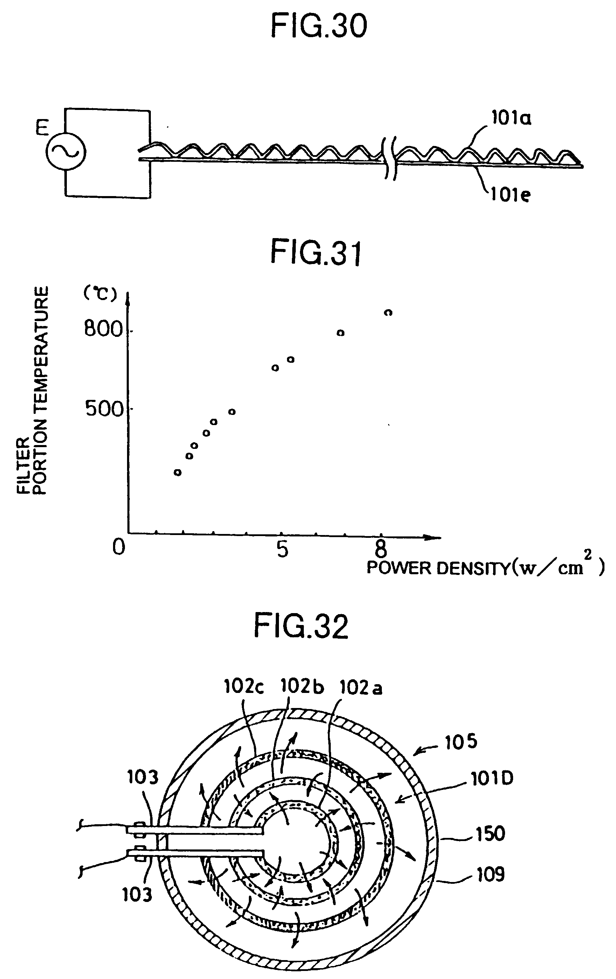

According to this embodiment of the present invention, a flat plate like fiber filter and a corrugated fiber filter are formed and then stacked. Subsequently, these filters are coaxially wound. Namely, the fiber filters are formed so that the filter element has a corrugated winding structure. Thus, the size of the filter element is decreased. Moreover, the filter element is of the self-heating type (thus, an additional heating mechanism is unnecessary). Consequently, the size of the filter element is reduced still more. Incidentally, as the filter element suitable for minimization of size in which a plurality of tubular gas passages are formed by bringing bent wall surfaces extending in a predetermined direction, close to one another and arranging the bent wall surfaces in such a way as to be parallel to one another, a honeycomb structure or a multi-cylinder structure (to be described later (see Figs. 32 and 35)) can be considered.

Next, the structure of a corrugated winding structure filter element 101B of this embodiment illustrated in this figure will be described in detail hereinbelow.

This filter element (101B) is formed by using the plate-like high-temperature heat-resistant metallic fiber filter materials 102 having resistance heating properties, each of which gathers together high-temperature heat-resistant metallic fibers manufactured by machining high-temperature heat-resistant metal.

The filter materials of this porous metallic element may be the same as those disclosed in the aforementioned prior art document.

In this embodiment, first, an elongated flat-plate filter portion 101e and an elongated corrugated-plate-like filter portion 101a are formed from the strip-like high-temperature heat-resistant metallic fiber filter material 102 to be used as the material. The flat-plate filter portion 101e is manufactured by cutting out an elongated plate, which has a predetermined width and a predetermined length, from the flat-strip-like high-temperature heat-resistant metallic fiber filter material 102. The width of the flat-plate filter portion 101e is determined in such a manner as to correspond to the length of the accommodating space of the envelope 150. The length thereof is determined in such a way as to correspond to the diameter of the accommodating space in a state in which the flat-plate filter portion 101e is wound like a whorl after being stacked on the corrugated-plate-like filter portion 101a.

The corrugated-plate-like filter portion 101a, which forms a counterpart to the filter portion 101e, is formed by cutting the flat-strip-like high-temperature heat-resistant metallic fiber filter material 102 to a length so that the finished length of the filter material 102 corrugated at a predetermined pitch and at a predetermined corrugating thickness is nearly equal to the length of the aforesaid flat-plate filter portion 101e, and then corrugating the cut fiber filter material.

Subsequently, the corrugated-plate-like filter portion 101a and the flat-plate filter portion 101e, which are of nearly the same dimensions, are stacked, and one of shorter side portions of one of these filter portions and one of the shorter side portions of the other filter portion are suitably pressed-connected to each other by jig which are used as a connecting side portion 101c. Further, the electrode 103 is press-connected to the other shorter side portion of each of these filter portions. Then, the filter portions are formed in a coaxially multi-winding shape by being wound around the connecting side portions 101c. Subsequently, the conductive connection between the press-connected portions is achieved by heating the filter portions at a high temperature while the shapes of the filter portions are maintained. Moreover, the entire surfaces of the filter portions are coated with alumina layers, thereby forming insulating layers 101d. Thus, the filter element 101B is completed.

In this filter element 101B, the filter portions are extremely densely provided. Thus, the fine particle capturing performance of this filter element is high. Moreover, the distribution density of the quantity of generated heat during the generation of heat is high. Thus, the regenerating performance is high. Furthermore, a long conductive path drawn from one of the electrodes 103 through the connecting side portions 101c to the other electrode 103 is ensured. Notwithstanding the use of relatively low resistance metallic materials, a filter element causing high resistance between the electrodes can be obtained. Thus, this embodiment has an advantage that a simplified drive power supply for generating heat can be used to thereby contribute to the reduced cost of equipment.

Incidentally, an equivalent filter element can be obtained by a process of stacking together an uncut flat-strip-like high-temperature heat-resistant metallic fiber filter material and an uncut filter material obtained by preliminarily forming another flat-strip-like high-temperature heat-resistant metallic fiber filter material into a corrugated plate shape, and then winding and cutting these uncut fiber filter materials at a place where a predetermined diameter of the filter element is obtained. Further, in the case of using materials on which no alumina layers are formed by means of a high temperature heat treatment, the insulation between the surfaces of the corrugated-plate-like filter portion 101a and the flat-plate filter portion 101e, which face with each other and are paralleled to each other, is ensured by making alumina long-fiber cloth intervene therebetween.

Subsequently, the aforementioned filter element 101B is contained in the envelope 150 and is fixed therein by using appropriate means. At that time, the terminal portions of the aforementioned electrodes 103, 103 protrude from the envelope, so that the terminals for energization are ensured. Upon completion of the herein-above-mentioned process, a fine-particle treating apparatus serving as an exhaust gas purifying apparatus is completed.

This fine particle treating apparatus is used by connecting the gas inlet port 600 to an exhaust gas pipe of an external combustion device. Exhaust gas (entraining particles) fed under pressure by operating the combustion device flows into the apparatus through the gas inlet port 600. Then, this exhaust gas passes through the filter element 101B. Finally, this exhaust gas is discharged from the gas outlet port 601 . During this process, carbon-based fine particles contained in the exhaust gas come in contact with or penetrate the filter material 102. Thus, the carbon-based fine particles are securely captured by the surface of the filter material 102. All the filter elements 101B generate heat by supplying electric power from the external drive power supply to both the electrodes 103, 103 at suitable time intervals. Thus, accumulated particles are ignited. Consequently, the particles are securely burned (the regeneration is achieved).

Next, the concrete constitution of the fine particle treating apparatus acting as the exhaust gas purifying apparatus will be described below.

Example

A fine particle treating apparatus having the aforementioned features was actually made. Then, the evaluation thereof was conducted.

First, Al was deposited on a metallic fiber filters manufactured by a coil cutting method. Then, such metallic fiber filters were heat-treated at a temperature of 1000 C for 6 hours. Thus, a heat-resistant metallic fiber filter with whiskers of alumina being generated on the fiber surfaces thereof, was manufactured. The flat plate and the corrugated plate were manufactured by using this heat-resistant metallic fiber filter. Subsequently, a filter having a honeycomb structure was manufactured by combining the flat plate and the corrugated plate.

In the honeycomb structure, a conducting circuit (namely, a heat generating portion) is constructed by the corrugated plate 101a and the flat plate 101e, as illustrated in Fig. 30. This filter has a structure in which an alumina coating layer intervenes between these plates as an insulating device.

The dimensions of the honeycomb structure were as follows. Namely, the diameter thereof was 100mm, and the depth thereof was 2.5 mm. Further, the honeycomb structure has open cells having a size equal to 400 cells/in. Initial value of the electric resistance between the energizing terminals at that time was 0.6 $\Omega$.

Good results as illustrated in Fig. 31 were obtained by energizing this honeycomb structure up to 24 V to thereby cause this structure to generate heat.

This figure is a graph showing an example of change in temperature of the filter portion with the power density of electric power supplied thereto in the manufactured winding structure fine particle treating apparatus. This graph reveals that results of the efficient heating were obtained.

Further, at that time, no short circuit due to dielectric breakdown occurred between the members of the apparatus.

The exhaust gas purifying apparatus according to (the eleventh aspect of) the present invention has other constitutions which are different from those of the aforementioned embodiments.

For example, although the exhaust gas purifying apparatus according to this aspect of the present invention uses high-temperature heat-resistant metallic fiber filter materials, which have resistance heating properties, similarly as the previously described embodiments do, a portion being equivalent to the corrugated-plate-like filter portion subjected to bending process is formed at one end side of an integral single-strip-like material having a predetermined width. Further, a portion being equivalent to the flat-plate filter portion is formed at the other end side of such an integral single-strip-like material. Then, this single-strip-like material is folded at a place in the vicinity of the boundary between the corrugated-plate-like filter portion and the flat-plate filter portion. Consequently, a filter element 101B being equivalent to those of the aforementioned embodiments can be obtained.

Moreover, a filter element having a coaxial winding structure, which is equivalent to the filter elements of the aforementioned embodiments, is obtained by using a combination (not shown) of a filter element 101B, which is equivalent to those of the aforementioned embodiments, and a simple metallic plate (namely, a conductive flat plate 101b), whose width and length are nearly equal to those of the filter element 101B.

Conversely, a filter element having a coaxial winding structure, which is equivalent to the filter elements of the aforementioned embodiments, is obtained by forming a flat-plate-like member by the heat-generating filter material as described above, and using a simple metallic plate as a corrugated-plate-like member, which is a counterpart of the flat-plate-like member.

Next, the exhaust gas purifying apparatus according to the twelfth aspect of the present invention will be described below.

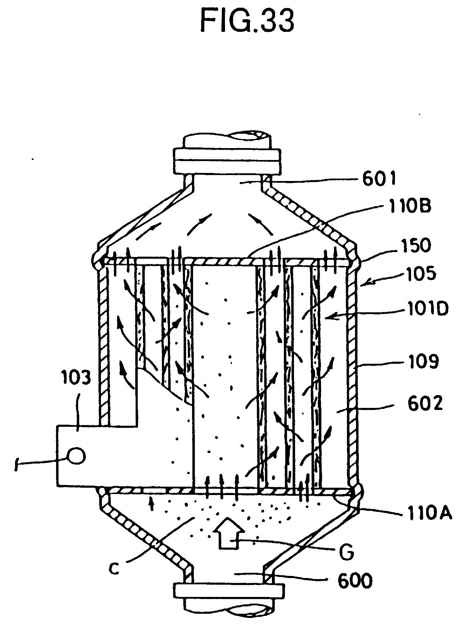

According to this aspect of the present invention, a fine particle treating apparatus is constituted by using a coaxial multi-cylinder as a filter element, as illustrated in Figs. 32 and 33, which show a transverse cross sectional view and a sectional side view of this apparatus, respectively. To obtain this filter element 101D, there are prepared a plurality of cylindrical filter portions (102a, 102b, ...), which have different diameters and are made of the same material as that (the filter material 102) in the case of the aforementioned embodiments and are provided with slits of a constant width formed in an axial direction at a place on a side surface thereof in such a manner as to extend to both ends thereof. Each of the filter portions are coaxially placed and fixed by using jig. Then, the conductive connection between the electrodes 103, 103 and free ends of each of the filter portions is performed by carrying out a heat treatment on the filter portions while maintaining the press contact to the electrodes 103, 103, which adhere closely to the edge portion (namely, the free edge side) of each of the slits over the entire edge portion, at a high temperature, and then alumina coatings are formed on the surfaces of the filter portions.

The filter element 101D obtained in this way is accommodated and fixed in an envelope 150A which is equivalent to that of the aforementioned embodiment. The envelope 150A is almost the same as that used in the aforementioned embodiment, and is formed like a flange by providing step-like portions at both ends of a middle large-diameter portion.

The aforementioned filter element 101D is fixed in such an envelope 150A by sandwiching this filter element between upper and lower pored supporting plates 110B and 110A. The pored supporting plates are formed like a disc and have outer diameters which correspond to those of the aforementioned step-like portions (namely, the flange portion), respectively. The supporting plates have complementary through holes, the positions of which differ between the upper and lower supporting plates, according to the arrangement of the aforementioned cylindrical filter portions 102a, 102b, ... .

Namely, one or more through holes are bored at places, which correspond to the places of the inside of the innermost cylinder, in the lower pored supporting plate 110A, while no holes are bored in a corresponding part of the upper pored supporting plate 110B. Therefore, when all the members are assembled, the central cylindrical space (namely, the inside of the innermost cylinder) opens only in the downward direction and communicates directly with the gas inlet port 600. However, this central cylindrical space does not directly communicate with the gas outlet port 601 placed thereabove. Thus, the gas contained in this cylindrical space can reach the gas outlet port 601 only through extremely fine passages (or pores) contained in the porous material of the wall of the cylinder.

Similarly, opened annular regions each having through holes bored therein correspondingly to the arrangement of multiple cylinders and closed annular regions are placed in a multiple manner in the upper pored supporting plate 110B. In the lower pored supporting plate, opened annular regions and closed annular regions are formed so that the arrangement of the opened annular regions and closed annular regions in this supporting plate is complementary to the arrangement of these regions in the upper pored supporting plate.

Therefore, in the assembled fine particle treating apparatus, tubular passages each communicating directly with the gas inlet port 600 through an opening portion are placed in every other region (namely, a tubular passage having a hole and a tubular passage having no hole are alternately placed) in a radial direction. Conversely, the tubular passages, which do not communicate with the gas inlet port 600, are adapted to communicate with the gas outlet port 601. Namely, the tubular passages are opened alternately at the top end and at the bottom end thereof.

Consequently, exhaust gas is led so that the gas being fed under pressure and flowing from the gas inlet port 600 into the apparatus always passes through the wall surface of the filter portion and then are discharged from the gas outlet port 601. Thus, the filter portion more securely captures fine particles contained in gas passing therethrough.

Incidentally, the remaining portions of the apparatus, such as the electrodes, may be the same as the corresponding portions of the aforementioned embodiment. Thus, the description of such portions is omitted. Further, in these figure, like reference characters designate like parts of the aforementioned embodiments.

In the embodiment according to this aspect of the present invention, there is an advantage that the size of the apparatus is reduced to thereby obtain high performance of treating fine particles, similarly as in the aforementioned embodiment.

Further, the techniques of guiding gas flow in such a manner as to penetrate the side wall of the gas passage by complimentarily sealing the inlet-port-side ends and outlet port side of a plurality of divided passages, which are suitably divided and extend in an axial direction, as described in the foregoing description of this embodiment can be applied to the apparatus having a corrugated winding shape. The rate of gas flow penetrating the side walls of the filter portion is enhanced and the efficiency in capturing fine particles is increased by using plates, on each of which pored regions locally provided with fine through holes are discretely distributed, as pored supporting plates and by complimentarily providing pored regions between the upper and lower pored supporting plates (the pored regions are formed alternately between the top pored supporting plate and the bottom pored supporting plate) to thereby causes the gas flow to obliquely flow in the filter.

Industrial Applicability

As described above, the exhaust gas purifying catalyst element according to the first aspect of the present invention exhibits high performance of purifying exhaust gas discharged from an engine and a combustion device. Especially, the exhaust gas purifying catalyst element according to the first aspect of the present invention overcomes difficulty in reducing carbon-based particles and hydrocarbon gas, which are serious environmental problems, included in exhaust gases of engines, oil utilizing apparatuses and gas utilizing apparatuses.

Further, the exhaust gas purifying filter according to the second aspect of the present invention and the method of manufacturing the exhaust gas purifying filter according to the third aspect of the present invention restrain the pressure loss of the filter and especially, prevent the waste of catalysts. Thus, economical problems in manufacturing the exhaust gas purifying filters are overcome.

Moreover, the method of manufacturing the exhaust gas purifying filter according to the fourth aspect of the present invention and the method of manufacturing the exhaust gas purifying catalyst element according to the fifth aspect of the present invention enhance the mechanical strength of the filter and the catalyst element and prevent an occurrence of cracks due to expansion and contraction caused by a change in temperature. Furthermore, the surface area per unit volume of each of the filter and the catalyst element is increased. Especially, the problems in enhancing the collecting performance and the formability are overcome.

Further, the method of manufacturing the exhaust gas purifying filter according to the sixth aspect of the present invention and the method of manufacturing the exhaust gas purifying catalyst element according to the seventh aspect of the present invention prevent the erosion and disconnection of the filters. Moreover, the catalyst is prevented from getting into between the metallic porous element and each of the electrodes. Therefore, no resistance is caused therebetween when the filter or the catalyst element is energized. Consequently, the filter or the catalyst element does not generate heat. The erosion or disconnection of the metallic porous element is prevented. Furthermore, the degradation of the catalyst due to heat does not occur. The problems in enhancing the durability of the filter and the catalyst element are overcome.

Moreover, the exhaust gas purifying apparatuses according to the eighth and ninth aspects of the present invention enhance the performance of purifying exhaust gas discharged from a diesel engine or the like and also improves the durability. Furthermore, the economy and maintainability are enhanced. Especially, when the filters are regenerated, the apparatuses are controlled so that the filters are sequentially energized. Thus, when the filters are regenerated, high power is unnecessary. Consequently, the economical problems in constructing the exhaust gas purifying apparatuses are overcome.

Additionally, the exhaust gas purifying apparatuses according to the tenth and eleventh aspects of the present invention enhance the performance of purifying exhaust gas discharged from a diesel engine or the like. Especially, these exhaust gas purifying apparatuses have high processing performance. The problems in reducing the sizes of the apparatuses are overcome.

**Claims**

1. An exhaust gas purifying catalyst element provided in an exhaust gas passage in such a way as to shut off said passage and adapted so that exhaust gas flows on all surfaces thereof, said catalyst element comprising:

   a catalyst supporting metallic porous element in which a catalyst is supported by a metallic porous element that has resistance heating properties and an average pore diameter of 10 to 100 μm;
   wherein electrodes are mounted at free ends of said metallic porous element, and said metallic porous element generates heat by being supplied with electricity though said electrodes.

2. An exhaust gas purifying catalyst element according to claim 1, wherein said metallic porous element is constituted by a metallic fiber filter obtained by forming metallic fibers, an average diameter of which is 5 to 500 μm, at a porosity of 30 to 95 %.

3. An exhaust gas purifying catalyst element according to claim 1, wherein catalytic active metallic components of said catalyst are a combination of metallic elements of the following groups:

   (A) Cu;
   (B) K; and
   (C) Mo and/or V.

4. An exhaust gas purifying filter comprising a catalyst supported on a metallic fiber filter, wherein said catalyst is supported only on a surface of said metallic fiber filter by spraying a slurry containing said catalyst to said metallic fiber filter.

5.  A method of manufacturing an exhaust gas purifying filter adapted to support a catalyst on a surface of a metallic fiber filter, said method comprising the steps of:

> spraying a slurry containing said catalyst to said metallic fiber filter; and
> drying and burning said metallic fiber filter after said slurry is sprayed,
> wherein said catalyst is supported only on said metallic fiber filter.

6.  A method of manufacturing an exhaust gas purifying filter which is constituted by a metallic porous element having resistance heating properties and is adapted to generate heat by supplying electricity to said metallic porous element, said method comprising the steps of:

> attaching electrodes at free ends of said metallic porous element;
> then coating a surface of said metallic porous element, at which said electrodes are mounted, with one or more kinds of oxides selected from the group consisting of Cr oxide, Al oxide, Si oxide and Ti oxide.

7.  A method of manufacturing an exhaust gas purifying catalyst element that is constituted by a catalyst supporting metallic porous element, which is obtained by supporting a catalyst on a metallic porous element having resistance heating properties, and that is adapted to generate heat by supplying electricity to said catalyst supporting metallic porous element, said method comprising the steps of:

> attaching electrodes at free ends of said metallic porous element;
> then coating a surface of said metallic porous element, at which said electrodes are mounted, with one or more kinds of oxides selected from the group consisting of Cr oxide, Al oxide, Si oxide and Ti oxide; and
> thereafter, causing said coated metallic porous element to support said catalyst.

8.  A method of manufacturing an exhaust gas purifying filter, which is constituted by a metallic porous element having resistance heating properties and is adapted to generate heat by supplying electricity to said metallic porous element, said method comprising the steps of:

> corrugating a surface of said metallic porous element like a series of waves propagating in a predetermined direction;
> subsequently attaching electrodes at free ends of said metallic porous element; and
> then coating the surface of said metallic porous element, to which said electrodes are attached, with one or more kinds of oxides selected from the group consisting of Cr oxide, Al oxide, Si oxide and Ti oxide.

9.  A method of manufacturing an exhaust gas purifying catalyst element that is constituted by a catalyst supporting metallic porous element, which is obtained by supporting a catalyst on a metallic porous element having resistance heating properties, and that is adapted to generate heat by supplying electricity to said catalyst supporting metallic porous element, said method comprising the steps of:

> corrugating a surface of said metallic porous element like a series of waves propagating in a predetermined direction;
> subsequently attaching electrodes at free ends of said metallic porous element;
> then coating the surface of said metallic porous element, at which said electrodes are mounted, with one or more kinds of oxides selected from the group consisting of Cr oxide, Al oxide, Si oxide and Ti oxide; and
> thereafter, causing said coated metallic porous element to support said catalyst.

10. An exhaust gas purifying apparatus comprising:

> a particulate collecting device, which is constituted by one or more parallel treating units each having at least one high-temperature heat-resistant metallic porous filter of a self-heating type provided with electrodes at free ends thereof and adapted to generate heat when being supplied with electricity, provided midway in an exhaust gas passage having an exhaust gas inlet portion and an exhaust gas outlet portion;
> an energizing device for supplying electricity to said filters so as to regenerate said filters;
> at least one of differential pressure detecting means for detecting a differential pressure between pressures of exhaust gas respectively obtained at said exhaust gas inlet and outlet portions, temperature detecting means for detecting a surface temperature of said filter, collection time measuring means for measuring a time elapsed since collection is started by said collecting device, and regeneration time measuring means for measuring a time elapsed since regeneration is started, which serve as means for detecting a time of energization-regeneration of said filter; and

energization control means for controlling said energizing device based on signals output from at least one of said differential pressure detecting means, temperature detecting means, collection time measuring means, and regeneration time measuring means, and for controlling said energizing device so that said filters are sequentially energized during the regeneration of the filters.

11. An exhaust gas purifying apparatus according to claim 10, wherein a start time of an energization-regeneration of said filter is detected at one of a moment at which said differential pressure detecting means detects that the differential pressure between the pressures of the exhaust gas respectively obtained at said exhaust gas inlet and outlet portions becomes equal to or greater than a predetermined value, a moment at which said time measuring means detects that a time elapsed since the start of the collection reaches a predetermined value, and a moment at which said differential pressure detecting means detects that the differential pressure between the pressures of the exhaust gas respectively obtained at said exhaust gas inlet and outlet portions becomes equal to or greater than a predetermined value or said time measuring means detects that a time elapsed since the start of the collection reaches a predetermined value.

12. An exhaust gas purifying apparatus according to claim 10, wherein a termination time of an energization -regeneration of said filter is detected as one of a moment at which said temperature detecting means detects that a surface temperature of said filter becomes equal to or greater than a predetermined value, a moment at which said regeneration time measuring means detects that a time elapsed since a start of regeneration reaches a predetermined value; and a moment at which said temperature detecting means detects that a surface temperature of said filter becomes equal to or greater than a predetermined value or said regeneration time measuring means detects that a time elapsed since the start of the regeneration reaches a predetermined value.

13. An exhaust gas purifying apparatus according to claim 10, wherein said energization control means has a function of controlling an amount of electric power to be supplied to said filter, in such a manner as to be constant and a function of variably controlling the amount of electric power based on a surface temperature of said filter or a temperature of exhaust gas at said exhaust gas inlet or outlet portion.

14. An exhaust gas purifying apparatus according to claim 10, wherein said high-temperature heat-resistant metallic porous filter of the self-heating type is a high-temperature heat-resistant catalyst supporting metallic porous filter of the self-heating type on which a catalyst is supported.

15. An exhaust gas purifying apparatus comprising:

a plurality of parallel passage portions provided midway in an exhaust gas passage having an exhaust gas inlet portion and an exhaust gas outlet portion;
particulate collecting devices respectively provided in the plurality of passage portions, each of said particulate collecting devices being constituted by treating units, each of which has at least one metallic porous filter of a self-heating type that has resistance heating properties and high-temperature heat-resistance and is provided with electrodes at free ends thereof and adapted to generate heat when being supplied with electricity;
an energizing device for supplying electricity to said filters so as to regenerate said filters;
energization control means for controlling said energizing device so that during the regeneration of said filters, said filters of each of said treating units are sequentially energized;
flow control valves, provided in the passage portions, respectively, for controlling the flow rates of exhaust gases flowing through said passage portions, respectively; and
flow rate control means for controlling said flow control valves in such a manner as to limit the flow rates when the regeneration of the filters is performed.

16. An exhaust gas purifying apparatus according to claim 15, which further comprises:

at least one of differential pressure detecting means for detecting a differential pressure between pressures of exhaust gas respectively obtained at said exhaust gas inlet and outlet portions, temperature detecting means for detecting a surface temperature of said filter or a temperature of exhaust gas at said exhaust gas inlet or outlet portion, collection time measuring means for measuring a time elapsed since collection is started by said collecting device, and regeneration time measuring means for measuring a time elapsed since regeneration is started, which serve as means for detecting an energization-regeneration time of said filter, wherein energization control means controls said energizing device based on signals outputted from at least one of said differential pressure detecting means, said temperature detecting means, said collection time measuring means, and said regeneration time measuring means, and controls said energizing device so that said filters are sequentially energized during the regeneration of the filters while controlling the flow rates of exhaust gases flowing through said respective treating units by means of said flow control valves.

17. An exhaust gas purifying apparatus according to claim 16, wherein a start time of an energization-regeneration of said filter is detected at one of a moment at which said differential pressure detecting means detects that the differential pressure between the pressures of the exhaust gas respectively obtained at said exhaust gas inlet and outlet portions becomes equal to or greater than a predetermined value, a moment at which said collection time measuring means detects that a time elapsed since the start of the collection reaches a predetermined value, and a moment at which said differential pressure detecting means detects that the differential pressure between the pressures of the exhaust gas respectively obtained at said exhaust gas inlet and outlet portions becomes equal to or greater than a predetermined value or said collection time measuring means detects that a time elapsed since the start of the collection reaches a predetermined value.

18. An exhaust gas purifying apparatus according to claim 16, wherein a termination time of an energization-regeneration operation of said filter is detected as one of a moment at which said temperature detecting means detects that a surface temperature of said filter or a temperature of exhaust gas at said exhuast gas outlet portion becomes equal to or greater than a predetermined value, a moment at which said regeneration time measuring means detects that a time elapsed since a start of the regeneration reaches a predetermined value, and a moment at which said temperature detecting means detects that the surface temperature of said filter becomes equal to or greater than a predetermined value or said regeneration time measuring means detects that a time elapsed since the start of the regeneration reaches a predetermined value.

19. An exhaust gas purifying apparatus according to claim 15, wherein said energization control means has a function of controlling an amount of electric power to be supplied to said filter, in such a manner as to be constant and a function of variably controlling the amount of electric power in such a manner as to be able to change according to a surface temperature of said filter or a temperature of exhaust gas at said exhaust gas inlet or outlet portion.

20. An exhaust gas purifying apparatus according to claim 15, wherein said high-temperature heat-resistant metallic porous filter is a high-temperature heat-resistant catalyst supporting metallic porous filter of the self-heating type, on which the catalyst is supported.

21. An exhaust gas purifying apparatus comprising:

an envelope having a gas inlet port, which communicates with the outside thereof, at one end thereof and having a gas outlet port, which communicates with the outside thereof, at the other end thereof; and a filter element contained and fixed in an inner space of said envelope, wherein said filter element has high-temperature heat-resistant metallic porous materials densely arranged, which have resistance heating properties, and has electrodes provided at two or more appropriate parts, an end portion of each elecrode is drawn out therefrom to the outside of said envelope so as to be used for energization, and gas entraining particles, which has flown into said envelope from said gas inlet port, is discharged from said gas outlet port through said filter element.

22. An exhaust gas purifying apparatus according to claim 21, wherein said filter element is constituted by densely distributing high-temperature heat-resistant metallic fiber filter materials each of which gathers together high-temperature heat-resistant metallic fibers manufactured by machining high-temperature heat-resistant metal and has an insulating layer formed on a surface thereof.

23. An exhaust gas purifying apparatus according to claim 21, wherein said filter element is constituted by a coaxial multi-cylinder.

24. An exhaust gas purifying apparatus according to claim 21, wherein said filter element has a structure in which a plurality of tubular gas passages are formed by bringing bent wall surfaces, which extend in a predetermined direction, close to one another and arranging said bent wall surfaces in such a way as to be parallel to one another.

25. An exhaust gas purifying apparatus comprising:

a hollow cylindrical envelope having a gas inlet port, which communicates with the outside thereof, at one end thereof and having a gas outlet port, which communicates with the outside thereof, at the other end thereof; and
a filter element contained and fixed in an inner space of said envelope,
wherein said filter element is constituted by establishing a conductive connection between an elongated corrugated filter, which has a predetermined width and a predetermined length and is obtained by bending and machining high-temperature heat-resistant plate-like metallic fiber filter materials having resistance heating properties each gathering together high-temperature heat-resistant metallic fibers manufactured by machining high-temperature heat-resistant metal, and a conductive plate material, whose width and length are nearly equal to those of said corrugated plate, at a connecting side portion provided at one end in a longitudinal direction and by providing an electrode at the other end of each of said corrugated filter and said conductive plate, to form said filter element into a coaxial multiple winding around said connecting side portion with an insulating layer formed on a surface thereof, an end portion of said each electrode is drawn out therefrom to the outside of said envelope so as to be used for energization, and gas entraining particles, which has been fed under pressure from the outside and flown into said envelope from the gas inlet port, is discharged from said gas outlet port through said filter element.

26. An exhaust gas purifying apparatus comprising:

a hollow cylindrical envelope having a gas inlet port, which communicates with the outside thereof, at one end thereof and having a gas outlet port, which communicates with the outside thereof, at the other end thereof; and
a filter element contained and fixed in an inner space of said envelope,
wherein said filter element is constituted by establishing a conductive connection between an elongated corrugated filter portion, which has a predetermined width and a predetermined length and is obtained by bending and machining high-temperature heat-resistant plate-like metallic fiber filter materials having resistance heating properties each gathering together high-temperature heat-resistant metallic fibers manufactured by machining high-temperature heat-resistant metal, and a flat-plate filter portion made of the high-temperature heat-resistant metal fiber filter materials same as that of the corrugated filter portion, whose width and length are nearly equal to those of said corrugated plate, at a connecting side portion provided at an end in a longitudinal direction and by providing an insulating layer formed on a surface of the filter element and an electrode at the other end of each of said corrugated filter portion and the flat-plate-like filter portion to form said filter element into a coaxial multiple winding around said connecting side portion, and an end portion of said each electrode is drawn out therefrom to the outside of said envelope so as to be used for energization, and gas entraining particles, which has been fed under pressure from the outside and flown into said envelope from the gas inlet port, is discharged from said gas outlet port through said filter element.

42

# FIG.1

FLOW METER

DIFFERENTIAL
PRESSURE GAUGE

TRANSFORMER

D/E

VOLTAGE
REGULATOR

EP 0 903 476 A1

# FIG.2

1000 w

ELECTRIC POWER

200 mm H2O

DIFFERENTIAL PRESSURE ACROSS HOUSING

INITIAL DIFFERENTIAL PRESSURE

0

TIME

EP 0 903 476 A1

# FIG.3

EP 0 903 476 A1

# FIG.4

# FIG.5

# FIG.6

# FIG.7

# FIG.8

## FIG.9

# FIG.10

# FIG.11

# FIG.12

# FIG.13

EP 0 903 476 A1

# FIG.14

# FIG.15

EP 0 903 476 A1

# FIG.16

(A)

(B)

# FIG.17

# FIG.18

(A) FILTER a

(B) 15 MINUTES FILTER b

(C) 15 MINUTES FILTER c

(D) 15 MINUTES FILTER d

(E)

# FIG.19

(A)

FILTER a

(B)

FILTER b

(C)

FILTER C

(D)

FILTER d

(E)

# FIG.20

(A)  FILTER a

600°C ...... B  A  TIME

(B)  FILTER b

600°C ...... B  A  TIME

(C)  FILTER c

600°C ...... B  A  TIME

(D)  FILTER d

600°C ...... B  A  TIME

(E)

DIFFERENTIAL PRESSURE 200mmH2O  TIME

# FIG.21

# FIG.22

(A)

1000W
600°C
TIME
B
A
FILTER a
2 MINUTES

(B)

600°C
TIME
B
A
FILTER b
2 MINUTES

(C)

600°C
FILTER c
TIME
B
A
2 MINUTES

(D)

600°C
FILTER d
TIME
B
A
2 MINUTES

(E)

DIFFERENTIAL PRESSURE 200mmH2O
TIME

# FIG.23

# FIG.24

(A) GAS INLET — A,B — 90

(B) 88 88 — 1a 1b 1c 1d 1e 1f

# FIG.25

EP 0 903 476 A1

# FIG.26

FILTER a

550°C

B

A

TIME

FILTER b

550°C

TIME

GAS FLOW RATE

TREATING UNIT B    TREATING UNIT A    TREATING UNIT B

TREATING UNITS A,B    TREATING UNIT A,B

TREATING UNIT A    TREATING UNIT B    TREATING UNIT A

90 MINUTES →    ← 85 MINUTES →

TIME

# FIG.27

# FIG.28

FILTER a
B

550°C
500W

A

TIME

FILTER b

550°C
500W

TIME

GAS FLOW RATE

TREATING UNIT B    TREATING UNIT A    TREATING UNIT B

TREATING UNITS A,B    TREATING UNITS

TREATING UNIT A    TREATING UNIT B    TREATING UNIT A

90 MINUTES

90 MINUTES
TIME

# FIG.29

(a)

(b)

# FIG.30

# FIG.31

# FIG.32

# FIG.33

# FIG.34

( a )　　　　　　　　　　( b )

# FIG.35

( a )　　　　　　　　　　( b )

# FIG.36

( a )

601
110
602
150
105
109
101'
103
G
C
600

( b )

109
103
150
101'
f
f
103

## INTERNATIONAL SEARCH REPORT

International application No.

PCT/JP98/01334

**A. CLASSIFICATION OF SUBJECT MATTER**
Int.Cl° F01N3/02, F23G7/06, F23J15/00, B01D39/14, B01D53/94, B01J23/847, B01J23/88, B01J35/02, B01J35/06, B01J37/02

According to International Patent Classification (IPC) or to both national classification and IPC

**B. FIELDS SEARCHED**

Minimum documentation searched (classification system followed by classification symbols)
Int.Cl° F01N3/02, F23G7/06, F23J15/00, B01D39/14, B01D53/94, B01J23/847, B01J23/88, B01J35/02, B01J35/06, B01J37/02

Documentation searched other than minimum documentation to the extent that such documents are included in the fields searched
Jitsuyo Shinan Koho          1926-1996    Jitsuyo Shinan Toroku Koho    1996-1998
Kokai Jitsuyo Shinan Koho   1971-1998    Toroku Jitsuyo Shinan Koho    1994-1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P | JP, 09-085027, A (Applicant), March 31, 1997 (31. 03. 97), Column, lines 31 to 49 (Family: none) | 1-3 |
| P | JP, 09-085028, A (Applicant), March 31, 1997 (31. 03. 97) (Family: none) | 1-5, 10-26 |
| A | JP, 02-102315, A (Sakai Chemical Industry Co., Ltd.), April 13, 1990 (13. 04. 90) & EP, A1, 369163 | 1-3 |
| Y | JP, 07-132234, A (Mazda Motor Corp.), May 23, 1995 (23. 05. 95), Column 2, line 22 to column 4, line 20 (Family: none) | 4, 5 |
| Y | JP, 01-199613, A (Cataler Industrial Co., Ltd.), August 11, 1989 (11. 08. 89), Page 1, lower left column, lines 5 to 10 (Family: none) | 6-9 |

☒ Further documents are listed in the continuation of Box C.   ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| June 23, 1998 (23. 06. 98) | June 30, 1998 (30. 06. 98) |

| Name and mailing address of the ISA/ Japanese Patent Office | Authorized officer |
|---|---|
| Facsimile No. | Telephone No. |

Form PCT/ISA/210 (second sheet) (July 1992)

**INTERNATIONAL SEARCH REPORT**

| International application No. |
| --- |
| PCT/JP98/01334 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y<br>A | JP, 07-332067, A (Toyota Motor Corp.),<br>December 19, 1995 (19. 12. 95),<br>Column 1, lines 2 to 31 (Family: none) | 10-14<br>15-20 |
| Y<br>A | JP, 08-061043, A (Mitsubishi Motors Corp.),<br>March 5, 1996 (05. 03. 96),<br>Column 1, lines 2 to 14 (Family: none) | 10-14<br>15-20 |
| A | JP, 07-119443, A (Nissan Motor Co., Ltd.),<br>May 9, 1995 (09. 05. 95),<br>Column 1, lines 2 to 27 (Family: none) | 10-20 |
| Y | JP, 07-054639, A (Nissan Motor Co., Ltd.),<br>February 28, 1995 (28. 02. 95),<br>Column 1, lines 2 to 20 ; Fig. 2 (Family: none) | 10-20 |
| Y | JP, 05-098937, A (Nissan Motor Co., Ltd.),<br>April 20, 1993 (20. 04. 93),<br>Column 3, line 12 to column 4, line 23 (Family: none) | 15-20 |
| A | JP, 08-189335, A (K.K. Isuzu Seramikkusu<br>Kenkyusho),<br>July 23, 1996 (23. 07. 96),<br>Fig. 2 (Family: none) | 21, 22,<br>24-26 |
| A | JP, 08-093450, A (K.K. Isuzu Seramikkusu<br>Kenkyusyo),<br>April 9, 1996 (09. 04. 96),<br>Fig. 2 (Family: none) | 21-23 |
| A | JP, 08-049522, A (K.K. Isuzu Seramikkusu<br>Kenkyusho),<br>February 20, 1996 (20. 02. 96),<br>Column 1, lines 2 to 25 (Family: none) | 25, 26 |

Form PCT/ISA/210 (continuation of second sheet) (July 1992)